(19) **Europäisches Patentamt**
**European Patent Office**
**Office européen des brevets**

(11) **EP 2 782 952 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **12788201.7**

(22) Anmeldetag: **19.11.2012**

(51) Int Cl.:
*C08G 77/20* (2006.01)   *C08L 83/04* (2006.01)
*C09D 183/04* (2006.01)   *C09J 183/04* (2006.01)

(86) Internationale Anmeldenummer:
**PCT/EP2012/072969**

(87) Internationale Veröffentlichungsnummer:
**WO 2013/076035 (30.05.2013 Gazette 2013/22)**

(54) **BESONDERS VOC-ARME GEMISCHE OLEFINISCH FUNKTIONALISIERTER SILOXANOLIGOMERE BASIEREND AUF ALKOXYSILANEN**

MIXTURES, PARTICULARLY LOW IN VOLATILE ORGANIC COMPOUNDS (VOC), OF OLEFINICALLY FUNTIONALISED SILOXANE OLIGOMERS BASED ON ALKOXY SILANES

MÉLANGES PARTICULIÈREMENT PAUVRES EN COV D'OLIGOMÈRES SILOXANE À FONCTIONNALITÉ OLÉFINIQUE, À BASE D'ALCOXYSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2011 DE 102011086863**

(43) Veröffentlichungstag der Anmeldung:
**01.10.2014 Patentblatt 2014/40**

(73) Patentinhaber: **Evonik Degussa GmbH**
**45128 Essen (DE)**

(72) Erfinder:
• **STANDKE, Burkhard**
**79540 Lörrach (DE)**
• **WEISSENBACH, Kerstin**
**Bridgewater, New Jersey 08807 (US)**
• **MONKIEWICZ, Jaroslaw**
**79618 Rheinfelden (DE)**
• **ROTH, Sven**
**79739 Schwörstadt (DE)**
• **NOWITZKI, Bernd**
**45770 Marl (DE)**
• **FRIEDEL, Manuel**
**8048 Zürich (CH)**

(56) Entgegenhaltungen:
**EP-A1- 0 518 057     EP-A2- 1 331 238**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ausgewählte besonders VOC-arme Zusammensetzungen olefinisch funktionalisierter Siloxanoligomere, die aus olefinisch funktionalisierten Alkoxysilanen abgeleitet sind, die als Gemisch olefinisch funktionalisierter Siloxanoligomere vorliegen können, höchstens einen olefinischen Rest je Silizium-Atom aufweisen sowie Verfahren zu deren Herstellung als auch deren Verwendung.

Es ist lange bekannt, Gemische kettenförmiger und cyclischer Siloxan-Oligomerer bei der Herstellung von Thermoplasten sowie Elastomeren einzusetzen. Zwischenzeitlich ist man jedoch zunehmend bestrebt möglichst VOC-arm zu arbeiten, beispielsweise bei der Vernetzung von Thermoplasten sowie Elastomeren, insbesondere bei der Kabelherstellung (VOC - "Volatile Organic Compounds" bzw. "flüchtige organische Verbindungen").

Es ist bekannt, Vinyltriethoxysilan, gegebenenfalls in Gemischen mit Alkyltriethoxysilanen und/oder Tetraethoxysilan, durch saure HCl katalysierte Hydrolyse und Kondensation in einem Alkohol in Gegenwart einer berechneten Menge Wasser umzusetzen. Anschließend wird der Alkohol abgetrennt.

Die eingesetzte Säure verbleibt im Produkt oder muss im Falle des Hydro- bzw. Hydrogenchlorids (HCl) aufwendig nach der Umsetzung der organofunktionellen Alkoxysilane wieder aus den hergestellten Rohprodukten entfernt werden, um nicht zu einer Korrosion der metallischen Oberflächen der Verarbeitungsmaschinen beizutragen. Dies geschieht durch Destillation der Siloxanrohprodukte.

In der Anwendung, wie bspw. bei der Herstellung von gefüllten Kabelcompounds, kommen die Oligomere regelmäßig zusammen mit Polymeren und funktionellen Füllstoffen in Compoundiermaschinen zum Einsatz. Dies geschieht im Falle von diskontinuierlichen Verfahren in Innenmischern oder auf Misch-Walzen und im Falle von kontinuierlichen Compoundierprozessen in Doppelschneckenextrudern oder Co-Knetern. Die typischen Verabeitungstemperaturen liegen hierbei im Bereich von 130 - 270°C, d.h., dass an den Zugabestellen der Silanverbindung, je nach Verfahren ist das der Einlass der Compoundiermaschine oder die Polymerschmelze, verfahrensbedingt, Temperaturen oberhalb der Siedetemperatur der Monomere Silane und destillierbaren Oligomere herrschen. Die Erfahrung lehrt, dass neben dem unerwünschten Wirkstoffverlust zusätzlich verstärkt Ablagerungen von freien Silanverbindungen an den Gehäuseinnenwänden oder den Entgasungszonen auftreten. Diese basieren auf Abbauprodukte der verdampften Silane oder destillierbarer Oligomere. Es können kritische Situationen durch diese ggf. alkoholhaltigen Dämpfe entstehen, die bei der Rückwärtsentgasung in den Einzugsbereich gelangen können und mit heissen Oberflächen in Kontakt kommen können. Diese Herausforderung gilt auch in teilgefüllten Zonen der Compoundieraggregate oder deren Entgasungzonen. Insgesamt ist aus diesen Gründen ein möglichst hoher Flammpunkt der eingesetzten Verbindungen notwendig. Auch der freiwerdende Hydrolysealkohol, der im Falle von gefüllten Polymercompounds bei der Hydrolysereaktion der Estergruppen der Silizium-funktionellen Gruppe des Silans oder Silan-Oligomers im Compound entsteht, ist zu beachten. Insgesamt ist die Reduktion des VOC (volatile organic compounds) daher ein sehr wichtiges Kriterium bei dieser Technologie.

Wie schon erwähnt, liegen die üblichen Betriebstemperaturen beim Compoundierprozess meist über 101 °C, und häufig erfolgt beispielsweise eine Knetung bei 170 bis 180 °C. Daher besteht weiterhin ein Bedarf an VOC verminderten und korrosionsarmen Oligomeren, die möglichst keine sauren Verbindungen, wie Ameisensäure, HCl oder Cl-haltigen Verbindungen mehr enthalten. Selbst geringste Mengen dieser Verbindungen führen bei den genannten Prozesstemperaturen zur Korrosion und damit zu Verschleiß der Maschinenteile nach kurzen Standzeiten. So wird für nichtrostende Stähle, Nickel basierte Legierungen und Kupferbasis Legierungen angegeben, dass sie aufgrund der auftretenden Korrosion unbeständig gegenüber Ameisensäure oder HCl sind (siehe z.B. Handbuch der Metallbeläge, Fa. Witzemann, Stand Januar 2010, Kapitel 7.2 Korrosionsbeständigkeit, S. 200 - 238). ThyssenKrupp beschreibt in einer Broschüre (Chemische Beständigkeit der Nirosta®-Stähle, ThyssenKrupp Nirosta GmbH, Ausgabe 3, Stand 01/2008) verschiedene Korrosionstypen und nennt typische Auslöser für eine abtragende Flächenkorrosion in Form von Loch-, Spalt- oder Spannungsrisskorrosion, wie die Anwesenheit von Säuren und Chloridionen. Die korrodierende Wirkung von Säuren und Chloridionen steigt mit erhöhter Temperatur deutlich an. An unlegierten Stählen kann die Massenabtragung bei hoher Luftfeuchtigkeit (80 bis 100 % relative Luftfeuchtigkeit) in Gegenwart von Ameisensäure 10 g/m$^2$ und in Gegenwart von Chloriden bis zu 105 g/m$^2$ nach 14 Tagen betragen. Daher soll der Gehalt an Hydrolyse- und Kondensationskatalysatoren in den erfindungsgemäß hergestellten Oligomeren möglichst bis auf einen Gehalt im Gew.-ppm bis Gew.-ppt Bereich oder bis zur Nachweisgrenze vermindert werden.

Neben der Korrosion während der Verarbeitung, spielt aber das Vorhandensein von Chlorid/-ionen oder Säuren in der Endanwendung, z.B. in Kabelisolierungen, eine große Rolle. Neben der möglichen Korrosion am isolierten Stromleiter und der möglichen negativen Beeinflussung der elektrischen Eigenschaften der Kabelisolierung selbst, müssen im Falle von halogenfreien, flammgeschützten Compounds korrosive und halogenhaltige Verbrennungsgase zwingend vermieden werden. Dieser Anspruch gilt natürlich für alle in diesen Compounds eingesetzten Rohstoffe.

Durch die schon angesprochene Vermeidung bzw. Minimierung der Chlorid- und Säure-Anteile in den erfindungsgemäßen Siloxanoligomeren könnte diesen Herausforderungen vollständig begegnet werden.

Zudem finden Silansysteme zunehmendes Interesse, die immer weniger organische Lösungsmittel enthalten und deshalb umweltfreundlicher sind. Aus diesem Grund geht der Trend dahin, vorkondensierte VOC ärmere Silansysteme bereitzustellen, die dann allerdings stabilisiert werden müssen, weil sie noch den Katalysator enthalten oder aus denen der Katalysator aufwendig abgetrennt werden muss.

EP 0 518 057 B1 offenbart ein Verfahren zur Herstellung von Gemischen kettenförmiger und cyclischer Siloxan-Oligomerer. Gemäß den Beispielen 1 und 6 werden die jeweiligen Produktgemische durch Hydrolyse und Kondensation von Vinyltrialkoxysilanen oder einem Gemisch von Vinyl- und Alkyltrialkoxysilanen hergestellt, wobei pro Mol Si des eingesetzten Silans 0,63 Mol Wasser für die Hydrolyse und Kondensation eingesetzt werden. Zudem kann der HCl Katalysator mittels der dort offenbarten Methode nicht vollständig abgetrennt werden und ein korrodierend wirkender Restgehalt von etwa 50 bis etwa 230 ppm HCl verbleibt selbst in Produkten, die gemäß dem offenbarten Verfahren, destilliert werden.

So erhaltene Gemische oligomerer Alkoxysilane enthalten einen hohen Anteil an Alkoxy-Gruppen, da entsprechend der zur Hydrolyse eingesetzten Wassermenge nur ein geringer Anteil an Hydrolysealkohol bei der Umsetzung entsteht und ein noch hoher VOC-Anteil im Oligomerengemisch vorliegt, der bei Applikation des Oligomerengemischs unter Zutritt von Wasser in Form von Alkohol freigesetzt werden kann. Auch kann bei Zutritt von Feuchtigkeit oder durch fortschreitende Kondensation im Oligomerengemisch Alkohol freigesetzt werden. Tritt so eine Freisetzung von Alkohol während der Lagerung des Oligomerengemischs ein, führt dies in der Regel zu einem unerwünschten Absinken des Flammpunkts. Ein Produkt gemäß EP 0 518 057 B1 wird bereits bei der Aufarbeitung in energieintensiver und aufwendiger Weise unter Vakuum reindestilliert. Anwendung finden besagte Oligomerengemische als Vernetzungsmittel für thermoplastische Polyolefine durch Pfropfpolymerisation und hydrolytische Auskondensation.

US 6,395,856 B1 offenbart eine Hydrosilylierung von organofuktionellen Silizium enthaltenden Oligomeren, wie die Hydrosilylierung von Vinylmethoxysiliconaten aus der Umsetzung von Vinyltrimethoxysilan in Gegenwart von Ameisensäure unter Schutzgas ohne Gegenwart eines Verdünnungsmittels.

CN 100343311 C beschreibt durch katalytische Hydrolyse und Kondensation von Vinyltrimethoxysilan gewonnene Silanoligomere. Die Verwendung von Metallsalzkatalysatoren, wie beispielsweise Kupferhydroxid, in Kombination mit Säuren ist zwingend. Die Abtrennung der Katalysatoren ist aufwändig und es ist damit zu rechnen, dass Katalysatorreste bzw. Neutralisationsprodukte im Produkt verbleiben und sich nachteilig in vielen Anwendungen auswirken. So wird hier die Abtrennung der Säure durch eine Neutralisation mittels Calciumcarbonat und Filtration des dabei entstanden Calciumsalzes angestrebt.

Bei einigen Siloxanoligomeren im Stand der Technik sinkt der Flammpunkt innerhalb von wenigen Tagen im Verlauf einer Lagerung auf unter 50 °C, da möglicherweise zu hohe Konzentrationen an Resten der Katalysatoren in der Zusammensetzung verblieben sind. Anderer Zusammensetzungen aus dem Stand der Technik wiederum zeigen zu hohe Masseverluste von bis zu 25 Gew.-% um 150 °C und einen großen Masseverlust von circa 50 bis 90 Gew.-% um 200 °C.

Siloxane mit hohen Molekulargewichten im Bereich 10.000 g/mol werden in JP10-298289 A beschrieben, wobei diese durch Hydrolyse und Vorkondensation bzw. Kondensation eines Vinyl- oder Phenylfunktionellen Alkoxysilans in Gegenwart eines Säurekatalysators hergestellt werden und der Katalysator anschließend mit Hilfe eines wasserfreien, anionischen Ionenaustauschers aus dem Produktgemisch entfernt wird. Derart hochmolekulares Material ist in den meisten Anwendungen aufgrund hoher Viskositäten und zu geringer Reaktivität nicht einsetzbar.

Organosiloxanoligomere mit einer Vielzahl an möglichen Funktionalitäten, einem mittleren Molekulargewicht im Bereich Mn = 350 - 2500 g/mol und einer Polydispersität (D = Mw / Mn) von 1.0 - 1.3 werden in JP 2004-099872 beschrieben. Die Herstellung erfolgt in Gegenwart eines basischen Katalysators aus einer sehr verdünnten wässrigen Lösung mit einer sehr geringen, wirtschaftlich nicht erstrebenswerten Raum-Zeit Ausbeute; so wurden aus 1 l Lösung 1 ml Produkt isoliert. Die Lehre der JP2004-099872A ließ sich nicht wie offenbart nacharbeiten. So konnte das Beispiel 1 mehrfach nicht wie angegeben nachgearbeitet werden.

Der vorliegenden Erfindung lag die Aufgabe zugrunde, weitere, besonders VOC-arme Gemische rein olefinischer Siloxanoligomere, insbesondere basierend auf Alkenylalkoxysilane, bzw. besonders VOC-arme Gemische olefinisch- und alkylfunktionalisierter Siloxanoligomere, insbesondere basierend auf Alkenyl-/Alkyl-Alkoxysilane, sowie ein Verfahren zur Herstellung solcher Gemische bereitzustellen. Ein zusätzliches Anliegen bestand darin, über die erfindungsgemäßen VOC-armen Siloxanoligomere die Verarbeitbarkeit mit Thermoplasten oder Elastomeren zu verbessern als auch die Performance der damit hergestellten Thermoplaste oder Elastomere zu verbessern. Zudem sollten die Siloxanoligomere sehr hohe Flammpunkte aufweisen, auch bei hohen Temperaturen als VOC-arm gelten und ohne weitere Sicherheitsmaßnahmen in der Anwendungstechnik bei erhöhten Temperaturen verwendbar sein. Auch sollen die Siloxanoligomere selbst bei hohen Temperaturen, wie bspw. in Extrudern, nur geringe Masseverluste zeigen. Ein wesentlicher Punkt bei der Verarbeitbarkeit ist auch die schnelle Verteilbarkeit der Siloxanoligomere in den Thermoplasten in Kombination mit möglichst geringen Masseverlusten bei den gegebenen Temperaturen in Extruderanwendungen. Zusätzlich kann dabei von Vorteil sein, wenn der Chlorgehalt, insbesondere der Gesamtchloridgehalt und/oder auch der Gehalt an hydrolysierbarem Chlorid möglichst gering sind. Darüber hinaus sollten die olefinischen Siloxanoligomere eine gute Lagerstabilität auch über längere Lagerzeiträume aufweisen und dabei vorzugsweise auch ein Anstieg der Viskosität, beispielsweise durch Gelbildung oder Ausflockungen oder durch Nachkondensation des Gemischs bedingt, über einen längeren Zeitraum vermieden werden. Weiter sollte der Gehalt an Monomere in den olefinisch funktionalisierten Siloxanoligomeren gering sein bzw. vorzugsweise sollten keine Monomere mehr vorliegen, die zu unerwünschter Nachvernetzung führen können und zugleich sollte das Verfahren wirtschaftlicher sein als die bekannten.

Ferner bestand das Bestreben zugleich einen Oligomerisierungsgrad für die Siloxane, bei geringem VOC-Gehalt und einer Viskosität von $\leq 3000$, insbesondere kleiner gleich 1.000 mPa s und vorzugsweise größer gleich 5 mPa s einzustellen, um eine möglichst gute Verarbeitbarkeit der Siloxanoligomere bei der Applikation zu gewährleisten.

Gelöst werden die Aufgaben gemäß den unabhängigen Patentansprüchen, bevorzugte Ausführungsformen sind in den Unteransprüchen und in der Beschreibung detailliert dargelegt.

Überraschend wurde gefunden, dass olefinisch funktionalisierte Alkoxysilane und gegebenenfalls Alkylalkoxysilan und gegebenenfalls Tetraalkoxysilan in einfacher und wirtschaftlicher Weise durch Umsetzung mit einer definierten Menge Wasser von größer gleich 1,1 bis 1,59 Mol Wasser je Mol Silizium-Atome der eingesetzten Alkoxysilan, wobei 1,0 bis 1,6 bzw. 1,60 Mol Wasser auch zweckmäßig sein können, und gegebenenfalls in Gegenwart eines Lösemittels, vorzugsweise Alkohol, zu Zusammensetzungen besonders VOC-armer olefinischer Siloxanoligomere umgesetzt werden können, wobei der Hydrolysealkohol und das optional vorliegende Lösemittel im Wesentlichen abgetrennt werden, insbesondere wird nur das Lösemittel und/oder der Hydrolysealkohol destillativ abgetrennt. Überraschend war, dass die auf diese Weise erhaltenen Siloxanoligomere bereits als Sumpfprodukt einen sehr geringen Gesamtchloridgehalt zeigen. Die so erhaltenen Zusammensetzungen weisen erfindungsgemäß einen besonders niedrigen Chloridgehalt und einen besonders niedrigen VOC-Gehalt auf.

Die erfindungsgemäßen Zusammensetzungen und die nach dem erfindungsgemäßen Verfahren hergestellten Zusammensetzungen der Siloxanoligomere bedürfen anders als die bekannten Oligomere keiner weiteren Aufarbeitung, wie bspw. Destillation der Zusammensetzungen der Siloxanoligomere. Die hergestellte Zusammensetzung, das Siloxanoligomer Sumpfprodukt, zeigt die gleiche oder eine bessere Performance als bekannte jedoch mittels Destillation gereinigte Siloxanoligomere, die nach einem etwas anderen Verfahren erhalten werden. Daher braucht erfindungsgemäß das erhaltene Siloxanoligomer nicht mehr selbst destilliert zu werden, sondern kann rein als Sumpfprodukt erhalten und verwendet werden. Daher kann die Zusammensetzung auch mit größerer Ausbeute erhalten werden.

Gegenstand der Erfindung ist somit eine Zusammensetzung enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei mindestens eine Struktur in idealisierter Form der allgemeinen Formel I entspricht,

$(R^1O)[(R^1O)_{1-x}(R^2)_xSi(A)O]_a[Si(Y)_2O]_c[Si(B)(R^4)_y(OR^3)_{1-y}O]_bR^3$ (I),

- wobei die Strukturelemente aus Alkoxysilanen abgeleitet sind und
- A in dem Strukturelement einem olefinischen Rest entspricht und insbesondere ausgewählt ist aus einer linearen, verzweigten oder cyclischen Alkenyl- oder Cycloalkenyl-alkylen-funktionellen Gruppe mit jeweils 2 bis 16 C-Atomen,
- B in dem Strukturelement einem gesättigten Kohlenwasserstoff-Rest entspricht und insbesondere ausgewählt ist aus einem linearen, verzweigten oder cyclischen Alkyl-Rest mit 1 bis 16 C-Atomen,
- Y entspricht $OR^3$ oder in vernetzten und optional in raumvernetzten Strukturen unabhängig voneinander $OR^3$ oder $O_{1/2}$,
- wobei $R^1$ unabhängig voneinander einem linearen, verzweigten und/oder cyclischen Alkyl-Rest mit 1 bis 4 C-Atomen, und/oder gegebenenfalls H entspricht,
- $R^3$ jeweils unabhängig voneinander einem linearen, verzweigten und/oder cyclischen Alkyl-Rest mit 1 bis 4 C-Atomen, und/oder gegebenenfalls H entspricht, und $R^2$ entspricht jeweils unabhängig einem linearen, verzweigten oder cyclischen Alkyl-Rest mit 1 bis 15 C-Atomen, insbesondere mit 1 bis 8 C-Atomen, alternativ mit 1 bis 6 C-Atomen, und $R^4$ jeweils unabhängig einem linearen, verzweigten oder cyclischen Alkyl-Rest mit 1 bis 15 C-Atomen, insbesondere mit 1 bis 8 C-Atomen, alternativ mit 1 bis 6 C-Atomen, entsprechen,
- a, b, c, x und y unabhängig ganzen Zahlen entsprechen mit $1 \leq a$, $0 \leq b$, $0 \leq c$, x unabhängig voneinander 0 oder 1 ist, y unabhängig voneinander 0 oder 1 ist, und $(a+b+c) > 2$,
- wobei insbesondere der Gehalt an Chlor, vorzugsweise Gesamtchlorid, kleiner gleich 250 mg/kg beträgt, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg, ferner bevorzugt kleiner gleich 35 mg/kg, insbesondere in der Zusammensetzung als Sumpfprodukt, insbesondere und
- wobei die Strukturelemente $[(R^1O)_{1-x}(R^2)_xSi(A)O]_a$, $[Si(B)(R^4)_y(OR^3)_{1-y}O]_b$ und $[Si(Y)_2O]$ insgesamt, d. h. in Summe, vorzugsweise in der allgemeinen Formel I zusammen in Bezug auf alle Silizium-Atome der allgemeinen Formel I zu größer gleich 10 % als T-Struktur vorliegen, mit der Maßgabe, dass $1 \leq a$, $0 \leq b$, $0 \leq c$ und $(a+b+c) \geq 2$ sind oder alternativ, dass in Summe die Strukturelemente $[(R^1O)_{1-x}(R^2)_xSi(A)O]_a$ in Bezug auf die Gesamtsumme an Silizium-Atomen in der allgemeinen Formel I zu größer gleich 5 % als T-Struktur vorliegen, insbesondere zu größer gleich 7,5 %, bevorzugt zu größer gleich 10 %, besonders bevorzugt zu größer gleich 11 %, weiter bevorzugt zu größer gleich 13 %, ferner bevorzugt zu größer gleich 15 %, alternativ zu größer gleich 20 % oder gemäß einer weiteren Alternative zu größer gleich 25 %. Offenbart wird auch, dass die Strukturelemente $[(R^1O)_{1-x}(R^2)_xSi(A)O]_a$, $[Si(B)(R^4)_y(OR^3)_{1-y}O]_b$ und $[Si(Y)_2O]_c$, insgesamt, d. h. in Summe, in der allgemeinen Formel I zusammen in Bezug auf alle Silizium-Atome der allgemeinen Formel I zu größer gleich 5 %, vorzugsweise zu größer gleich 10 % vorliegen

Gegenstand der Erfindung ist ebenfalls eine Zusammensetzung enthaltend olefinisch funktionalisierte Siloxanoligomere, die höchstens einen olefinischen Rest am Silizium-Atom aufweisen, und die olefinisch funktionalisierten Siloxanoligomere Si-O-vernetzte Strukturelemente aufweisen, die kettenförmige, cyclische, vernetzte und/oder raumvernetzte Strukturen bilden, wobei mindestens eine Struktur in idealisierter Form der allgemeinen Formel I entspricht, wobei die Siloxanoligomere abgeleitete Strukturelemente aus mindestens einem der Alkoxysilane aufweisen,

(i) aus olefinisch funktionalisierten Alkoxysilanen der allgemeinen Formel II,

$$A\text{-}Si(R^2)_x(OR^1)_{3-x} \qquad (II)$$

mit A einem olefinischen Rest, insbesondere ausgewählt ist aus einer linearen, verzweigten oder cyclischen Alkenyl- oder Cycloalkenyl-alkylen-funktionellen Gruppe mit jeweils 2 bis 16 C-Atomen, mit $R^2$ jeweils unabhängig einem linearen, verzweigten oder cyclischen Alkyl-Rest mit 1 bis 15 C-Atomen, und x unabhängig voneinander 0 oder 1, bevorzugt x gleich 0, und $R^1$ unabhängig einem linearen, verzweigten und/oder cyclischen Alkyl-Rest mit 1 bis 4 C-Atomen entspricht, insbesondere einer Methyl-, Ethyl- oder Propyl-Gruppe oder gegebenenfalls einer Mischung von Alkoxysilanen der Formel II oder Umsterungsprodukte, und
(ii) optional aus mit einem gesättigten Kohlenwasserstoff-Rest funktionalisierten Alkoxysilan der Formel III,

$$B\text{-}Si(R^4)_y(OR^3)_{3-y} \qquad (III)$$

mit B einem unsubstituierten Kohlenwasserstoff-Rest, und insbesondere ausgewählt ist aus einem linearen, verzweigten oder cyclischen Alkyl-Rest mit 1 bis 16 C-Atomen, mit $R^4$ jeweils unabhängig einem linearen, verzweigten oder cyclischen Alkyl-Rest mit 1 bis 15 C-Atomen und y unabhängig voneinander 0 oder 1 und $R^3$ unabhängig einem linearen, verzweigten und/oder cyclischen Alkyl-Rest mit 1 bis 4 C-Atomen entspricht, insbesondere einer Methyl-, Ethyl- oder Propyl-Gruppe, wobei B bevorzugt eine Methyl, Ethyl oder Propyl ist, und y bevorzugt gleich 0 ist, oder optional eine Mischung von Alkoxysilanen der Formel III oder deren Umsterungsprodukte, und
(iii) optional aus einem Tetraalkoxysilan der allgemeinen Formel IV gleich $Si(OR^3)_4$ mit $R^3$ unabhängig voneinander wie vorstehend definiert und deren Gehalt an Chlor, insbesondere Gesamtchlorid, kleiner gleich 250 mg/kg beträgt, und wobei die Strukturelemente zusammen in Bezug auf alle Silizium-Atome des Siloxanoligomers zu größer gleich 10 % als T-Struktur vorliegen.

Gleichfalls offenbart wird, dass die Strukturelemente zusammen in Bezug auf alle Silizium-Atome des Siloxanoligomers zu größer gleich 5 % als T-Struktur vorliegen, insbesondere zu größer gleich 7,5 %, bevorzugt zu größer gleich 10 %, besonders bevorzugt zu größer gleich 11 %, weiter bevorzugt zu größer gleich 13 %, ferner bevorzugt zu größer gleich 15 %, alternativ zu größer gleich 20 % oder gemäß einer weiteren Alternative zu größer gleich 25 %.
Der Gehalt an Chlor, vorzugsweise Gesamtchlorid, beträgt vorzugsweise kleiner gleich 250 mg/kg, bevorzugt kleiner gleich 35 mg/kg bis zur Nachweisgrenze. Bis vorzugsweis kleiner gleich 0,001 mg/kg.
Gegenstand der Erfindung sind Zusammensetzungen in denen kleiner gleich 15 % (Flächen-%, GPC) Disiloxane und Tricyclosiloxane vorliegen, besonders bevorzugt kleiner gleich 12 %, wobei insbesondere größer gleich 10 % T-Strukturen in den Siloxanoligomeren auftreten und vorzugsweise der Gehalt an Trisiloxanen, Cyclotetrasiloxanen, Tetrasiloxanen, Cyclopentasiloxanen, Pentasiloxanen und/oder Cyclohexasiloxanen größer gleich 60 Flächen-% (GPC) beträgt, bevorzugt größer gleich 65 %, besonders bevorzugt größer gleich 70 % (Flächen-%, GPC) in der Gesamtzusammensetzung. Alternativ oder zusätzlich bevorzugt liegt der Gehalt an Trisiloxanen, Cyclotetrasiloxanen, Tetrasiloxanen und Cyclopentasiloxanen bereits bei größer gleich 40 Flächen-% (GPC), bevorzugt bei größer gleich 45 %, besonders bevorzugt bei größer gleich 50 %, besonders bevorzugt bei größer gleich 55 %, ganz besonders vorzugsweise größer gleich 60% und insbesondere kleiner gleich 65 % (Flächen-%, GPC) in der Gesamtzusammensetzung. Generell gilt, dass die Bezeichnung Disiloxan, Trisiloxan, Tetrasiloxan, Pentasiloxan die jeweils linearen und/oder verzweigten Siloxane erfasst und Cyclo-Trisiloxan, Cyclo-Tetrasiloxan, Cyclo-Penta oder Cyclo-Heptasiloxan die cyclischen Siloxane erfasst.
Ebenso kann der Gehalt an Trisiloxanen, Cyclotetrasiloxanen bereits größer gleich 15 Flächen-% (GPC) betragen, bevorzugt größer gleich 20 %, (Flächen-%, GPC) in der Gesamtzusammensetzung. Und vorzugsweise kleiner gleich 50 %, bevorzugt kleiner gleich 20 %, besonders bevorzugt kleiner 15%. Alternativ oder zusätzlich bevorzugt liegt der Gehalt an Tetrasiloxanen und Cyclopentasiloxanen bereits bei größer gleich 20 Flächen-% (GPC), bevorzugt größer gleich 25 %, besonders bevorzugt größer gleich 30 % (Flächen-%, GPC) in der Gesamtzusammensetzung und vorzugsweise kleiner gleich 50%, besonders bevorzugt kleiner gleich 40%. Besonders bevorzugt liegen größer gleich 70 % der Siloxanoligomere in der Zusammensetzung als Disiloxan, Cyclotrisiloxan, Trisiloxan, Cyclotetrasiloxan, Tetrasiloxan, Cyclopentasiloxan, Pentasiloxan und/oder als Cyclohexasiloxan vor, bevorzugt größer gleich 75 %, besonders bevorzugt größer gleich 80 %, weiter bevorzugt größer gleich 85 %, vorzugsweise größer gleich 90 %. Diese besonders bevorzugten Zusammensetzungen an Siloxanoligomeren zeigen im TGA erst oberhalb von 240 °C einen Masseverlust von größer gleich 50 %, besonders bevorzugt oberhalb 250 °C, wobei die Temperatur bei der der Masseverlust von 50 % auftritt auch bei bis zu 530 °C liegen kann.

Ebenfalls Gegenstand der Erfindung sind Zusammensetzungen, in denen größer gleich 30 % (Flächen-%, GPC) ein Mw von 500 bis 750 (rel. Mw) aufweisen, insbesondere weisen größer gleich 30 bis 50 % ein Mw von 500 bis 750 auf, besonders bevorzugt 35 bis 45 %.

Die erfindungsgemäßen Zusammensetzung umfassend Siloxanoligomere zeigen vorzugsweise bei 150 °C (TGA) nur einen Masseverlust von kleiner 5 % und besonders bevorzugt bei 200 °C nur einen Masseverlust von kleiner gleich 20 %, insbesondere kleiner gleich 15 %, besonders bevorzugt kleiner gleich 10% (Masseverlust in Gew.-%).

Somit sind die erfindungsgemäß erhältlichen Zusammensetzungen hervorragend zur Anwendung in heißen Extrudern geeignet, da sie selbst bei sehr hohen Temperaturen wenig VOC freisetzen, einen konstant sehr geringen Masseverlust aufweisen und in der Anwendung homogene Eigenschaften durch eine konstant geringe Massenverteilung aufweisen. Durch die besonders eingestellte Molmassenverteilung, insbesondere im Bereich der Trisiloxane, Cyclotetrasiloxane, Tetrasiloxane, Cyclopentasiloxane, Pentasiloxane und/oder Cyclohexasiloxane wird eine homogene und schnelle Verteilung in den Polymeren und Prepolymeren, wie PE, PP etc., ermöglicht, wobei der Masseverlust während der Verarbeitung zugleich sehr gering gehalten werden kann.

Ebenso weisen bevorzugte Zusammensetzungen enthaltend olefinisch funktionalisierte Siloxanoligomere sowie insbesondere Siloxanoligomere der Formel I ein Gewichtsmittel des Molekulargewichts (Mw) größer gleich 500 g/mol auf, insbesondere größer gleich 520 bis 1100 g/mol, bevorzugt 520 bis 800 g/mol, besonders bevorzugt 550 bis 770 g/mol, und vorzugsweise ist das Zahlenmittel des Molekulargewichtes (Mn) größer gleich 450 g/mol, insbesondere bis gleich 800 g/mol, bevorzugt größer gleich 450 bis 650 g/mol, und vorzugsweise liegt die Polydispersität bei 1,1 bis 1,8, vorzugsweise bei 1,13 bis 1,45, besonders bevorzugt bei 1,1 bis 1,3, weiter bevorzugt sind 1,1 bis 1,25 oder 1,1, bis 1,21.

Besonders bevorzugt sind Zusammensetzungen, enthaltend olefinisch funktionalisierte Siloxanoligomere sowie insbesondere Siloxanoligomere der Formel I mit einem Gewichtsmittel des Molekulargewichts (Mw) von größer gleich 564 bis 1083 g/mol. Wobei vorzugsweise zugleich größer gleich 85 %, bevorzugt 90 % (Flächen-%, GPC) ein Molekulargewicht (Mw) kleiner 1000 g/mol aufweisen. Insbesondere in Kombination mit einem Mw größer gleich 30 % (Flächen-%, GPC, Mw) von 500 bis 750 (rel. Mw), bevorzugt weisen größer gleich 30 bis 50 % ein Mw von 500 bis 750 auf, besonders bevorzugt 35 bis 45 %. Alle Angaben sind immer in Bezug auf die Gesamtzusammensetzung zu verstehen.

Besonders bevorzugte Zusammensetzungen weisen olefinisch funktionalisierte Siloxanoligomere auf, die zu größer gleich 30 % (Flächen-%, GPC), insbesondere größer gleich 30 bis kleiner gleich 50 %, besonders bevorzugt 35 bis 50 % in Bezug auf die Gesamtzusammensetzung mit einem Molekulargewicht (Mw) von 500 bis 700 g/mol in der Zusammensetzung vorliegen. Ebenso bevorzugte Zusammensetzung enthalten olefinisch funktionalisierte Siloxanoligomere, die zu größer gleich 60 % (Flächen-%, GPC) als Trisiloxan, Tetrasiloxan, Pentasiloxan, Cyclo-Tetrasiloxan, Cyclo-Pentasiloxan und/oder Cyclo-Hexasiloxan sowie als Gemisch enthaltend mindestens zwei der vorgenannten Siloxane vorliegen, insbesondere zu größer gleich 65 %, bevorzugt größer gleich 70 %. Dabei ist es besonders bevorzugt, wenn insbesondere zugleich der Masseverlust einer erfindungsgemäßen Zusammensetzung von 50 Gew.-%, bestimmt mittels TGA, bei einer Temperatur oberhalb 240 °C eintritt, insbesondere oberhalb 250 °C. Weiterhin zeigen die Zusammensetzungen, besonders bevorzugt für die genannten Anwendungen in Extrudern, einen Masseverlust der Zusammensetzung bestimmt nach TGA (Platintiegel, Deckel mit Loch, 10 K/min) bei einer Temperatur bis einschließlich 150 °C unter von kleiner gleich 5 Gew.-%, insbesondere kleiner gleich 1 bis 4 Gew.-%, bevorzugt kleiner gleich 1 bis 3 Gew.-%. Darüber hinaus weisen die Zusammensetzungen alternativ oder zusätzlich einen Masseverlust der Zusammensetzung bestimmt nach TGA (Platintiegel, Deckel mit Loch, 10 K/min) bei einer Temperatur bis einschließlich 200 °C unter 20 Gew.-% auf, insbesondere kleiner gleich 15 Gew.-%, bevorzugt kleiner gleich 10, alternativ zwischen 3 bis 15 Gew.-%.

Gewichtsmittel des Molekulargewichts (Mw)

$$M_w = \frac{\sum n_i M_i^2}{\sum n_i M_i}$$

Und Zahlenmittel des Molekulargewichts (Mn)

$$M_n = \frac{\sum n_i M_i}{\sum n_i}$$

jeweils mit: $n_i$ = Stoffmenge [Masse] des i-mers, $M_i$ = Molmasse des i-mers. Details zur Definition für Gewichtsmittel und Zahlenmittel, die dem Fachmann an sich bekannt sind, kann der Leser aber auch u. a. dem Internet unter http://de.wikipedia.org/wiki/ Molmassenverteilung oder einem Standardwerk der Mathematik entnehmen.

In dem erfindungsgemäßen Verfahren können Alkoxysilane der Formel II mit x gleich 0 ist alleine umgesetzt werden als auch mit Alkoxysilanen der Formel III in denen y gleich 1 oder 0 ist.

Alle Alkylreste, wie $R^1$, $R^2$, $R^3$, $R^4$, mit 1 bis 4 C-Atomen können jeweils unabhängig voneinander vorzugsweise Methyl, Ethyl, Propyl, n-Propyl, iso-Propyl, Butyl, n-Butyl, iso-Butyl, tert.-Butyl und/oder mit 5 C-Atomen 2-Methylbutyl sein. Dabei können die Alkyl-Reste $R^2$ und $R^4$ jeweils unabhängig einem linearen, verzweigten oder cyclischen Alkyl-Rest mit 1 bis 15 C-Atomen entsprechen. Die die Alkyl-Reste $R^2$ und $R^4$ können jeweils unabhängig ausgewählt sein aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, Cyclohexyl-, 2,2-Dimethylbutyl-, 2,3-Dimethylbutyl-, 2-Methylpentyl-, 3-Methylpentyl-, Octyl-, n-Octyl-, iso-Octyl-, Nonyl-, Decyl-, Undecyl-Dodecyl- , $C_{13}H_{27}$-, $C_{14}H_{29}$- und einer $C_{15}H_{31}$-Gruppe oder Cyclopentyl, Cyclohexyl sowie einer Alkyl-substituierten Cyclopentyl- und Cyclohexyl-Gruppe.

Umesterungsprodukte können Alkoxysilane mit verschiedenen Alkoxy-Guppen umfassen, wie bspw. mit Methoxy- und Ethoxy-Gruppen funktionalisierte Alkoxysilane der Formeln II, II, IV oder auch der Formel I. Die Siloxanoligomere als auch die Alkoxysilane der Formeln II, III und IV können als Umesterungsprodukte vorliegen. So können beispielsweise die Alkoxysilane der Formel II als Gemische von Methoxysilanen, Ethoxysilanen oder gemischt funktionalisierten Methoxyethoxysilanen vorliegen. Entsprechend können auch die Alkoxysilane der Formel III Gemische von Methoxysilanen, Ethoxysilanen oder gemischt funktionalisierten Methoxyethoxysilanen sein. Für die olefinisch funktionalisierten Siloxanoligomere, insbesondere der Formel I gilt entsprechendes, sie können als $R^1$ und $R^3$ Methyl- oder Ethyl-Gruppen sowie beide Gruppen aufweisen und als Methoxy- und Ethoxy-funktionalisierte Oligomere vorliegen.

Zusätzlich zu den vorgenannten Merkmalen ist der Gehalt an Monomeren Alkoxysilanen in der erfindungsgemäßen Zusammensetzung deutlich vermindert. Gegenstand der Erfindung ist daher auch eine Zusammensetzung umfassend olefinisch funktionalisierte Siloxanoligomere, deren Gehalt an Silizium-Atomen monomerer Alkoxysilane kleiner gleich 3 % bis zur Nachweisgrenze bzw. 0,0 % in Bezug auf alle Silizium-Atome beträgt, bevorzugt kleiner 2 bis 0,0 %, weiter bevorzugt kleiner gleich 1,5 bis 0,0 %, und alternativ bevorzugt kleiner gleich 2 bis 0,0 Gew.-%, weiter bevorzugt kleiner gleich 1 Gew.-%, besonders bevorzugt ist der Gehalt an Monomeren kleiner gleich 0,5 bis 0,0 Gew.-%, weiter bevorzugt kleiner 0,3 bis 0,0 Gew.-%. Als monomere Alkoxysilane gelten die Alkoxysilane der Formeln II, III und/oder IV sowie deren monomere Hydrolyseprodukte. Der Gehalt in Prozent kann bspw. mittels $^{29}$Si-NMR-Spektroskopie er-mittelt werden.

Gemäß besonders bevorzugten Ausführungsformen entspricht der olefinische Rest A in Formeln I und/oder II einem nicht hydrolysierbaren olefinischen Rest, insbesondere einer linearen, verzweigten oder cyclischen, Alkenyl- oder Cycloalkenyl-alkylen-funktionellen Gruppe mit jeweils 2 bis 16 C-Atomen, bevorzugt einer Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe.

Ebenso bevorzugt kann der unsubstituierte Kohlenwasserstoff-Rest B unabhängig in Formeln I und/oder III einem linearen, verzweigten oder cyclischen Alkyl-Rest mit 1 bis 16 C-Atomen entsprechen, insbesondere eine Methyl-, Ethyl-, Propyl-, n-Propyl-, iso-Propyl-, Butyl-, n-Butyl-, i-Butyl-, n-Octyl, iso-Octyl, Octyl-, oder Hexadecyl-Gruppe. Ebenso bevorzugt kann der Rest B unabhängig ausgewählt sein aus tert-Butyl, Pentyl-, n-Pentyl-, iso-Pentyl-, neo-Pentyl-, Hexyl-, i-Hexyl-, neo-Hexyl-, Heptyl-, 2,2-Dimethylbutyl-, 2,3-Dimethylbutyl-, 2-Methylpentyl-, 3-Methylpentyl-, neo-Octyl-, Nonyl-, Decyl-, Undecyl-, Dodecyl-, 2-Methylheptyl-, 3-Methylheptyl-, 4-Methylheptyl-, 2,2-Dimethylhexyl-, 2,3-Dimethylhexyl-, 2,4-Dimethylhexyl-, 2,5-Dimethylhexyl-, 3,3-Dimethylhexyl-, 3,4-Dimethylhexyl-, 3-Ethylhexyl-, 2,2,3-Trimethylpentyl-, 2,2,4-Trimethylpentyl-, 2,3,3-Trimethylpentyl-,2,3,4-Trimethylpentyl-, 3-Ethyl-2-methylpentyl-, 3-Ethyl-3-methylpentyl-, 2,2,3,3-Tetramethylbutyl-, $C_{13}H_{27}$-, $C_{14}H_{29}$- und einer $C_{15}H_{31}$-Gruppe. Gemäß einer Alternative kann der Alkyl-Rest verzweigt oder cyclisch mit 3 bis 16 C-Atomen sein oder linear mit 2 bis 7 C-Atomen.

Besonders bevorzugte ist es, wenn in Formeln I und/oder II der olefinische Rest A eine Vinyl-Gruppe ist, und unabhängig davon in Formeln I und/oder III der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe, und jeweils voneinander unab-hängig $R^1$ eine Methyl-, Ethyl- oder Propyl-Gruppe und $R^3$ unabhängig eine Methyl-, Ethyl- oder Propyl-Gruppe sind.

Erfindungsgemäß liegen die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 10 % als T-Struktur vor, insbesondere zu größer gleich 11 %, bevorzugt zu größer gleich 13, besonders bevorzugt zu größer gleich 15 %, alternativ zu größer gleich 20 % oder gemäß einer weiteren Alternative zu größer gleich 25 %. Zweckmäßig können auch größer gleich 7,5 % als T-Struktur vorliegen.

Ebenfalls weisen die olefinisch funktionalisierten Siloxanoligomere vorzugsweise ein Verhältnis an Silizium-Atomen zu A- und B-Resten mit der Maßgabe, dass a größer gleich 1, b größer gleich 0 und c größer gleich 0 ist, und (a+b+c) größer gleich 2, von Si zu (A- + B-Resten) von 1 zu 1 bis etwa 1,22 zu 1 auf, vorzugsweise von 1 : 1 bis 1,15 : 1 auf.

Ebenfalls Gegenstand der Erfindung sind Zusammensetzungen enthaltend olefinisch funktionalisierte Siloxanoligomere sowie Verfahren zur Herstellung der Zusammensetzungen, die höchstens einen olefinischen Rest am Silizium-Atom aufweisen und in denen insbesondere jeweils unabhängig voneinander ausgewählt

(i) das Strukturelement $[(R^1O)_{1-x}(R^2)_xSi(A)O]_a$ in der allgemeinen Formel I in Bezug auf alle Silizium-Atome der allgemeinen Formel I zu größer gleich 5 %, insbesondere zu größer gleich 7,5 % als T-Struktur vorliegt, ferner bevorzugt zu größer gleich 10 %, bevorzugt zu größer gleich 11 %, besonders bevorzugt zu größer gleich 15 %, alternativ zu größer gleich 20 % oder gemäß einer weiteren Alternative zu größer gleich 25 %, und gegebenenfalls

(ii) das die Strukturelemente $[(R^1O)_{1-x}(R^2)_xSi(A)O]_a$ und $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 50 % als D-Struktur vorliegen, insbesondere zu größer gleich 55 %, bevorzugt zu größer gleich 57,5 %, besonders bevorzugt zu größer gleich 60 %, und gegebenenfalls

(iii) das Strukturelement $[(R^1O)_{1-x}(R^2)_xSi(A)O]_a$ in der allgemeinen Formel I in Bezug auf alle Silizium-Atome der allgemeinen Formel I zu kleiner gleich 35 % als M-Struktur vorliegt, insbesondere zu kleiner gleich 30 %, bevorzugt zu kleiner gleich 25 %, besonders bevorzugt zu kleiner gleich 20 %, alternativ zu kleiner gleich 20 % oder gemäß einer weiteren Alternative zu kleiner gleich 15 %, und vorzugweise zu größer 3 %, und gegebenenfalls

(iv.a) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 35% als M-Struktur vorliegt, insbesondere kleiner gleich 30%, vorzugsweise kleiner gleich 25 % als M-Struktur vorliegt, insbesondere zu kleiner gleich 22 %, bevorzugt zu kleiner gleich 20 %, besonders bevorzugt zu kleiner gleich 18 %, alternativ bevorzugt zu kleiner gleich 15 %, und vorzugsweise größer 7 %, und/oder gegebenenfalls

(iv.b) das Strukturelement $[Si(B)(R^4)_y(OR^3)_{1-y}O]_b$ in der allgemeinen Formel I zu größer gleich 5 % als T-Struktur vorliegt, insbesondere zu größer gleich 7,5 %, insbesondere zu größer gleich 10 %, bevorzugt zu größer gleich 11 %, besonders bevorzugt zu größer gleich 15 %, alternativ zu größer gleich 20 % oder gemäß einer weiteren Alternative zu größer gleich 25 %, und/oder gegebenenfalls

(v) das Strukturelement $[Si(Y)_2O]_c$ in der allgemeinen Formel I zu größer gleich 20 % als D-Struktur vorliegt oder insbesondere liegen über 40 % der Strukturelement $[Si(Y)_2O]_c$ in der allgemeinen Formel I als D-Struktur vor, insbesondere über 45 %, bevorzugt über 50 %, besonders bevorzugt über 55 %.

Ebenfalls Gegenstand der Erfindung sind Zusammensetzungen enthaltend olefinisch funktionalisierte Siloxanoligomere sowie Verfahren zur Herstellung der Zusammensetzungen, die höchstens einen olefinischen Rest am Silizium-Atom aufweisen und in denen jeweils unabhängig voneinander ausgewählt (iii) das Strukturelement $[(R^1O)_{1-x}(R^2)_xSi(A)O]_a$ in der allgemeinen Formel I in Bezug auf alle Silizium-Atome der allgemeinen Formel I zu kleiner gleich 35 % als M-Struktur vorliegt, insbesondere zu kleiner gleich 30 %, bevorzugt zu kleiner gleich 25 %, besonders bevorzugt zu kleiner gleich 20 %, alternativ zu kleiner gleich 20 % oder gemäß einer weiteren Alternative zu kleiner gleich 15 %, und vorzugweise zu größer 3 %, und sofern vorhanden das (iv.a) das Strukturelement $[Si(B)(R^4)_y(OR^3)_{1-y}O]_b$ in der allgemeinen Formel I in Bezug auf alle Silizium-Atome der allgemeinen Formel I zu kleiner gleich 20 %, insbesondere zu kleiner gleich 18 %, bevorzugt zu kleiner gleich 15 %, und vorzugsweise größer 7 % vorliegt.

Gemäß einer Alternative sind Gegenstand der Erfindung Zusammensetzungen enthaltend olefinisch funktionalisierte Siloxanoligomere, die höchstens einen olefinischen Rest am Silizium-Atom aufweisen, insbesondere der allgemeinen Formel I, mit der Maßgabe, dass a größer gleich 1 ist und b und c gleich 0 sind, d. h. rein olefinische Siloxanoligomere ohne Alkyl-Gruppen.

Ebenfalls Gegenstand der Erfindung sind Zusammensetzungen enthaltend olefinisch funktionalisierte Siloxanoligomere, die höchstens einen olefinischen Rest am Silizium-Atom aufweisen, insbesondere der allgemeinen Formel I, mit der Maßgabe, dass a und b größer gleich 1 sind und c gleich 0 ist, insbesondere ohne Q-Strukturen, d. h. rein olefinisch und Alkyl-funktionalisierte Siloxanoligomere ohne $Si(O-)_4$-Gruppen bzw. ohne $Si(O-)_4$-Fragmente, die Q-Strukturen bilden. Die beiden vorgenannten Zusammensetzungen aufgrund dieser Bedingungen die gewünschte Viskosität auf und zeigen bei ihrer Anwendung hervorragende Eigenschaften hinsichtlich ihrer Verarbeitung, Auftragung auf Oberflächen oder Einarbeitung in Polymer auf.

Gemäß einer weiteren Alternative, weisen konkret bevorzugte Zusammensetzungen enthaltend olefinisch funktionalisierte Siloxanoligomere, die höchstens einen olefinischen Rest am Silizium-Atom aufweisen und in denen das Strukturelement $[(R^1O)_{1-x}(R^2)_xSi(A)O]_a$ in der allgemeinen Formel I in Bezug auf alle Silizium-Atome der allgemeinen Formel I, mit a größer gleich 1, b größer gleich 0 und c größer gleich 0, von 3 und 35 % M-Strukturen auf, insbesondere 5 bis 33 % M-Strukturen, weiter bevorzugt von 5 bis 25 %, insbesondere mit der Maßgabe, dass das Strukturelement $[(R^1O)_{1-x}(R^2)_xSi(A)O]_a$ in der allgemeinen Formel I zugleich von 50 und 75 % als D-Struktur vorliegen, vorzugsweise von 50 und 70 %, und gegebenenfalls liegen zusätzlich größer gleich als 8 % als T-Struktur vor, insbesondere größer gleich 10 %. In der Alternative mit zusätzlich b größer gleich 1 liegt das Strukturelement $Si(B)(R^4)_y(OR^3)_{1-y}O]_b$ in der allgemeinen Formel I von 3 und 35 % als M-Struktur vor, insbesondere mit der Maßgabe, dass c gleich 0 ist. Gemäß der Alternative mit a, b und c größer gleich 1 weisen die Siloxanoligomer in der Summe aller Silizium-Atome weniger als 8 % T-Strukturen auf, insbesondere die Leitstruktur des Strukturelements $[(R^1O)_{1-x}(R^2)_xSi(A)O]_a$ in der allgemeinen Formel I weist weniger als 5 % T-Strukturen auf. Auch diese Zusammensetzungen zeigen noch die angestrebte Viskosität, insbesondere mit weniger als 5 % an T-Strukturen, wobei zusätzlich der gesättigte Kohlenwasserstoffrest B vorzugsweise 1 bis 6 C-Atome, ferner bevorzugt 1 bis 4 C-Atome aufweist.

Der Gehalt an M-, D-, T- oder Q-Strukturen wird nach einer dem Fachmann bekannten Methode ermittelt, wie vorzugsweise mittels $^{29}$Si-NMR.

Das Verhältnis von M : D : T Strukturen in den erfindungsgemäßen olefinischen Siloxanoligomeren liegt vorzugsweise bei 5 : 10 : 1 bis 3 : 5 : 1.

Besonders bevorzugt ist das Verhältnis von T zu D Strukturen aller Strukturelemente der allgemeinen Formel I im Bereich von 1 : 10 bis 1: 2, insbesondere 1 : 8 bis 1 : 3, bevorzugt von 1 : 6 bis 1 : 3, besonders bevorzugt von 1 : 5 bis 1 : 3, insbesondere zusätzlich zu dem Gehalt an
T-Strukturen aller Strukturelemente in der allgemeinen Formel I von größer gleich 5 %, vorzugsweise größer gleich 7,5 %. Alternativ bevorzugt ist das Verhältnis von T zu D Strukturen in den olefinischen Siloxanoligomeren im Bereich von 1 : 10 bis 1 : 2, insbesondere 1 : 8 bis 1 : 3, bevorzugt von 1 : 6 bis 1 : 3, besonders bevorzugt von 1 : 5 bis 1 : 3, insbesondere zusätzlich zu dem Gehalt an T-Strukturen in den Siloxanoligomeren von größer gleich 5 %, vorzugsweise größer gleich 7,5 %.

Ebenfalls bevorzugt liegt das Verhältnis von M zu D Strukturen, insbesondere zusätzlich zu dem Gehalt an T-Strukturen aller Strukturelemente in der allgemeinen Formel I von größer gleich 10 % der allgemeinen Formel I im Bereich von 1 : 100 bis 2,5: 1, vorzugsweise 1 : 10 bis 2,5 : 1, besonders vorzugsweise 1 : 100 bis 1 : 2, insbesondere von 1 : 5 bis 1 : 2, ferner bevorzugt von 1 : 5 bis 1 : 1, besonders bevorzugt von 1 : 4 bis 1 : 2, oder in einer Alternative in den olefinischen Siloxanoligomeren. Zweckmäßig ist auch bereits ein Gehalt an T-Strukturen größer gleich 7,5 %.

Zusammensetzungen, die die vorgenannten Strukturen aufweisen verfügen über einen hohen Flammpunkt und zeigen besonders geringe VOC-Gehalte bei der späteren Anwendung. Ein hervorzuhebender Vorteil der erfindungsgemäßen Zusammensetzungen und des erfindungsgemäßen Verfahrens ist, dass die hergestellten olefinischen Siloxanoligomere, insbesondere die Vinyloligomere, anders als die bekannten Oligomere keine weitere Aufarbeitung, wie Destillation der Zusammensetzungen der Siloxanoligomere benötigen.

Erfindungsgemäß werden als Hydrolyse- und/oder Kondensationskatalysator unter Normalbedingungen gasförmige, saure Katalysatoren, insbesondere HCl, eingesetzt, die in wässriger oder alkoholischer Phase gelöst werden können. Somit erfolgt eine Umsetzung unter den Bedingungen der homogenen Katalyse. Ein überraschender Vorteil war, dass es durch das erfindungsgemäße Verfahren gelingt, den gasförmigen Katalysator nahezu vollständig aus den Zusammensetzungen abzutrennen.

Ein besonderer Vorteil der erfindungsgemäßen olefinisch funktionalisierten Siloxanoligomere ist auch, dass der erniedrigte Gehalt an hydrolysierbarem VOC- und der erhöhte Gehalt an T-Strukturen der Siloxanoligomere unmittelbar die Verarbeitbarkeit der Siloxanoligomere mit Polymeren verbessert, beispielsweise bei der Knetung oder Compoundierung. Konkret verbessert sich der Schmelzindex, so dass der Energieaufwand bei der Verarbeitung sinkt. Ferner nimmt die Korrosion der eisenhaltigen Maschinen ab, da der Chloridgehalt weiter gesenkt werden konnte. Zudem ist die Wasseraufnahmefähigkeit der mit den erfindungsgemäßen Siloxanoligomeren compoundierten Polymere reduziert sowie häufig deren Bruchdehnung als auch meist die Zugfestigkeit verbessert. Die verminderte Wasseraufnahmefähigkeit ist in den späteren Anwendungsfeldern vorteilhaft, beispielsweise bei der Herstellung von gefüllten Kabelmassen, insbesondere für Kabel, die in der Erde verlegt werden sollen und anhaltender Feuchtigkeit ausgesetzt sind.

Die Definition für M-, D-, T- und Q-Strukturen bezieht sich in der Regel auf die Anzahl gebundener Sauerstoffe in Siloxanbindungen, wie nachfolgend anhand von Alkoxysilyleinheiten beispielhaft dargestellt: Mit jeweils unabhängig R gleich $OR^1$, $OR^3$, Gruppe-A oder Gruppe B, wie vorstehend definiert. Mit M = $[-O_{1/2}-Si(R)_3]$, D = $[-O_{1/2}-Si(R)_2-O_{1/2}-]$, T = $[RSi(-O_{1/2}-)_3]$ und Q = $[Si(-O_{1/2}-)_4]$. $-O_{1/2}-$ ist immer ein Sauerstoff in einer Siloxanbindung. So kann man, um Silicone und Siloxane bzw. Silanoligomere anschaulicher beschreiben zu können, anstelle einer idealisierten formelmäßigen Beschreibung auch auf die M-, D-, T- (vernetzt) und Q-Strukturen (raumvernetzt) zurückgegriffen. Zur genaueren Nomenklatur der Benennung solcher Siloxanstrukturen sei auf das "Römpp Chemielexikon" - Stichwort: Silicone - hingewiesen. Beispielsweise können aus Baueinheiten M lediglich Dimere mit $M_2$, wie Hexaalkoxydisiloxan, gebildet werden. Zum Aufbau von Ketten werden Zusammensetzungen von Baueinheiten D und M benötigt, sodass Trimere ($M_2D$,

Octaalkoxytrisiloxan), Tetramere ($M_2D_2$) und so fort bis zu linearen Oligomeren mit $M_2D_n$ aufgebaut werden können. Zur Ausbildung von cyclischen Oligomeren werden Baueinheiten D benötigt. Auf diese Weise können beispielsweise Ringe mit $D_3$, $D_4$, $D_5$ oder höher aufgebaut werden. Verzweigte bzw. vernetzte Strukturelemente, zu denen auch Spiroverbindungen zu rechnen sind, werden erhalten, wenn Baueinheiten T und /oder Q zusammen vorliegen. Denkbare vernetzte Strukturen können als $T_n$ (n ≥ 4), $D_nT_m$ (m < n), $D_nT_m$ (n >> m), $D_3T_2$, $M_4Q$, $D_4Q$ und so weiter vorliegen, um nur einige denkbare Möglichkeiten zu nennen. Baueinheiten M werden auch als Stopper oder Regler bezeichnet, während D-Einheiten als Ketten- oder Ringbildner und die T- und gegebenenfalls auch die Q-Einheiten als Netzwerkbildner bezeichnet werden. So kann der Einsatz von Tetraalkoxysilanen aufgrund der vier hydrolysierbaren Gruppen und Zutritt von Wasser bzw. Feuchtigkeit Baueinheiten Q und somit die Ausbildung eines Netzwerks (raumvernetzt) bewirken. Demgegenüber können vollständig hydrolysierte Trialkoxysilane Verzweigungen, d. h. T-Einheiten $[-Si(-O-)_{3/2}]$, in einem Strukturelement bedingen, beispielsweise $MD_3TM_2$ für ein Oligomer mit einem Oligomerisierungsgrad von n = 7, wobei in diesen Strukturdarstellungen die jeweiligen Funktionalitäten an den freien Valenzen der Silyloxyeinheiten zu definieren sind.

Weitere Details zum Nomenklaturverständnis von M-, D-, T- und Q-Strukturen sowie diesbezüglicher Untersuchungsmethoden sind u. a.:

- "Strukturuntersuchungen von oligomeren und polymeren Siloxanen durch hochauflösende 29Si-Kernresonanz", H.-G. Horn, H. Ch. Marsmann, Die Markromolekulare Chemie 162 (1972), 255-267;
- "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300;
- "Chapter 8 - NMR spectroscopy of organosilicon compounds", Elizabeth A. Williams, The Chemistry of Organic Silicon Compounds, 1989 John Wiley & Sons Ltd., 511-533.

Es kann bevorzugt sein, dass die Zusammensetzung und/oder das Siloxanoligomer zudem Trialkylsilan-Gruppen aufweisen, wie Trimethylsilan oder Triethylsilan-Gruppen, bspw. durch die Zugabe von Alkoxytrialkylsilan, um den Oligomerisierungsgrad einzustellen.

Zur Erfüllung der gestellten Aufgaben werden vorzugsweise Zusammensetzungen von Gemischen olefinischer Siloxanoligomere bereitgestellt, bei denen insbesondere mehr als 20 Gew.-% der Siloxanoligomere einen Oligomerisierungsgrad von größer gleich 4, optional größer gleich 8 aufweisen, d. h. die Anzahl der Silizium-Atome (n) je Oligomer ist optional größer gleich 8 (n > 8), weiter bevorzugt ist zugleich der Anteil an Siloxanoligomeren mit T-Struktur größer gleich (≥) 5 %, insbesondere größer gleich 6 %, wobei gleichzeitig die dynamische Viskosität vorzugsweise kleiner gleich (≤) 3.000 mPa s und insbesondere größer gleich 5 mPa s, bevorzugt kleiner gleich 1.000, vorzugsweise kleiner gleich 500 mPa s und insbesondere größer gleich 10 mPa s, besonders bevorzugt kleiner gleich 250 mPa s beträgt. Weiter ist es bevorzugt, wenn die Viskosität der Zusammensetzung enthaltend olefinisch funktionalisierte Siloxane kleiner gleich 3.000 mPa s ist und größer 7 mPa s, bevorzugt kleiner gleich 2500 und größer 10 mPa s, alternativ bevorzugt kleiner gleich 1000 mPa s und größer gleich 12 mPa s.

Generell können die Siloxanoligomere lineare und/oder cyclische Oligomere mit M-, D-Strukturen und T-Struktur sein. Erst bei Zugabe von Tetraalkoxysilan während der Herstellung oder vor der Verarbeitung der Oligomere werden Siloxanoligomere mit M-, D-, Q- und ggf. T-Strukturen ausgebildet. Erfindungsgemäße Zusammensetzungen weisen Siloxanoligomere, insbesondere der Formel I, auf, in denen die Summe aus (a + b) eine ganze Zahl größer gleich 2 ist, insbesondere von größer gleich 4 bis 30, ferner bevorzugt von größer gleich 6 bis 30, besonders vorzugsweise von größer gleich 8 bis 30 und c gegebenenfalls größer gleich 1 ist, wie beispielsweise 1 bis 20, insbesondere 2 bis 15. Bei zu hohen Oligomerisierungsgraden können keine homogenen und reproduzierbaren Produkteigenschaften bei den Siloxanoligomeren erzielt werden. Zur Einstellung des Oligomerisierungsgrades während der Herstellung der Zusammensetzung kann es daher vorteilhaft sein, für einen Kettenabbruch zu einem gewünschten Zeitpunkt, ein Alkoxytrialkylsilan, wie vorzugsweise ein Ethoxytrimethylsilan oder Methoxytrimethylsilan zur herzustellenden Zusammensetzung zuzusetzen.

Erfindungsgemäße Zusammensetzungen können mindestens 20 Gew.-% an Siloxanoligomeren aufweisen, bei denen der Oligomerisierungsgrad n an olefinisch funktionalisierten Siloxanoligomeren größer gleich 4 ist, insbesondere größer gleich 6, besonders bevorzugt größer gleich 4, optional größer gleich 8. Dabei ist es weiter bevorzugt, wenn bei mindestens 20 Gew.-% der Siloxanoligomere, insbesondere der Formel I, die Summe aus (a+ b) eine ganze Zahl größer gleich 5 ist, insbesondere ist die Summe aus (a+b) größer gleich 6, bevorzugt ist die Summe aus (a+b) größer gleich 4, optional größer gleich 8, mit a größer gleich 1 und b gleich 0 oder b größer gleich 1, vorzugsweise jeweils a und b unabhängig voneinander größer gleich 2, insbesondere unabhängig größer gleich 4, und gegebenenfalls mit c in (a+b+c) größer gleich 1 ist.

Gemäß einer bevorzugten Alternative ist b größer gleich 1, insbesondere größer gleich 2, bevorzugt größer gleich 4. Weiter bevorzugt weisen mindestens 20 Gew.-% der olefinisch funktionalisierten Siloxanoligomere, insbesondere der Formel I, einen Oligomerisierungsgrad (a+b+c) größer gleich 5 optional größer gleich 8 auf, mit a größer gleich 1, und gegebenenfalls b größer gleich 1 und gegebenenfalls c größer gleich 1, wobei der Anteil an Siloxanoligomeren mit T-Struktur größer gleich ($\geq$) 5 % ist, und vorzugsweise die Viskosität kleiner gleich ($\leq$) 1.000 mPa s beträgt. Weiter bevorzugt ist der Anteil an T-Strukturen der Siloxanoligomere größer gleich 10 %, wobei gleichzeitig die Viskosität kleiner gleich 500 mPa s beträgt.

Besonders bevorzugte Zusammensetzung enthalten Siloxanoligomere, wobei die

a) die Siloxanoligomere und mindestens eine Struktur der Formel I, jeweils abgeleitet aus Alkoxysilanen der Formel II, als olefinischen Rest A eine Vinyl-Gruppe aufweisen, wobei $R^1$ jeweils unabhängig voneinander einer Methyl- oder Ethyl-Gruppe entspricht,

b) die Siloxanoligomere und mindestens eine Struktur der Formel I, jeweils abgeleitet aus Alkoxysilanen der Formel II, als olefinischen Rest A eine Vinyl-Gruppe und abgeleitet aus Alkoxysilanen der Formel III als unsubstituierten Kohlenwasserstoff-Rest B eine Propyl-Gruppe aufweisen, wobei $R^1$ und $R^3$ jeweils unabhängig voneinander einer Methyl- oder Ethyl-Gruppe entsprechen, oder

c) die Siloxanoligomere und mindestens eine Struktur der Formel I, jeweils abgeleitet aus Alkoxysilanen der Formel II und Formel IV und optional der Formel III, ausgewählt aus a) oder b) sind, wobei $R^3$ aus Formel IV abgeleitet jeweils unabhängig voneinander einer Methyl- oder Ethyl-Gruppe entspricht.

Ebenso bevorzugte Zusammensetzung umfassen jeweils unabhängig Siloxanoligomere mit abgeleiteten Strukturelemente und optional und mindestens eine Struktur der Formel I aus mindestens einem olefinisch funktionalisierten Alkoxysilan der allgemeinen Formel II, die ausgewählt sind aus Vinyltriethoxysilan, Vinyltrimethoxysilan, und optional aus Formel III, wobei die Alkoxysilane der Formel III ausgewählt sind aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Thmethoxysilan, $C_{15}H_{31}$-Trimethoxyslian, $C_{15}H_{31}$-Triethoxysilan, Hexadecyltriethoxysilan und Hexadecyltrimethoxysilan, Dimethyldimethoxysilan (DMDMO), Dimethyldiethoxysilan, Propylmethyldimethoxysilan, Propylmethyldiethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Cyclohexyl-triethoxysilan, n-Propyl-tri-n-butoxysilan, Hexadecylmethyldimethoxysilan und/oder Hexadecylmethyldiethoxysilan sowie Mischungen dieser Silane oder eine Mischung umfassend mindestens zwei der Silane sowie deren Umesterungsprodukten.

Weitere bevorzugte Zusammensetzung umfassen jeweils unabhängig Siloxanoligomere mit abgeleiteten Strukturelemente und optional mindestens eine Struktur der Formel I aus mindestens einem olefinisch funktionalisierten Alkoxysilan der allgemeinen Formel II, die ausgewählt sind aus Alkoxysilanen der Formel II mit einem olefinischen Rest A ausgewählt aus mindestens einer Allyl-, Butenyl-, 3-Butenyl-, Pentenyl-, Hexenyl-, Ethylhexenyl-, Heptenyl-, Octenyl-, Cyclohexenyl-C1 bis C8-alkylen-, Cyclohexenyl-2-ethylen-, 3'-Cyclohexenyl-2-ethylen-, Cyclohexadienyl-C1 bis C8-alkylen- und Cyclohexadienyl-2-ethylen-Gruppe, wobei $R^1$ jeweils unabhängig voneinander einer Methyl- oder Ethyl-Gruppe entspricht, oder aus mindestens einem vorgenannten olefinisch funktionalisierten Alkoxysilans der Formel II, wobei die Kombination eines Cyclohexenyl-2-ethylen- oder Cyclohexadienyl-2-ethylen-funktionalisierten Alkoxysilans der Formel II mit einem Alkoxysilan der Formel III besonders bevorzugt ist, das mindestesn eine Alkoxysilan der Formel III ist ausgewählt aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan sowie deren Umesterungsprodukten..

Zusätzlich oder alternativ zu einem oder mehreren der vorgenannten Merkmale weist eine erfindungsgemäße Zusammensetzung vorzugsweise nach vollständiger Hydrolyse aller Alkoxy-Gruppen einen Alkoholgehalt (VOC) von kleiner gleich 20 Gew.-% auf, insbesondere kleiner gleich 18 Gew.-%, bevorzugt kleiner gleich 15 Gew.-%, weiter bevorzugt kleiner gleich 12 Gew.-%, einschließlich alle dazwischen liegenden Zahlenwerte insbesondere 19, 17, 16, 14, 13, 12, 11, 10 usw., mit der Maßgabe, dass nur so viel Wasser zugesetzt wird, wie zur Hydrolyse benötigt wird. Eine weitere Verdünnung erfolgt zur Bestimmung nicht.

Zusätzlich oder alternativ zu einem oder mehreren der vorgenannten Merkmale weist die Zusammensetzung vorzugsweise ein Molverhältnis von A-Resten zu B-Resten von 1 : 0 bis 1 : 8 auf, vorzugsweise von etwa 1 : 0 bis 1 : 4, besonders bevorzugt ein Verhältnis von 1 : 0 bis 1 : 2, vorzugsweise 1 : 0 bis 1 : 1, bevorzugt um 1 : 1.

Dabei ist es weiter bevorzugt, wenn die Zusammensetzung olefinische Siloxanoligomere aufweist, in denen

(i) das Verhältnis der Silizium-Atome ausgewählt aus olefinisch funktionalisierten Silizium-Atomen und aus mit einem gesättigten Kohlenwasserstoff funktionalisierten Silizium-Atomen zu Alkoxy-Gruppen im Siloxanoligomere oder alternativ in der allgemeinen Formel I von 1 : 0,3 bis 1 : 2,0, besonders bevorzugt 1 : 1,0 bis 1 : 1,8, ebenfalls bevorzugt sind jedoch auch 1 : 0,4 bis 1 : 1,5, 1 : 0,4 bis 1 : 1,2, bevorzugt 1 : 0,4 bis 1 : 1,1, besonders bevorzugt von 1 : 0,4 bis 1 : 0,9, weiter bevorzugt von 1 : 0,4 bis 1 : 0,8, insbesondere 1 : 0,4 bis 1 : 0,7 beträgt, mit der Maßgabe, dass das olefinisch funktionalisierte Siloxanoligomer aus Alkoxysilanen der allgemeinen Formel II und III abgeleitet ist

(ii) das Verhältnis der Silizium-Atome ausgewählt aus olefinisch funktionalisierten Silizium-Atomen und aus mit einem gesättigten Kohlenwasserstoff funktionalisierten Silizium-Atomen zu Alkoxy-Gruppen im Siloxanoligomere oder alternativ in der allgemeinen Formel I von 1 : 0,5 bis 1 : 2,5, insbesondere von 1 : 0,5 bis 1 : 1,0 beträgt alternativ von 1 : 0,9 bis 1 : 2,5, insbesondere von 1 : 0,9 bis 1 : 1,5 beträgt, insbesondere von 1 : 1,0 bis 1 : 1,4, bevorzugt von 1 : 1,0 bis 1 : 1,3, besonders bevorzugt von 1 : 1,0 bis 1 : 1,2 mit der Maßgabe, dass das olefinisch funktionalisierte Siloxanoligomer aus Alkoxysilanen der allgemeinen Formel II und IV und der Formel III abgeleitet ist.

Ebenfalls bevorzugt können erfindungsgemäße Zusammensetzungen zusätzlich oder alternativ olefinisch funktionalisierte Siloxanoligomere aufweisen, bei denen das Verhältnis von M-Strukturen zu D-Strukturen der Siliziumatome in den olefinisch funktionalisierten Siloxanoligomeren bevorzugt im Bereich von 1 : 1,5 bis 1 : 10 liegt, wobei vorzugsweise 5 % der Siliziumatome als T-Struktur vorliegen. Bevorzugt sind Verhältnisse von M-Strukturen zu D-Strukturen von 1 : 2 bis 1 : 10 bei größer gleich 5 % T-Strukturen, insbesondere 1 : 2,5 bis 1 : 5, wie vorzugsweise um 1 : 2,5, 1 : 3,5, 1 : 4,5, 1 : 5, 1 : 6, 1 : 7; 1 : 8 oder auch 1 : 9 sowie alle dazwischen liegenden Werte.

Gemäß einer Alternative werden Zusammensetzungen von rein olefinisch substituierten Siloxanoligomeren hergestellt, insbesondere der Formel I mit a gleich eine ganze Zahl größer gleich 2, wobei bevorzugt mindestens 20 Gew.-% der Siloxanoligomere mit a größer gleich 4, optional mit größer gleich 8 vorliegen. Bevorzugte olefinische Gruppen sind lineare, verzweigte oder cyclische, Alkenyl-, Cycloalkenyl-alkylen-funktionelle Gruppen mit jeweils 2 bis 16 C-Atomen, bevorzugt eine Vinyl-, Allyl-, Butenyl-, wie 3-Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen- und/oder Cyclohexadienyl-C1 bis C8-alkylen-, vorzugsweise Cyclohexadienyl-2-ethylen-Gruppe. Gegebenenfalls kann die Zusammensetzung auf einem Siloxanoligomer beruhen, das in Gegenwart von Tetraalkoxysilan hergestellt wurde.

Entsprechend einer zweiten bevorzugten Alternative werden Zusammensetzungen von olefinisch- und Alkyl-substituierten Siloxanoligomeren hergestellt, insbesondere der Formel I mit a größer gleich 1 und b größer gleich 1, und insbesondere mindestens 20 Gew.-% der Siloxanoligomere weisen (a+b) gleich eine ganze Zahl größer gleich 4, optional größer gleich 8. Bei diesen Zusammensetzungen ist es weiter bevorzugt, wenn das Molverhältnis von A-Resten zu B-Resten 1 : 0 bis 1 : 8 ist, insbesondere ist das Verhältnis von a : b gleich 1 : 0 bis 1 : 8, insbesondere 1 : 0 oder 1 : 1 bis 1 : 8. Gegebenenfalls kann die Zusammensetzung auf einem Siloxanoligomer beruhen, das in Gegenwart von Tetraalkoxysilan hergestellt wurde.

Entsprechend einer weiteren bevorzugten Alternative werden Zusammensetzungen von Vinyl- und Alkyl-substituierten Siloxanoligomeren hergestellt, insbesondere der Formel I mit a größer gleich 1 und b größer gleich 1, und insbesondere mit 20 Gew.-% der Siloxane mit (a+b) gleich eine ganze Zahl größer gleich 4, optional größer gleich 8, vorzugsweise mit einem Molverhältnisse von A-Resten zu B-Resten 1 : 0 bis 1 : 8, insbesondere von a : b gleich 1 : 0 bis 1 : 8, insbesondere 1: 0 oder 1 : 1 bis 1 : 8. Gegebenenfalls können die Zusammensetzungen auf einem Siloxanoligomer beruhen, das in Gegenwart von Tetraalkoxysilan hergestellt wurde.

Weiter bevorzugt umfasst die Zusammensetzung Siloxanoligomere mit Strukturelementen, die erhältlich sind bzw. abgeleitet sind aus mindestens einem der Alkoxysilane, aus olefinisch funktionalisierten Alkoxysilanen der allgemeinen Formel 11 und gegebenenfalls aus mit einem gesättigten Kohlenwasserstoff-Rest funktionalisierten Alkoxysilan der Formel III, und gegebenenfalls aus einem Tetraalkoxysilan der allgemeinen Formel IV gleich $Si(OR^3)_4$, wobei vorzugsweise mindestens 20 Gew.-% der Siloxanoligomere einen Oligomerisierungsgrad von (a+b+c) von größer gleich 4, optional größer gleich 8 aufweisen.

Unter einem Strukturelement - einer monomeren Siloxan-Einheit - wird durchgängig die einzelne Baueinheit M, D, T oder Q verstanden, d. h. die aus einem Alkoxysubstituierten Silan abgeleitete Baueinheit, die sich durch zumindest teilweise Hydrolyse bis gegebenenfalls vollständige Hydrolyse und zumindest teilweise Kondensation in einem Kondensat bildet. Erfindungsgemäß können sich insbesondere die Siloxanoligomere mit den folgenden Strukturelementen bilden, wie vorzugsweise: $(R^1O)[(R^1O)_{1-x}(R^2)_{1-x}(R^2)Si(A)O]_aR^1$; $(R^1O)[(R^1O)_{1-x}(R^2)_xSi(A)O]_a$; $[(R^1O)_{1-x}(R^2)_xSi(A)O]_a$, $[(R^1O)_{1-x}(R^2)_xSi(A)O]_aR^1$, $(R^3O)[Si(Y)_2O]_c$; $[Si(Y)_2O]_cR^3$, $(R^3O)[Si(Y)_2O]_cR^3$; $[Si(Y)_2O]_c$; $(R^3O)[Si(B)(R^4)_y(OR^3)_{1-y}O]_bR^3$; $[Si(B)(R^4)_y(OR^3)_{1-y}O]_bR^3$, $[Si(B)(R^4)_y(OR^3)_{1-y}O]_b$; $(R^3O)[Si(B)(R^4)_y(OR^3)_{1-y}O]_bR^3$ die kettenförmige, cyclische und/oder vernetzte Strukturen bilden können und in Gegenwart von Tetraalkoxysilanen oder deren Hydrolyse und/oder Kondensationsprodukten können sich auch raumvernetzte Strukturen ausbilden. Die Strukturelemente mit freien Valenzen am Si-Atom sind kovalent über -O-Si und die freien Valenzen am O-Atom mit -Si verbrückten Bindungen anderer Strukturelemente, Alkyl- oder ggf. Wasserstoff abgesättigt. Die Strukturelemente können dabei eine regellose oder auch statistische Anordnung in den Kondensaten einnehmen, die, wie der Fachmann weiß, auch durch die Zugabereihenfolge und die Hydrolyse- und/oder Kondensationsbedingungen gesteuert werden können. Die allgemeine Formel I gibt nicht die tatsächlich vorliegende Struktur oder Zusammensetzung wider. Sie entspricht einer idealisierten Darstellungsmöglichkeit.

Die Zusammensetzung enthält bevorzugt Siloxanoligomere, die durch statistische und/oder regellose Homo- oder Co-Hydrolyse und/oder Homo- oder Co-Kondensation und/oder Blockkondensation der genannten Strukturelemente, basierend auf den erfindungsgemäß mit A oder B-Resten substituierten Alkoxysilanen der Formeln II, III und/oder IV, entstehen und/oder sich unter den gewählten Versuchsbedingungen bilden.

Das Substitutionsmuster der Strukturelemente gilt entsprechend auch für die nicht in idealisierter Form dargestellten kettenförmigen, cyclischen, vernetzten und/oder raumvernetzten Siloxanoligomere in der Zusammensetzung, wobei die Silyl-Gruppen der Siloxanoligomere unabhängig, wie folgt substituiert sein können: mit Y einem $OR^3$ oder in vernetzten und/oder raumvernetzten Strukturen unabhängig voneinander $OR^3$ oder $O_{1/2}$ - in einer Siloxanbindung, mit Reste A und/oder B, wie definiert, $R^3$ entspricht in den Siloxanoligomeren im Wesentlichen einem Alkyl-Rest, wie für $R^3$ definiert, wobei in vernetzten und/oder raumvernetzten Strukturen auch aus den Resten $OR^3$ jeweils unabhängig voneinander Siloxanbindungen mit $O_{1/2}$ gebildet werden können bzw. diese Reste unabhängig voneinander als $O_{1/2}$ vorliegen können und ggf. unabhängig mit $R^2$ und/oder $R^4$ und die wie definiert einem Alkyl-Rest mit 1 bis 15 C-Atomen entsprechen, mit $-OR^1$, $R^1$ kann ebenfalls wie definiert ein Alkyl-Rest mit 1 bis 4 C-Atomen sein.

Gegenstand der Erfindung ist auch eine Zusammensetzung enthaltend olefinisch funktionalisierte Siloxanoligomere, insbesondere mindestens ein Siloxanoligomer gemäß der idealisierten Formel I, die als weitere Komponenten mindestens ein organisches Lösemittel, ein organisches Polymer, Wasser, Salz, Füllstoff, Additiv, Pigment oder eine Mischung mindestens zwei der genannten Komponenten enthält. Die Komponenten können während der Herstellung der Zusammensetzung als auch zu einem späteren Zeitpunkt der Zusammensetzung zugesetzt werden.

Ein besonderer Vorteil der erfindungsgemäßen Zusammensetzung liegt darin, dass sie herstellbedingt einen sehr geringen Gehalt an Chlorid aufweist und somit bei einer Verarbeitung in Kabelmassen zu einer erheblichen Verbesserung der Brandschutzeigenschaften führt. Somit ist ein wesentlicher Vorteil der Zusammensetzung, dass sie als Sumpfprodukt, ggf. nach Abtrennung des Hydrolysealkohols und ggf. zugesetzten Lösemittels, direkt in wirtschaftlicher Weise erfindungsgemäß verwendet werden kann. Ein weiterer Vorteil der erfindungsgemäßen Zusammensetzungen ist, dass sie durch den erhöhten Anteil an T-Strukturen und gleichzeitig < 3.000 mPa s dynamische Viskosität, bei guter Verarbeitbarkeit im Extruder zu einer verbesserten Bruchdehnung der damit verarbeiteten Thermoplasten und Elastomeren führen und auch die Zugeigenschaften verbessert werden konnten.

Erfindungsgemäße Zusammensetzungen olefinisch funktionalisierter Siloxanoligomere weisen einen Gehalt an Alkohol in Bezug auf die Zusammensetzung, vorzugsweise an freiem Alkohol, von kleiner gleich 2 Gew.-% bis 0,0001 Gew.-% auf, insbesondere kleiner gleich 1,8 Gew.-%, bevorzugt kleiner gleich 1,5 Gew.-%, weiter bevorzugt kleiner gleich 1,0 Gew.-%, besonders bevorzugt kleiner gleich 0,5 Gew.-% bis zur Nachweisgrenze. Dabei weist eine Zusammensetzung diesen geringen Gehalt an Alkohol, vorzugsweise freien Alkohol, über mindestens 3 Monate, vorzugweise über einen Zeitraum von 6 Monaten auf. Diese geringen Gehalte an VOC können durch das erfindungsgemäße Verfahren sichergestellt werden, das besonders Chlor arme Zusammensetzungen von Siloxanoligomeren mit geringem Alkoxygehalt bereitstellt.

Ein besonderer Vorteil des erfindungsgemäßen Verfahrens zeigt sich in der Verwendung von Lösemitteln in Kombination mit sauren Hydrolyse- und/oder Kondensationskatalysatoren unter Bedingungen der homogenen Katalyse. Die erfindungsgemäß verwendeten sauren Katalysatoren sind in dem Lösemittel, den Alkoxysilanen und den hergestellten Siloxanoligomeren löslich. Zudem sind die Alkoxysilane als auch die Siloxanoligomere in dem Lösemittel löslich. Durch diese Maßnahmen wurde es erst jetzt möglich, ohne eine aufwendige Destillation besonders enge Molmassenverteilungen der Siloxanoligomere und zugleich hochreine und nahezu katalysatorfreie, insbesondere hydrolysierbares Chlor und/oder Gesamtchlorid freie Zusammensetzungen der Siloxanoligomere als Sumpfprodukt zu gewinnen.

Über die Zugabe und/oder die zugegebenen Menge an Lösemittel, vorzugsweise Alkohol, kann zusammen mit der Wassermenge das Molekulargewicht und die Molekulargewichtverteilung optimal eingestellt werden und auf diese Weise eine Bildung hochmolekularer Oligomere weitgehend vermieden werden. Die unerwünschten höhermolekularen Oligomere werden nur mit einem sehr geringen Gehalt gebildet.

Ein weiterer Aspekt der erfindungsgemäßen Zusammensetzung und des erfindungsgemäßen Verfahrens ist, dass das Verfahren ohne eine Verwendung von basischen Katalysatoren, insbesondere Stickstoff enthaltenden Verbindungen, oder sauren Schwefel enthaltenden Ionentauschern auskommt. Beide Katalysatoren führen zu Bedingungen der heterogenen Katalyse. So führt beispielsweise wässriger Ammoniak zur Bildung von Emulsionen und auch die Umsetzung an Sulfonsäure- oder Schwefelsäure-Gruppen aufweisenden Ionentauschern bedingen Bedingungen einer heterogenen Katalyse. Es wurde festgestellt, dass die Bedingungen einer heterogenen Katalyse zur Herstellung der gewünschten engen Molmassenverteilung von Siloxanoligomeren nicht geeignet sind. Folglich sind die erfindungsgemäßen Zusammensetzungen frei von sauren Schwefel enthaltenden Gruppen, insbesondere Schwefelsäure- oder Sulfonsäure-Gruppen und/oder frei von Stickstoff enthaltenden Verbindungen, insbesondere von Stickstoff enthaltenden Verbindungen, die über basische Katalysatoren eingetragen werden. Ebenso kann in dem erfindungsgemäßen Verfahren auf die Verwendung von Metalloxiden ggf. in Kombination mit einer Säure verzichtet werden, daher sind die erfindungsgemäßen Zusammensetzungen frei von metallischen Rückständen, die durch die Zugabe von Metalloxiden eingetragen werden, wie insbesondere Kupferoxide, Eisenoxide, Aluminiumoxide, Kupferhalogenide, Eisenhalogenide, Kupferhydroxid, Eisenhydroxid, Aluminiumhydroxid. Erfindungsgemäße Zusammensetzungen weisen daher vorzugsweise nur intrinsisch vorkommende Metalle auf, bevorzugt ist der Metallgehalt kleiner 0,001 Gew.-% bis 0,1 ppm-Gew. Entsprechend kann in dem erfindungsgemäßen Verfahren auf die Zugabe von basischen Verbindungen, wie Calciumcarbonat zur Neutralisation verzichtet werden. Folglich enthalten die erfindungsgemäßen Zusammensetzungen kein zusätzlich zugesetztes Calcium, vorzugsweise enthalten sie kleiner gleich 1 Gew.-%, insbesondere kleiner gleich 0,1 Gew.-% bis 0,1 ppm-Gew. Calcium. Somit sind die Zusammensetzungen und Verfahren frei von Stickstoff enthaltenden Verbindungen, Calcium enthaltenden Verbindungen, frei von Metall enthaltenden Verbindungen, insbesondere Metalloxide, und frei von Schwefel enthaltenden Verbindungen, insbesondere sauren Schwefel Verbindungen.

Ebenfalls Gegenstand der Erfindung ist ein Verfahren zur Herstellung einer Zusammensetzung enthaltend olefinisch funktionalisierte Siloxanoligomere. sowie insbesondere auch Zusammensetzungen erhältlich nach diesem Verfahren, indem

(i) (mindestens) ein olefinisch funktionalisiertes Alkoxysilan der allgemeinen Formel II,

$$A\text{-}Si(R^2)_x(OR^1)_{3\text{-}x} \qquad (II),$$

wobei in Formel II A einem olefinischen Rest entspricht, der insbesondere ausgewählt ist aus einer linearen, verzweigten oder cyclischen Alkenyl- oder Cycloalkenyl-alkylen-funktionellen Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten und/oder cyclischen Alkyl-Rest mit 1 bis 4 C-Atomen entsprechen,
(ii) in Gegenwart eines Hydrolyse- und/oder Kondensationskatalysators, insbesondere von HCl, gesättigten oder ungesättigten organischen Säuren, wie Ameisensäure oder Essigsäure, und/oder Fettsäuren, beispielsweise Myristinsäure, und/oder multifunktionelle organische Säuren, wie Zitronensäure, Fumarsäure,

(i.1) optional mit (mindestens) einem Alkoxysilan der Formel III,

$$B\text{-}Si(R^4)_y(OR^3)_{3\text{-}y} \qquad (III),$$

wobei in Formel III B einem gesättigten Kohlenwasserstoff-Rest, $R^3$ jeweils unabhängig voneinander einem linearen, verzweigten und/oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist, und
(i.2) optional mit (mindestens) einem Tetraalkoxysilan der Formel IV, wobei in Formel IV $R^3$ jeweils unabhängig voneinander ein linearer, verzweigter und/oder cyclischer Alkyl-Rest mit 1 bis 4 C-Atomen ist,

$$Si(OR^3)_4 \qquad (IV),$$

und

(iii) mit einer definierten Menge Wasser von größer gleich 1,1 bis 1,59 Mol, vorzugsweise 1,0 bis 1,5 Mol Wasser je Mol Silizium-Atome der eingesetzten Alkoxysilane, d. h. mindestens der Formel I und ggf. zusätzlich ausgewählt aus den Formeln III und IV, gegebenenfalls in Gegenwart eines Lösemittels, vorzugsweise Alkohol, zu Oligomeren umgesetzt werden insbesondere mit x = 0 und y = 0, und
(iv) der Hydrolysealkohol und das optional vorliegende Lösemittel im Wesentlichen abgetrennt werden, und, insbesondere eine Zusammensetzung enthaltend ein Siloxanoligomer erhalten wird,
(v) insbesondere mit einem Gehalt an Chlor, insbesondere Gesamtchlorid, kleiner gleich 250 mg/kg, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg, ferner bevorzugt kleiner gleich 35 mg/kg, wobei vorzugsweise der Gehalt an hydrolysierbarem Chlorid kleiner gleich 8 mg/kg, vorzugsweise kleiner gleich 5 mg/kg ist, und
(vi) wobei größer gleich 10 % der Silizium-Atome im olefinisch funktionalisierten Siloxanoligomer in Bezug auf die Gesamtsumme an Silizium-Atomen im Siloxanoligomer als T-Struktur vorliegen, und optional
(vii) wobei die Zusammensetzung enthaltend olefinisch funktionalisierte Siloxanoligomere als Sumpfprodukt erhalten bzw. gewonnen wird.

Vorteilhaft wird die Zusammensetzung im Anschluss an Schritt (iv) oder vorzugsweise als letzte Maßnahme in Schritt (iv) erhalten oder gewonnen. Vorzugsweise liegt die Zusammensetzung als Sumpfprodukt vor. Erfindungsgemäß wird die Zusammensetzung als Sumpfprodukt, ggf. nach Abtrennung des Hydrolysealkohols und ggf. zugesetzten Lösemittels gewonnen.

Gemäß einer bevorzugten Alternative wird (i), das mindestens eine Alkoxysilan der Formel II in Schritt (ii) in Gegenwart eines Hydrolyse- und/oder Kondensationskatalysators mit (i.1) mindestens einem Alkoxysilan der Formel III umgesetzt, Gemäß einer weiteren bevorzugten Alternative wird (i), das mindestens eine Alkoxysilan der Formel II in Schritt (ii) in Gegenwart eines Hydrolyse- und/oder Kondensationskatalysators mit (i.2) mindestens einem Alkoxysilan der Formel IV umgesetzt, Gemäß einer weiteren bevorzugten Alternative wird (i), das mindestens eine Alkoxysilan der Formel II in Schritt (ii) in Gegenwart eines Hydrolyse- und/oder Kondensationskatalysators mit (i.1) mindestens einem Alkoxysilan der Formel III und (i.2) mindestens einem Alkoxysilan der Formel IV umgesetzt. Zweckmäßig können auch in (iii) als definierte Menge Wasser größer gleich 1,0 bis 1,6 Mol Wasser je Mol Silizium-Atome der eingesetzten Alkoxysilane verwendet werden.

Ebenfalls Gegenstand der Erfindung ist ein Verfahren zur Herstellung einer Zusammensetzung enthaltend olefinisch funktionalisierte Siloxanoligomere, und insbesondere auch Zusammensetzungen erhältlich nach diesem Verfahren, mit den Schritten (i), (ii), (iii) und (iv) und optional (i.1) und/oder (i.2), wobei eine Zusammensetzung enthaltend olefinisch funktionalisierte Siloxanoligomere gemäß (vi) erhalten wird, wobei insbesondere größer gleich 10 % der Silizium-Atome im olefinisch funktionalisierten Siloxanoligomer in Bezug auf die Gesamtsumme an Silizium-Atomen im Siloxanoligomer als T-Struktur vorliegen, und (vii) wobei die Zusammensetzung enthaltend olefinisch funktionalisierte Siloxanoligomere im Anschluss an Schritt (iv) oder (v) als Sumpfprodukt gewonnen wird. Der erhältliche Chlorgehalt in der Zusammensetzung ist nach dieser Ausführungsvariante des Verfahrens nur optional kleiner gleich 250 mg/kg. Wobei Zusammensetzungen nach dieser Ausführungsvariante die vorgenannten beschriebenen Molmassenverteilungen unabhängig vom Chlorgehalt aufweisen und insbesondere auch die genannten TGA Werte aufzeigen. Demnach sind ebenfalls Gegenstand der Erfindung Zusammensetzungen von olefinischen Siloxanoligomeren, unabhängig vom Chlor- oder Gesamtchloridgehalt, die größer gleich 85 %, bevorzugt 90 % (Flächen-%, GPC) ein Molekulargewicht (Mw) kleiner 1000 g/mol aufweisen. Insbesondere in Kombination mit einem Mw größer gleich 30 % (Flächen-%, GPC, Mw) von 500 bis 750 (rel. Mw), bevorzugt weisen größer gleich 30 % bis kleiner gleich 50 % ein Mw von 500 bis 750 auf, besonders bevorzugt größer gleich 35 % bis kleiner gleich 45 %. Alle Angaben sind immer in Bezug auf die Gesamtzusammensetzung zu verstehen.

Gemäß einer bevorzugten Ausführungsform wird ein Alkenyl-funktionalisiertes Alkoxysilan der allgemeinen Formel II gegebenenfalls zusammen mit einem Alkylalkoxysilan der allgemeinen Formel III in Gegenwart eines Kondensationskatalysators umgesetzt. Weiter bevorzugt werden jeweils ein Alkenyltrialkoxysilan und gegebenenfalls ein Alkyltrialkoxysilan umgesetzt. Die Umsetzung kann optional in Gegenwart eines Lösemittels erfolgen, vorzugsweise wird der korrespondierende Alkohol des Alkoxysilans eingesetzt. Besonders vorteilhaft können in dem erfindungsgemäßen Verfahren pro Volumeneinheit Alkoxysilan, insbesondere Trialkoxysilan, 0,001 bis 5 Volumeneinheiten des korrespondierenden Alkohols eingesetzt werden. Weiter bevorzugt werden 0,25 bis 1 Volumeneinheiten je Volumeneinheit Trialkoxysilan eingesetzt.

Gemäß einer besonders bevorzugten Verfahrensvariante wird in Schritt (iii) mit einer definierten Menge Wasser in Gegenwart eines Alkohols in einer Menge von je 0,05 bis 2,5 Volumeneinheiten Alkohol je Volumeneinheit Alkoxysilan umsetzt, insbesondere mit 0,1 bis 2,0 Volumeneinheiten Alkohol je Volumeneinheit Alkoxysilan, bevorzugt 0,2 bis 1,5, besonders bevorzugt 0,2 bis 1,0 oder 0,2 bis 0,9. Vorzugweise 0,5 plus/minus 0,4 Volumeneinheiten Alkohol je Volumeneinheit Alkoxysilan.

Dabei werden vorzugsweise bei einer Umsetzung von VTMO oder VTEO zur Verdünnung plus Dosierung 0,5 bis 2,5, 0,5 bis 2,0 und/oder in Schritt (iv) mindestens einmal während Schritt (iv) oder nachfolgend eine definierte Menge Alkohol nachdosiert und abgetrennt. Zur Nachdosierung in (iv) oder nachfolgend können mehrfach ebenfalls 0,001 bis 5 Volumeneinheiten, insbesondere 0,1 bis 2,5 Volumeneinheiten Alkohol je Volumeneinheit Alkoxysilan zudosiert werden. Diese Maßnahmen können beliebig wiederholt werden, vorzugsweise 1 bis 10 mal, besonders bevorzugt 1 bis 5 mal.

Dabei kann der zuvor abdestillierte Alkohol, insbesondere nach einer Aufreinigung zur Abtrennung von Chloriden und Wasser, wieder eingesetzt werden. Dies kann vorzugsweise in Schritt (30.i) erfolgen, in dem mindestens einmal, vorzugsweise zwei bis sechsmal, während der destillativen Aufarbeitung eine definierte Menge Alkohol zugegeben wird wie nachfolgend erläutert. Alternativ können vorzugsweise 1,0 bis 1,5 Mol Wasser je Mol Silizium-Atome der eingesetzten Alkoxysilane eingesetzt werden.

Erfindungsgemäß werden als Hydrolyse- und/oder Kondensationskatalysator unter Normalbedingungen gasförmige, saure Katalysatoren, insbesondere HCl, eingesetzt, die in wässriger oder alkoholischer Phase gelöst werden können.

Das einsetzte Lösemittel und/oder der eingesetzte Alkohol sind wasserfrei, insbesondere werden das Lösemittel oder der Alkohol mit einem Wassergehalt von kleiner gleich 1 Gew.-ppm eingesetzt. Bei Lösemitteln mit einem Gehalt an Wasser ist dieser Wassergehalt bei der Umsetzung zu berücksichtigen.

Vorzugsweise wird als olefinisch funktionalisiertes Alkoxysilan ein Silan der allgemeinen Formel II eingesetzt,

$$A\text{-}Si(R^2)_x(OR^1)_{3-x} \qquad (II)$$

mit A gleich eine lineare, verzweigte oder cyclische Alkenyl- oder Cycloalkenyl-alkylen-funktionelle Gruppe mit jeweils 2 bis 18 C-Atomen, insbesondere mit 2 bis 16 C-Atomen, bevorzugt mit 2 bis 8 C-Atomen, weiter bevorzugt eine Alkenyl-Gruppe mit ein bis zwei Doppelbindungen, bevorzugt eine Vinyl-, Allyl-, Butenyl-, Pentenyl-, Hexenyl-, Ethylhexenyl-, Heptenyl-, Octenyl-, Cyclohexenyl-C1 bis C8-alkylen-, vorzugsweise Cyclohexenyl-2-ethylen-, wie 3'-Cyclohexenyl-2-ethylen-, und/oder Cyclohexadienyl-C1 bis C8-alkylen-, besonders vorzugsweise eine Cyclohexadienyl-2-ethylen-Gruppe, insbesondere ist x gleich 0, und $R^1$ unabhängig ein linearer, verzweigter und/oder cyclischer Alkyl-Rest mit 1 bis 4 C-Atomen, insbesondere eine Methyl-, Ethyl- oder Propyl-Gruppe.

Als Alkoxysilan der Formel III wird vorzugsweise ein Alkoxysilan mit einem unsubstituierten Kohlenwasserstoff-Rest B,

$$B\text{-}Si(R^4)_y(OR^3)_{3-y} \qquad (III)$$

eingesetzt, der ein linearer, verzweigter oder cyclischer Alkyl-Rest mit 1 bis 16 C-Atomen ist, insbesondere eine Methyl-, Ethyl-, Propyl- i-Butyl-, Octyl- oder Hexadecyl-Gruppe. Und $R^2$ und $R^4$ können unabhängig voneinander in Formel II und III vorzugsweise Methyl-, Ethyl-, Propyl-, Butyl, Pentyl, Hexyl-, Cyclohexyl-, Heptyl-, Octyl-, Nonyl- sowie weitere dem Fachmann bekannte Alkyl-Gruppen mitsamt den Strukturisomeren sein. Ein bevorzugtes Alkoxysilan der Formel III weist einen unsubstituierten Kohlenwasserstoff-Rest B ausgewählt aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe auf, mit y gleich 0 oder 1, $R^4$ einem linearen, verzweigten oder cyclischen Alkyl-Rest mit 1 bis 15 C-Atomen, wie vorstehend definiert, und wobei $R^3$ unabhängig eine Methyl-, Ethyl- oder Propyl-Gruppe ist. Gemäß einer alternativen bevorzugten Ausführungsform werden als Rest B unsubstituierte Kohlenwasserstoffe mit verzweigten und/oder cyclischen Alkylresten mit 3 bis 16 C-Atomen eingesetzt. Gemäß einer weiteren bevorzugten Alternative der Erfindung werden lineare Alkyl-Reste mit 1 bis 7 C-Atomen als unsubstituierter Kohlenwasserstoff-Rest B eingesetzt.

Ebenfalls Gegenstand der Erfindung sind Verfahren, in denen im olefinisch funktionalisierten Alkoxysilan der allgemeinen Formel II x gleich 0 ist und optional in dem mit einem gesättigten Kohlenwasserstoff-Rest funktionalisierten Alkoxysilan der Formel III y gleich 0 ist. Alternativ kann x = 0 und y = 1 sein oder x = 1 und y = 0.

Zumindest wird partiell hydrolysiert und, insbesondere zumindest partiell co-kondensiert, bevorzugt werden die kondensationsfähigen, partiell hydrolysierten Alkoxysilane im Wesentlichen vollständig kondensiert. Besonders bevorzugt findet nur in dem Maße eine partielle Hydrolyse und Kondensation statt, wie dies zur Herstellung der Oligomere eines bevorzugten Oligomerisierungsgrades gewünscht ist.

Erfindungsgemäß wird der Hydrolysealkohol entfernt, vorzugsweise durch Destillation und die erfindungsgemäße Zusammensetzung erhalten. Eine besonders schonende Destillation des Hydrolysealkohols und/oder des Lösemittels findet unter Vakuum statt. Je nach Verfahrensführung kann ein besonders wirtschaftliches Verfahren ohne den Zusatz eines Lösemittels durchgeführt werden. Erfindungsgemäß muss die so hergestellte Zusammensetzung nach Entfernung des Hydrolysealkohols und ggf. Lösemittels selbst nicht weiter aufgereinigt, insbesondere nicht selbst destilliert, werden, um für die erfindungsgemäßen Verwendungen geeignet zu sein. Je nach Aufbereitung kann die Zusammensetzung nach Entfernung des Hydrolysealkohols ggf. filtriert oder dekantiert werden. Daher ist das erfindungsgemäße Verfahren deutlich wirtschaftlicher als bekannte Verfahren, in denen das Oligomer, um zur weiteren Anwendung geeignet zu sein, destillativ aufgereinigt werden muss.

Gegenstand der Erfindung ist auch ein Verfahren, in dem jeweils unabhängig das mindestens eine olefinisch funktionalisierten Alkoxysilan der allgemeinen Formel II ausgewählt ist aus Vinyltriethoxysilan, Allyltriethoxysilan, Butenyltriethoxysilan, Pentenyltriethoxysilan, Hexenyltriethoxysilan, Ethylhexenyltriethoxysilan, Heptenyltriethoxysilan, Octenyltriethoxysilan, Cyclohexenyl-C1 bis C8-alkylentriethoxysilan, Cyclohexenyl-2-ethylentriethoxysilan, 3'-Cyclohexenyl-2-ethylentriethoxysilan, Cyclohexadienyl-C1 bis C8-alkylentriethoxysilan, Cyclohexadienyl-2-ethylentriethoxysilan, Vinyltrimethoxysilan, Allyltrimethoxysilan, Butenyltrimethoxysilan, Pentenyltrimethoxysilan, Hexenyltrimethoxysilan, Ethylhexenyltrimethoxysilan, Heptenyltrimethoxysilan, Octenyltrimethoxysilan, Cyclohexenyl-C1 bis C8-alkylentrimethoxysilan, Cyclohexenyl-2-ethylentrimethoxy-silan, 3'-Cyclohexenyl-2-ethylentrimethoxysilan, Cyclohexadienyl-C1 bis C8-alkylentrimethoxysilan und Cyclohexadienyl-2-ethylentrimethoxysilan, und jeweils unabhängig

- das mindestens eine Alkoxysilan der Formel III jeweils unabhängig ausgewählt ist aus Methyltriethoxysilan, Ethyltriethoxysilan, n-Propyltriethoxysilan, iso-Propyltriethoxysilan, Butyltriethoxysilan, n-Butyltriethoxysilan, i- Butyltriethoxysilan, Hexyltriethoxysilan, n-Hexyltriethoxysilan, iso-Hexyltriethoxysilan, Heptyltriethoxysilan, Octyltriethoxysilan, n-Octyltriethoxysilan, iso-Octyltriethoxysilan, Undecyltriethoxysilan, Decyltriethoxysilan, Nonadecyltriethoxysilan, Dodecyltriethoxysilan, $C_{13}H_{27}$-Triethoxysilan, $C_{14}H_{29}$-Triethoxysilan oder $C_{15}H_{31}$-Triethoxysilan, Hexadecyltriethoxysilan, Methyltrimethoxysilan, Ethyltrimethoxysilan, n-Propyltrimethoxysilan, iso-Propyltrimethoxysilan Butyltrimethoxysilan, n-Butyltrimethoxysilan, i-Butyltrimethoxysilan, Hexyltrimethoxysilan, n-Hexyltrimethoxysilan, iso-Hexyltrimethoxysilan, Heptyltrimethoxysilan, Octyltrimethoxysilan, n-Octyltrimethoxysilan, iso-Octyltrimethoxysilan, Undecyltrimethoxysilan, Decyltrimethoxysilan, Nonadecyltrimethoxysilan, Dodecyltrimethoxysilan, $C_{13}H_{27}$-Trimethoxysilan, $C_{14}H_{29}$-Trimethoxysilan oder $C_{15}H_{31}$-Trimethoxysilan und Hexadecyltrimethoxysilan sowie optional Umesterungsprodukte und jeweils unabhängig

- das Alkoxysilan der Formel IV ausgewählt ist aus Tetraethoxysilan und Tetramethoxysilan. Als auch deren Umesterungsprodukte umfassend Ethoxy- und Methoxy-Gruppen.

Gemäß dem erfindungsgemäßen Verfahren wird eine Zusammensetzung umfassend Siloxanoligomere erhalten, die nach Durchführung der Schritte i, ii, iii und iv sowie gegebenenfalls der Schritte i.1 und/oder i.2, bereits den erfindungsgemäßen geringen Gehalt an Chlor, insbesondere Gesamtchlorid, kleiner gleich 250 mg/kg aufweist, insbesondere kleiner gleich 150 mg/kg, bevorzugt kleiner gleich 100 mg/kg, besonders bevorzugt kleiner gleich 75 mg/kg, weiter bevorzugt kleiner gleich 50 mg/kg, ferner bevorzugt kleiner gleich 35 mg/kg, wobei vorzugsweise der Gehalt an hydrolysierbarem Chlorid kleiner 8 mg/kg, vorzugsweise kleiner gleich 5 mg/kg ist, und bei der vorzugsweise größer gleich 5 % der Silizium-Atome im olefinisch funktionalisierten Siloxanoligomer in Bezug auf die Gesamtsumme an Silizium-Atomen im Siloxanoligomer als T-Struktur vorliegen.

Die Umsetzung in Gegenwart einer definierten Menge Wasser von größer 1,0 Mol Wasser je Mol Silizium-Atom erfolgt bevorzugt mit einer definierten Menge Wasser von größer gleich 1,05 bis 1,60 Mol Wasser je Mol Silizium-Atome der eingesetzten Alkoxysilane der Formel II und gegebenenfalls mindestens einem Silan der Formel III und/oder der Formel IV, insbesondere mit 1,1 bis 1,58 Mol Wasser, bevorzugt größer gleich 1,2 bis 1,58 Mol Wasser, besonders bevorzugt größer gleich 1,25 bis 1,57 Mol Wasser je Mol Silizium-Atome der eingesetzten Alkoxysilane der Formel II und gegebenenfalls der Formel III und/oder der Formel IV. Ebenfalls gelten hier alle in dem offenbarten Bereich eingeschlossenen Zahlenwerte an Mol Wasser als offenbart, insbesondere bis zur zweiten Nachkommastelle, wie 1,06; 1,07; 1,08, 1,09, 1,11; 1,12; 1,13; 1,14; 1,15; 1,16; 1,17; 1,18, 1,19; 1;21; 1,22; 1,23; 1,24; 1,26, 1,27, 1,28; 1,29; 1,30; 1,31; 1,32; 1,33; 1,34; 1,35; 1,36; 1,37; 1,38; 1,39; 1,40; 1,41; 1,42; 1,43, 1,44; 1,45; 1,46; 1,47; 1,48; 1,49; 1,50; 1,51; 1,52; 1,53; 1,54; 1,55; 1,56. Das Wasser ist vorzugsweise vollentsalzt. Dem Fachmann ist dabei klar, dass das Wasser sowohl vorgelegt, portionsweise, kontinuierlich oder zusammen mit einem oder allen Silanen dem Verfahren zugesetzt werden kann. Bevorzugt wird das Wasser kontinuierlich oder mit mindestens einer Unterbrechung über einen Zeitraum von kleiner 1 Minute bis 100 Minuten dosiert und die Umsetzung der Alkoxysilane vorzugsweise bei Reaktionstemperaturen im Bereich vorzugsweise 40 °C bis 80 °C, weiter bevorzugt im Bereich von 50 bis 80 °C, insbesondere bei einem pH kleiner 7 durchgeführt. Die Wassergehalte von zugesetzten Lösemitteln, wie Alkohol sind in dem Verfahren als Wasser zu berücksichtigen.

Generell kann das Wasser oder eine Wassermenge, gemäß Punkt/Schritt iii des Verfahrens (29.i, vgl. Anspruch 29), kontinuierlich oder mindestens mit einer Unterbrechung über einen Zeitraum von 1 bis 1.000 Minuten zudosiert werden und eine Temperatur im Reaktionsgemisch auf 5 bis 90°C eingestellt werden, insbesondere 37 bis 88 °C, vorzugsweise 40 bis 85 °C, besonders bevorzugt 45 bis 83 °C, weiter bevorzugt 50 bis 80 °C, wobei vorzugsweise der pH-Wert bei kleiner gleich 7 liegt, optional wird das Wasser zusammen mit dem Katalysator und optional einem Lösemittel, insbesondere mit einem Alkohol, zugegeben. Die Umsetzung kann dann vorzugsweise so erfolgen, dass (29.ii, vgl. Anspruch 29) diese Mischung aus (29.i, vgl. Anspruch 29), d.h.Reaktionsgemisch optional für mindestens 10 Minuten bis 36 Stunden, insbesondere von 10 Minuten bis 8 Stunden (h), bei 5 bis 80 °C, bevorzugt bei 40 bis 80 °C behandelt wird bzw. weiter umgesetzt wird, bevorzugt unter Durchmischung, gegebenenfalls kann die Reaktionsmischung auch beim Abkühlen nachreagieren. Zur Einstellung des Molekulargewichts kann dem Verfahren ein Alkoxytrialkylsilan, insbesondere Alkoxytrimethylsilan zugesetzt werden. Die so erhaltene Zusammensetzung kann dann dekantiert oder zur destillativen Entfernung des Alkohols, wie des Hydrolysealkohols, erwärmt werden. Vorzugsweise wird aus diesem Rohprodukt der Alkohol, optional einschließlich Katalysator, insbesondere HCl, unter Erwärmen und vermindertem Druck durch Destillation entfernt.

Nach einer bevorzugten Ausführungsform wird in dem Verfahren gemäß Punkt iv der Hydrolysealkohol und das gegebenenfalls vorliegende Lösemittel, insbesondere der zugesetzte Alkohol, destillativ abgetrennt und vorzugsweise (30.i, vgl. Anspruch 30) wird mindestens einmal, vorzugsweise zwei bis sechsmal, während der destillativen Aufarbeitung eine definierte Menge Alkohol zugegeben und/oder (30.ii, vgl. Anspruch 30) vor oder während der destillativen Abtrennung des Hydrolysealkohols und des optional vorliegenden Lösemittels, insbesondere des Alkohols, eine definierte Menge eines Reduktionsmittels, insbesondere eines anorganischen Reduktionsmittels, wie Alkalimetall, Erdalkalimetall, Aluminium oder ein Metallhydrid, oder eine Base, wie vorzugsweise HMDS oder ein anderes Amin oder ein Alkalialkoholat, zugesetzt, und nachfolgend wird das olefinisch funktionalisierte Siloxanoligomer, das als Sumpfprodukt vorliegt, filtriert oder dekantiert und/oder das olefinische Siloxanoligomer wird mit einem Ionentauscher in Kontakt gebracht.

Gemäß der ersten Alternative können durch das Filtrieren und/oder Dekantieren gebildete Niederschläge oder Ausflockungen im Wesentlichen von der Zusammensetzung umfassend das Siloxanoligomer abgetrennt werden. Bevorzugt wird eine definierte Menge eines Reduktionsmittels zugesetzt, insbesondere eines anorganischen Reduktionsmittels, besonders bevorzugt eines metallischen Reduktionsmittels, wie Alkalimetall, bevorzugt Natrium, oder als Erdalkalimetall, bevorzugt Magnesium oder Calcium, oder Aluminium, und als Metallhydrid, bevorzugt Li-Aluminiumhydrid, Aluminiumhydrid, oder als Base vorzugsweise Ammoniakgas, LDA (Li-Diisopropylamid), Li-Isopropylhexylamid, Hexamethyldisilazan, und als Alkalialkoholat, wie Na- bzw. K-Methanolat oder Na- bzw. K-Ethanolat, Alkalialkylat, wie Butyl-Li eingesetzt. Auch dem Fachmann bekannte Metallhydride wie NaH, oder auch Lithiumaluminiumhydrid, oder Basen, die mit dem Hydrogenchlorid schwerlösliche Niederschläge bilden können in dem Verfahren zusätzlich eingesetzt werden, um den Chlor(id)gehalt der Zusammensetzung weiter zu senken. Für das Verfahren geeignete Basen sollten bei einer Reaktion mit dem Katalysator, bspw. HCl, oder mit organisch gebundenem Chlor, wie Cl-Si, kein Wasser bilden.

Der bereits vorhandene und/oder bei der Umsetzung entstandene Alkohol wird in allen erfindungsgemäßen Verfahrensvarianten im Wesentlichen, bevorzugt vollständig, aus dem Reaktionsgemisch entfernt. Die destillative Abtrennung des Alkohols wird vorzugsweise unter vermindertem Druck durchgeführt. Dabei entspricht die destillative Abtrennung des Alkohols der Aufarbeitung der Zusammensetzung, denn im Anschluss an diesen Schritt wird die Zusammensetzung enthaltend Siloxanoligomere mit einem definierten Gehalt an Gesamtchlorid , insbesondere als Sumpfprodukte gewonnen bzw. erhalten, vorzugsweise wird sie mit einer definierten Polydispersität erhalten, vorzugsweise mit D = 1,10 bis 1,42, besonders bevorzugt D = 1,10 bis 1,21, insbesondere für Siloxane, die aus Alkoxysilanen der Formel II abgeleitet sind. Alternativ kann die Polydispersität für Siloxane, die aus Alkoxysilanen der Formel II und III abgeleitet sind D = 1,20 bis 1,43 betragen. Die destillative Entfernung des Alkohols wird vorzugsweise solange durchgeführt, bis im Kopf der Kolonne eine Temperatur erreicht ist, die der Siedetemperatur von Wasser oder der der Siloxanoligomere entspricht. Alternativ, bis ein Alkoholgehalt von kleiner gleich 1,0 Gew.-%, bevorzugt kleiner gleich 0,5 Gew.-% nachgewiesen wird. In der Regel ist die resultierende erfindungsgemäße Zusammensetzung dann im Wesentlichen lösemittelfrei, insbesondere alkoholfrei. Die so erhaltene Zusammensetzung entspricht bevorzugt direkt der erfindungsgemäßen Zusammensetzung, und muss vorzugsweise nicht selbst weiter aufgereinigt werde.

Das erfindungsgemäße Verfahren kann diskontinuierlich oder kontinuierlich betrieben werden. Vor oder auch nach dem Entfernen des Alkohols kann der Zusammensetzung mindestens ein Verarbeitungshilfsmittel wie Silikonöl, wie Polydimethylsiloxan, Paraffin, Paraffinöl oder eine Mischung enthaltend eines dieser Verarbeitungshilfsmittel zugesetzt werden.

Nach einer bevorzugten Variante des Verfahrens werden die Alkoxysilane der allgemeinen Formeln II, III und/oder IV in Gegenwart eines sauren Katalysators, insbesondere mit Chlorwasserstoff, zumindest partiell hydrolysiert und kondensiert. Die Hydrolyse- und Kondensation kann bei Bedarf auch in Gegenwart von HCl und einem Co-Katalysator erfolgen. Als Co-Katalysatoren kommen Fettsäuren in Betracht. Alternativ können auch HCl und gesättigte oder ungesättigte organische Säuren, wie Ameisensäure, Essigsäure, und/oder Fettsäuren, ggf. auch Myristinsäure, und/oder multifunktionelle organische Säuren, wie Zitronensäure, Fumarsäure, als Katalysator oder als Co-Katalysator mit HCl eingesetzt werden.

Weiter ist es verfahrensgemäß bevorzugt, das Silan der Formel II und das Silan der Formel III im Verhältnis 1:0 bis 1:8 einzusetzen und/oder das Silan der Formel II im Verhältnis zum Silan der Formel IV im Verhältnis 1:0 bis 1:0,22, vorzugsweise 1:0 bis 1 : 0,20, insbesondere 1 : 0 bis 1 : 0,15, ebenfalls bevorzugt 1 : 0 bis 1 : 0,10, besonders bevorzugt 1 : 0 bis 1 : 0,05 einzusetzen, vorzugsweise werden das Silan der Formel II und das Silan der Formel III im Verhältnis von etwa 1 : 0 oder etwa im Verhältnis 1 : 1 oder im Verhältnis von 1 : 0 bis 1 : 2, vorzugsweise 1 : 0 bis 1 : 1 eingesetzt. Alternativ bevorzugt ist auch ein Verfahren in dem das Silan der Formel II und das Silan der Formel IIII im Verhältnis von 1 : 0 bis 1 : 2, vorzugsweise um 1 : 1, eingesetzt werden und/oder das Silan der Formel II im Verhältnis zum Silan der Formel IV im Verhältnis von 1 : 0 bis 1 : 0,20, bevorzugt 1 : 0 bis 1 : 0,10, besonders bevorzugt 1 : 0 bis 1 : 0,5 eingesetzt werden, ebenfalls bevorzugt im Verhältnis von 1 : 0,10 bis 1 : 0,05 oder um 1 : 0,1. Die in den genannten Verhältnissen hergestellten Siloxanoligomere zeigen anwendungstechnisch besonders homogene Eigenschaften, das Silan der Formel IV wird vorzugsweise für eine stärkere Vernetzung im Oligomer oder als auch des Oligomers mit einem Substrat eingesetzt.

Besonders bevorzugt werden nach einer Alternative das Silan der Formel II und das Silan der Formel III etwa im Verhältnis 1:1 eingesetzt, gemäß einer weiteren bevorzugten Alternative werden das Silan der Formel II und das Silan der Formel IV im Verhältnis von etwa 1 : 0,1 eingesetzt.

Gemäß einer Ausführungsform wird eine erfindungsgemäße Umsetzung des olefinisch funktionalisierten Alkoxysilans der Formel II, und gegebenenfalls der Silane III und/oder IV mit einem Hydrolyse- und Kondensationskatalysator in Gegenwart einer definierten Menge Wasser von größer 1,0 bis 1,6 Mol Wasser je Mol Silizium-Atome der Alkoxysilane und der 0,2- bis 8-fachen Gewichtsmenge Alkohol in Bezug auf die Gewichtsmenge an eingesetzten Silanen durchgeführt. Gemäß einer Alternative können auch 0,0001 bis 5 Volumeneinheiten Alkohol je Volumeneinheit Silan der Formeln II, III und/oder IV zugesetzt werden. Bevorzugt wird nur eine geringe Gewichtsmenge an Alkohol von 0,2 bis 0,6, besonders bevorzugt von 0,2 bis 0,5 in dem erfindungsgemäßen Verfahren in Bezug auf die Silane der Formel II, III und/oder IV eingesetzt.

Bevorzugte Alkohole entsprechen dem Hydrolysealkohol, der durch die zumindest teilweise Hydrolyse- und/oder Kondensation entsteht. Zu nennen sind Ethanol oder Methanol. Dem Fachmann ist klar, dass die Umsetzung auch in Gegenwart eines anderen üblichen Lösemittels erfolgen kann, wobei jene, die sich leicht und vorzugsweise vollständig abdestillieren lassen bevorzugt sind, dies können beispielsweise aber nicht abschließend Ether, Ketone, Kohlenwasserstoffe oder Ester sein. Zweckmäßige Lösemittel können aber auch Essigester, THF, Ketone, Ether oder Kohlenwasserstoffe sein. Dem Fachmann ist klar, dass aus ökonomischen und wirtschaftlichen Gründen als Lösemittel ein Alkohol eingesetzt wird, der sich auch als Hydrolysealkohol bildet. Mischungen von Alkoholen können daher grundsätzlich auch eingesetzt werden. In allen Verfahrensvarianten werden vorzugsweise das Lösemittel und der bei der Umsetzung entstandene Alkohol destillativ aus dem Reaktionsgemisch entfernt.

Nach einer weiteren bevorzugten Verfahrensvariante wird der Oligomerisierungsgrad von mindestens 20 Gew.-% der Siloxanoligomere mit n gleich Anzahl der Silizium-Atome so eingestellt, dass bei ihnen n größer gleich 4, optional größer gleich 8 ist. Weiter bevorzugt werden nach dem erfindungsgemäßen Verfahren insbesondere mehr als 5 % der olefinisch funktionalisierten Silizium-Atome als T-Struktur erhalten, vorzugsweise können dies auch mehr als 7,5 %, bevorzugt größer 10%, besonders bevorzugt größer 11 % oder auch größer 15 % und auch über 22 %sein, zusätzlich oder alternativ bevorzugt liegen auch mehr als 5 % der mit einem gesättigten Kohlenwasserstoff funktionalisierten Silizium-Atome im Siloxanoligomer als T-Struktur vor.

In dem erfindungsgemäßen Verfahren wird vorzugsweise die Viskosität der Zusammensetzung auf kleiner gleich 1.000 mPa s, bevorzugt auf kleiner gleich 740 mPa s, besonders bevorzugt auf kleiner gleich 500 bis etwa 5 mPa s eingestellt.

Weiter kann in dem Verfahren die Zusammensetzung enthaltend olefinische Siloxanoligomere, insbesondere das Sumpfprodukt, vorzugsweise nach der destillativen Entfernung des Lösemittels und/oder Alkohols mit einem Ionentauscher in Kontakt gebracht werden, insbesondere einem Anionentauscher, vorzugsweise einem Amin-funktionellen Ionentauscher, um den Chloridgehalt weiter zu reduzieren. Vorteilhaft, ist bei diesem Verfahrensschritt, dass sich durch diese Maßnahme, anders als bei einer Destillation, der Oligomerisierungs- und/oder Verzweigungsgrad des Produktes nicht verändert. Bei einer Destillation würde zwangsläufig eine Auftrennung des Siloxanoligomers in Leicht-, Mittel- und Schwersieder (Sumpf) erfolgen. Durch den erfindungsgemäßen Einsatz des Ionentauschers bleibt der Oligomerisierungsgrad der Siloxanoligomere gleich und der Chloridgehalt kann weiter abgesenkt werden. Bevorzugt kann durch das Inkontaktbringen mit einem Ionentauscher der Chlorid Gehalt bzw. der Gehalt an Chlor in Gew.-ppm der olefinischen Siloxanoligomere um mindestens 80 % in Bezug auf die, dem Iontauscher zugeführten Siloxanoligomere vermindert werden. Weiter bevorzugt ist der Gehalt an Chlor in Gew.-ppm der olefinischen Siloxanoligomere in Bezug auf die zugeführten um mindestens 85 %, bevorzugt um mindestens 90 %, besonders bevorzugt mindestens um 92 %, ferner bevorzugt mindestens um 95 %, und weiter bevorzugt um mindestens 98 % vermindert. Je nach olefinisch funktionalisiertem Siloxanoligomer und in Abhängigkeit von der Ausgangskonzentration an Chlor, der Fliessgeschwindigkeit und der Kontaktzeit mit dem Anionenaustauscher kann der Gehalt an Chlor vorzugsweise auf kleiner gleich 100 mg/kg gesenkt werden, vorzugsweise auf kleiner gleich 50 mg/kg, weiter bevorzugt auf kleiner gleich 25 mg/kg.

Bei olefinisch funktionalisierten Siloxanoligomeren mit einem Gehalt an Chlor, d. h. mit hydrolysierbarem Chlor, insbesondere chlorfunktionelle Alkylalkoxysilane und/oder Alkylalkoxysilane mit HCl, kann der Gehalt an hydrolysierbarem Chlorid vorzugsweise bei Fließgeschwindigkeiten von 0,01 m/h bis 15 m/h, vorzugsweise bis zu 5 m/h, insbesondere bei bis zu 2,5 m/h, um mindestens 80 %, insbesondere um mindestens 85 %, bevorzugt um mindestens 90 %, besonders bevorzugt mindestens um 92 %, ferner bevorzugt mindestens um 95 %, und weiter bevorzugt um mindestens 98 % reduziert werden, dabei werden insbesondere die olefinisch funktionalisierten Siloxanoligomere nicht weiter kondensiert, und wobei vorzugsweise die Anionenaustauschersäule einen Durchmesser von 3 cm und eine Höhe von 15 cm aufweist. Sehr gute Ergebnisse einer Verminderung an hydrolysierbarem Chlor von bis zu 80 % werden auch bei Fließgeschwindigkeiten von bis zu 10 m/h erzielt.

Im erfindungsgemäßen Verfahren weist der Anionenaustauscher ein Trägerpolymer mit quartären Alkylammonium-Gruppen und/oder mit tertiären Dialkylamino-Gruppen auf, wobei insbesondere die quartären Alkylammonium-Gruppen im Wesentlichen Hydroxid-Ionen als Gegenionen aufweisen und/oder die tertiären Dialkylamino-Gruppen in Form der freien Base vorliegen. Dabei ist es besonders bevorzugt, wenn der basische Anionenaustauscher ein Styrol-Divinylbenzol-Copolymer mit Trialkylammonium-Gruppen, insbesondere in der OH-Form, und/oder ein Styrol-Divinylbenzol-Copolymer mit Dialkylamino-Gruppen in Form der freien Base ist. Bei Verwendung von basischen Anionenaustauschern mit einem Styrol-Divinylbenzol-Copolymer mit Trialkylammonium-Gruppen in der Chlorid-Form werden die Chloride vor der Verwendung in die OH-Form überführt, beispielsweise mit einer Alkalihydroxid-Lösung. Als Alkalihydroxid-Lösungen werden vorzugsweise wässrige Lösungen von Kaliumhydroxid, Natriumhydroxid oder auch andere in Wasser- oder Wasser-Alkohol-lösliche Basen wie Ammoniak oder Alkalicarbonate, wie $Na_2CO_3$, eingesetzt. Dabei wird

nach der Überführung des Anionentauschers in die OH-Form vor dem Inkontaktbringen mit den olefinischen Siloxanoligomeren der Anionentauscher mit einen Alkohol gespült, um insbesondere überschüssiges Wasser zu verdrängen. Als Alkohol wird vorzugsweise der Alkohol eingesetzt, der durch Hydrolyse der jeweiligen Alkoxy-Gruppen gebildet würde. Bei Methoxy-Gruppen Methanol oder Ethanol bei Ethoxy-Gruppen im Alkoxysilan.

Als quartäre Ammonium-Gruppen gelten sowohl Alkylammonium- als auch N-Alkyl-Imin-funktionelle Gruppen, wie N-Alkyl-Pyridinium-Gruppen. Geeignete Alkyl-Gruppen enthalten 1 bis 20 C-Atome, vorzugsweise mit 1 bis 4 C-Atomen, und sind vorzugsweise Methyl- oder Ethylgruppen. Erfindungsgemäß sind die schwach basischen Anionaustauscher mit Hydroxid-Ionen beladen und insbesondere weisen sie Stickstoff enthaltende Gruppen auf.

Erfindungsgemäß ist es ferner bevorzugt, wenn die Alkoxysilane der Formeln II, III und/oder IV in Gegenwart der definierten Menge Wasser und eines Hydrolyse- und Kondensationskatalysators, wie beispielsweise einer Mineralsäure, wie HCL, einer organischen gesättigten oder ungesättigten Carbonsäure, wie Ameisensäure und/oder Fettsäure, zumindest partiell hydrolysiert und kondensiert werden und, vorzugsweise der Alkohol, insbesondere sowohl der Hydrolysealkohol als auch der gegebenenfalls zugesetzte Alkohol, entfernt wird. Der Hydrolyse- und/oder der zugesetzte Alkohol entsprechen dem freien Alkohol. Besonders bevorzugt ist der Gehalt an freiem Alkohol in der Gesamtzusammensetzung kleiner 2 Gew.-% bis 0,01 Gew.-%, insbesondere kleiner 2 Gew.-% bis 0,01 Gew.-%, besonders bevorzugt kleiner gleich 1 Gew.-% bis 0,01 Gew.-% bis hin zur Nachweisgrenze.

Es hat sich überraschend herausgestellt, dass die aufgrund der weiteren Reduktion des Gehaltes an Chlor durch das erfindungsgemäße Verfahren erhaltenen funktionellen Siloxanoligomere deutlich stabiler gegenüber einer Hydrolyse sind, obwohl sie anders als bisher nicht mehr aufwendig destilliert werden. Dadurch erweisen sich die erfindungsgemäßen Siloxanoligomere stabiler als bekannte Oligomere und zugleich ist deren VOC-Gehalt gegenüber den Oligomeren des Standes der Technik reduziert.

Der über einen Zeitraum von 3 bis 6 Monaten stabile Gehalt an Lösemitteln, wie VOC, insbesondere an freiem Alkohol, in Bezug zur gesamten Zusammensetzung liegt bevorzugt bei kleiner gleich 2 Gew.-%, insbesondere bei kleiner gleich 1 Gew.-%, besonders bevorzugt bei kleiner gleich 0,4 Gew.-%, vorzugsweise bei kleiner gleich 0,3 Gew.-%.

In das erfindungsgemäße Verfahren einsetzbare Verbindungen der Formel II sind: Vinyltriethoxysilan (VTEO), Vinyltrimethoxysilan (VTMO), Allyltriethoxysilan, Allyltrimethoxysilan, Butenyltriethoxysilan, Butenyltrimethoxysilan, Cyclohexenyl-alkylen-trimethoxysilan, insbesondere Cyclohexenyl-2-ethylen-trimethoxysilan, Cyclohexenyl-2-ethylen-triethoxysilan, weiter bevorzugt 3'-Cyclohexenyl-2-ethylen-triethoxysilan und/oder 3'-Cyclohexenyl-2-ethylen-trimethoxysilan, Cyclohexendienyl-alklylentriethoxysilan, Hexenyltriethoxysilan, Hexenyltrimethoxysilan, Ethylhexenyltrimethoxysilan, Ethylhexenyltriethoxysilan, Octenyltriethoxysilan, Octenyltrimethoxysilan, wobei die methoxysubstituierten besonders bevorzugt sind.

Bevorzugt verwendbare Alkylalkoxysilanverbindungen der Formel III sind: Verbindungen der Formel III mit y = 0 oder 1, wobei B einem linearen oder verzweigten Alkyl-Rest mit 1 bis 18 C-Atomen, insbesondere mit 1 bis 8 C-Atomen, bevorzugt einem Methyl-, Ethyl, besonders bevorzugt n-Propyl-, iso-Propyl- , Butyl-, Pentyl-, Hexyl-, Heptyl- , Octyl-, Hexadecyl- oder Octadecyl-Rest, $R^4$ einem linearen, verzweigten oder cyclischen Alkyl-Rest mit 1 bis 15 C-Atomen, insbesondere mit 1 bis 8 C-Atomen, bevorzugt einem Methyl-, Ethyl, besonders bevorzugt n-Propyl-, iso-Propyl- und/oder Octyl-Rest, $R^3$ einem linearen und/oder verzweigten Alkyl-Rest mit 1 bis 3 C-Atomen, besonders bevorzugt einem Methyl-, Ethyl- und/oder iso-Propyl- oder n-Propyl-Rest entsprechen. Besonders bevorzugt ist B ein Methyl-, Ethyl-, Propyl-, Octyl-, Hexadecyl- oder Octadecyl-Rest und $R^4$ ein Methyl- oder Ethyl-Rest und $R^1$ ein Methyl- oder Ethyl-Rest, wobei die methoxysubstituierten besonders bevorzugt sind. Bevorzugte beispielhaft genannte Verbindungen der Formel III sind: Methyltrimethoxysilan, Methyltriethoxysilan (MTES), Propyltrimethoxysilan (PTMO), Dimethyldimethoxysilan (DMDMO), Dimethyldiethoxysilan, Propylmethyldimethoxysilan, Propylmethyldiethoxysilan, n-Propyltrimethoxysilan, n-Propyl-triethoxysilan (PTEO), n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Propytriethoxysilan, Butyltrimethoxysilan, i-Butyltrimethoxysilan, i-Butyltriethoxysilan, Octyltrimethoxysilan, Octyltriethoxysilan, n-Octyltrimethoxysilan, n-Octyltriethoxysilan, i-Octyltrimethoxysilan, i-Octyltriethoxysilan, n-Hexyl-triethoxysilan, Cyclohexyl-triethoxysilan, n-Propyl-tri-n-butoxysilan, n-Propyl-trimethoxysilan, n-Propyl-triethoxysilan, Hexadecyltriethoxysilan, Hexadecyltrimethoxysilan, Octadecyltriethoxysilan, Octadecyltrimethoxysilan, Octadecylmethyldiethoxysilan, Octadecylmethyldimethoxysilan, Hexadecylmethyldimethoxysilan und/oder Hexadecylmethyldiethoxysilan sowie Mischungen dieser Silane oder eine Mischung umfassend mindestens zwei der zuvor genannten Silane.

Besonders bevorzugte Kombinationen an Verbindungen der Formeln II, III und/oder IV zur Herstellung der olefinisch funktionalisierten Siloxanoligomere, bzw. die daraus erhältlichen olefinisch funktionalisierten Siloxanoligomere sind. Verfahrensgemäss umgesetzt werden jeweils die nachfolgend durch Semikolon eingeschlossenen Verbindungen: Vinyltriethoxysilan; Vinyltrimethoxysilan; Vinyltriethoxysilan und Tetraethoxysilan (TEOS); Vinyltrimethoxysilan und Tetramethoxysilan; Vinyltriethoxysilan und Methyltriethoxysilan; Vinyltriethoxysilan, Methyltriethoxysilan und Tetraethoxysilan; Vinyltrimethoxysilan und Methyltrimethoxysilan; Vinyltrimethoxysilan, Methyltrimethoxysilan und Tetraethoxysilan oder Tetramethoxysilan; Vinyltriethoxysilan und Ethyltriethoxysilan; Vinyltriethoxysilan, Ethyltriethoxysilan und Tetraethoxysilan; Vinyltrimethoxysilan und Ethyltrimethoxysilan; Vinyltrimethoxysilan, Ethyltrimethoxysilan und Tetraethoxysilan oder Tetramethoxysilan; Vinyltriethoxysilan und Propyltriethoxysilan; Vinyltriethoxysilan, Propyltriethoxysilan und Tetraethoxysilan; Vinyltrimethoxysilan und Propyltrimethoxysilan; Vinyltrimethoxysilan, Propyltrimethoxysilan und Tetraethoxysilan oder Tetramethoxysilan; Vinyltriethoxysilan und iso-Butyltriethoxysilan; Vinyltriethoxysilan, iso-Butyltriethoxysilan und Tetraethoxysilan; Vinyltrimethoxysilan und iso-Butyltrimethoxysilan; Vinyltrimethoxysilan, iso-Butyltrimethoxysilan und Tetramethoxysilan; Vinyltrimethoxysilan und Heptyltrimethoxysilan; Vinyltrimethoxysilan und Heptyltriethoxysilan; Vinyltrimethoxysilan und Hexyltrimethoxysilan; Vinyltrimethoxysilan und Hexyltriethoxysilan; Vinyltriethoxysilan und Octyltriethoxysilan; Vinyltriethoxysilan, Octyltriethoxysilan und Tetraethoxysilan; insbesondere mit Vinyltriethoxysilan und Tetraethoxysilan im Verhältnis von 1 : 0,20 bis 1 : 0; Vinyltrimethoxysilan und Octyltrimethoxysilan; Vinyltrimethoxysilan, Octyltrimethoxysilan und Tetramethoxysilan; insbesondere mit Vinyltrimethoxysilan und Tetramethoxysilan im Verhältnis von 1 : 0,20 bis 1 : 0; Vinyltriethoxysilan und Hexadecyltriethoxysilan; Vinyltrimethoxysilan und Hexadecyltrimethoxysilan; Vinyltriethoxysilan und Tetramethoxysilan im Verhältnis von 1 : 0,2 bis 1 :0 und Hexadecyltriethoxysilan; Vinyltrimethoxysilan und Tetramethoxysilan im Verhältnis von 1 : 0,2 bis 1 :0 und Hexadecyltrimethoxysilan.

Ebenso besonders bevorzugt werden in dem erfindungsgemäßen Verfahren eingesetzte jeweils unabhängig mindestens ein Cyclohexenyl-2-ethylen-trialkoxysilan, 3'-Cyclohexenyl-2-ethylen-trialkoxysilan oder Cyclohexadienyl-C1 bis C8-alkylen-Gruppen. Alternativ ebenfalls besonders bevorzugt können als Kombinationen in dem erfindungsgemäßen Verfahren jeweils unabhängig mindestens ein Cyclohexenyl-2-ethylen-trialkoxysilan, 3'-Cyclohexenyl-2-ethylen-trialkoxysilan oder Cyclohexadienyl-C1 bis C8-alkylen-Gruppen mit einem der vorgenannten Alkylalkoxysilanen umgesetzt werden.

Besonders bevorzugte Verfahren basieren auf der Umsetzung von bzw. bevorzugte Siloxanoligomere sind erhältlich durch die Umsetzung von a) Vinyltriethoxysilan, b) Vinyltrimethoxysilan, c) Vinyltriethoxysilan und Propyltriethoxysilan, Vinyltrimethoxysilan und Propyltrimethoxysilan, Vinyltrimethoxysilan und Propyltriethoxysilan oder Vinyltriethoxysilan und Propyltrimethoxysilan, oder in dem a), b), c) jeweils unabhängig mit Tetraethoxysilan oder a), b) und c) jeweils unabhängig mit Tetramethoxsilan umgesetzt werden.

Zusätzlich oder alternativ zu einem der vorgenannten Merkmale kann in dem Verfahren auch als Verarbeitungshilfsmittel mindestens ein Silikonöl, wie Polydimethylsiloxan, Paraffin, Paraffinöl oder eine Mischung enthaltend eines dieser Verarbeitungshilfsmittel eingesetzt werden. Ein besonders bevorzugtes Verarbeitungshilfsmittel ist Polydimethylsiloxan, bevorzugt mit einer kinematischen Viskosität von circa 150 bis 400 mm$^2$/s, besonders bevorzugte Alternativen weisen eine kinematische Viskosität von um 200 mm$^2$/s oder um 350 mm$^2$/s.

Gegenstand der Erfindung ist auch das folgende Verfahren zur Herstellung der Zusammensetzung, als auch eine Zusammensetzung erhältlich nach diesem Verfahren, die insbesondere besonders VOC-arm sind, vorzugsweise mit den folgenden Einzelschritten,

1) mindestens ein olefinisch funktionalisiertes Alkoxysilan der Formel II, gegebenenfalls ein Alkoxysilan der Formel III und/oder ein Alkoxysilan der Formel IV, gegebenenfalls als Mischung, vorzugsweise werden sie vorgelegt, gegebenenfalls wird ein Lösemittel zur Verdünnung zugesetzt, vorzugsweise der korrespondierende Alkohol zum Hydrolysealkohol.

2) Mindestens ein saurer Hydrolyse- bzw. Kondensationskatalysator, wie HCl, eine organische gesättigte oder ungesättigte Carbonsäure, mit einer definierten Menge Wasser, wird zugesetzt. Vorzugsweise wird dabei ein pH-Wert kleiner 7, vorzugsweise von 1 bis 6, weiter bevorzugt von 3 bis 5 eingestellt. Alternativ kann gegebenenfalls eine Mischung hergestellt werden (1+2), enthaltend mindestens eines der Silane der Formel II, III und/oder IV gegebenenfalls mit einem Alkohol in einer Gewichtsmenge von 0,2 bis 8fach in Bezug auf die Silane (Schritt (2a) der Formeln II, III und/oder IV, insbesondere Methanol oder Ethanol, je nach eingesetztem Alkoxysilan, und eine definierte Menge Wasser (Schritt (2a), wobei vorzugsweise mindestens ein saurer Hydrolyse- bzw. Kondensationskatalysators, wie HCl, in der definierten Menge Wasser gelöst ist. Vorzugsweise wird dabei ein pH-Wert kleiner 7, vorzugsweise von 1 bis 6, weiter bevorzugt von 3 bis 5 eingestellt.

Schritt (2a): Dazu werden, vorzugsweise in einer Vorlage, wie einem Rührkessel, unter Durchmischung, und als definierte Menge Wasser größer gleich 1,0 bis 1,6 Mol Wasser, bevorzugt 1,05 bis 1,59, besonders bevorzugt 1,1 bis 1,58, ganz besonders bevorzugt größer 1,2 bis 1,57, insbesondere 1,25 bis 1,55 Mol Wasser je Mol Silizium-Atome der Alkoxysilane der Formeln II sowie ggf. III und/oder IV, sowie alle in diese Grenzen eingeschlossenen Zahlenwerte wie 1,21, 1,22, 1,23, 1,24, 1,25, 1,26, 1,27, 1,28, 1,29, 1,30, 1,31, 1,32, 1,33, 1,34, 1,35, 1,36, 1,37, 1,38, 1,39, 1,40, 1,41, 1,42, 1,43, 1,44, 1,45, 1,46, 1,47, 1,48, 1,49, 1,50, 1,51, 1,52, 1,53, 1,54, zugesetzt. Die definierte Menge Wasser kann kontinuierlich oder mit mindestens einer Unterbrechung über einen Zeitraum von 1 bis 1000 Minuten dosiert werden (29. I, vgl. Anspruch 29). Die Temperatur des Reaktionsgemisches wird vorzugsweise auf 5 bis 90°C für die Umsetzung eingestellt, vorzugsweise auf 20 bis 55 °C, bevorzugt auf 30 bis 40 °C oder auf etwa 35 °C. Nach der Zugabe der Mischung wird die Temperatur der gebildeten Reaktionsmischung weiter erhöht, insbesondere wird auf Rückflusstemperatur des Alkohols eingestellt. Beispielsweise durch Erwärmen der Reaktionsmischung auf eine Temperatur von 40 bis 80 °C, bevorzugt von 50 bis 80 °C, besonders bevorzugt von um 55 bis 80 °C, erfindungsgemäß auf etwa Siedetemperatur des Alkohols. Über einen Zeitraum von mindestens 10 Minuten bis 36 Stunden, vorzugsweise 10 min. bis 8h, bei einer Reaktionstemperatur von 5 bis 80°C, vorzugsweise 40°C bis 80°C kann die Reaktionsmischung nachreagieren (29.ii, vgl. Anspruch 29), bevorzugt unter Durchmischung, beispielsweise unter Rühren, und

3) nach beendeter Reaktion wird der Alkohol abgetrennt. Bevorzugt wird mehrere Stunden, beispielsweise etwa 2 bis 10 Stunden, vorzugsweise 3 bis 5 Stunden, besonders bevorzugt um 3,5 Stunden unter Rückfluss erhitzt und anschließend

4) der Alkohol, umfassend den Hydrolysealkohol und den eingesetzten Alkohol sowie gegebenenfalls Wasser abdestilliert, vorzugsweise unter Vakuum und bei erhöhter Temperatur, bevorzugt bis die Reaktionsmischung bzw. die erhaltene Zusammensetzung im Wesentlichen lösemittelfrei, insbesondere alkoholfrei ist.
Die Destillation des Alkohols erfolgt vorzugsweise bei einer Sumpftemperatur von 0°C bis 100 °C und einem Druck von 300 bar bis 1 mbar, dabei wird zugleich HCl abdestilliert, weiter bevorzugt bei 40 °C bis 100 °C und einem Druck von 250 bar bis 10 bar.

5) Anschließend kann Normaldruck einstellt werden, und (30.i, vgl. Anspruch 30) es kann eine definierte Menge an Alkohol nachdosiert werden und/oder (Schritt 30.ii) eine definierte Menge Alkalimetall, bevorzugt Natrium, Erdalkalimetall, bevorzugt Magnesium oder Calcium, Aluminium, Metallhydrid, bevorzugt Li-Aluminiumhydrid, Aluminiumhydrid, oder eine Base zugesetzt werden, insbesondere Ammoniakgas, Li-Diisopropylamid, Li-Isopropylhexylamid, Hexamethyldisilazan, Alkalialkoholat, wie Na- bzw. K-Methanolat oder Na- bzw. K-Ethanolat, Alkalialkylat, wie Butyl-Li, zusetzt. Es wird gegebenenfalls erneut bei vermindertem Druck destilliert, wobei bei Zugabe eines Alkalimetalls die Mischung reagieren gelassen wird. Das Sumpfprodukt kann im Anschluss an die Destillation filtriert oder dekantiert werden. Alternativ oder zusätzlich kann ein Inkontaktbringen mit einem Ionentauscher erfolgen, wie vorstehend beschrieben. Erhalten wird die erfindungsgemäße Zusammensetzung olefinisch funktionalisierter Siloxanoligomere mit einem Gehalt an freiem Alkohol von weniger ($\leq$) als 2 Gew.-% und einem Chlorgehalt von $\leq$ 250 Gew.-ppm, bezogen auf die Zusammensetzung mit einer Viskosität kleiner gleich 1.000 mPa s.

Dem Fachmann ist klar, dass die so hergestellten funktionellen Siloxanoligomere je nach gewünschter Anwendung mit einem Verdünnungsmittel verdünnt oder auch mit einem Polymer, wie einem thermoplastischen Basispolymer, wie PE, PP oder einem Elastomer, wie EVA versetzt oder compoundiert werden können. Weitere thermoplastische Basispolymere und Elastomere sind nachfolgend exemplarisch genannte, der Fachmann weiß, dass generell alle thermoplastischen Basispolymere bzw. Polymere oder Elastomere geeignet sind. Dem Fachmann sind übliche Verdünnungsmittel für Alkoxysiloxane bekannt, beispielsweise sind hier Alkohole, Ether, Ketone, Kohlenwasserstoffe, oder auch Mischungen dieser zu nennen. Die Zusammensetzungen der funktionellen Siloxanoligomere können somit je nach gewünschter Anwendung als Konzentrat oder auch als verdünnte Zusammensetzung von 99,9 bis 0,001 Gew.-% sowie alle dazwischen liegenden Werte, an funktionellen Siloxanoligomeren in der Gesamtzusammensetzung hergestellt werden. Bevorzugte Verdünnungen enthalten 10 bis 90 Gew.-% an funktionellen Siloxanoligomeren, besonders bevorzugt 20 bis 80 Gew.-%, weiter bevorzugt sind 30 bis 70 Gew.-%.
Als thermoplastische Basispolymere im Sinne der Erfindung werden insbesondere Acrylnitril-Butadien-Styrol (ABS), Polyamide (PA), Polymethylmethacrylat (PMMA), Polycarbonat (PC), Polyethylen (PE), wie LDPE, LLD-PE, m-PE, Polypropylen (PP), Polystyrol (PS), Polyvinylchlorid (PVC), Chloropren, sowie die auf Ethylen-Einheiten basierenden Polymere Ethylen-Vinylacetat-Copolymere (EVA), EPDM oder EPM und/oder Celluloid oder Silan-co-polymerisierte Polymere verstanden und beispielsweise aus ungesättigten funktionellen Monomeren inkl. Silanen, wie VTMO, VTEO, und Monomeren wie Ethylen und anderen Olefinen hergestellte Basispolymere, Monomere und/oder Prepolymere Vorläuferverbindungen dieser Basispolymere, wie Ethylen, Propylen. Weitere bevorzugte Elastomere können ausgewählt werden aus der Reihe Ethylen-Propylen-Kautschuk (EPR), Ethylen-Propylen-Dien-Kautschuk (EPDM), Styrol-Butadien-Kautschuk (SBR), Naturkautschuk (NR), Acrylatcopolymerkautschuk (ACM), Acrylnitril-Butadien-Kautschuk (NBR) und/oder Polybutadien-Kautschuk (BR).
Ebenso Gegenstand der Erfindung ist eine Zusammensetzung erhältlich aus der Umsetzung eines olefinischen Alkoxysilans der Formel II, gegebenenfalls mit mindestens einem Alkoxysilan der Formel III und/oder Formel IV in Gegenwart einer definierten Menge Wasser von größer gleich 1,1 bis 1,59 Mol Wasser je Mol Silizium-Atome der eingesetzten Alkoxysilane und vorzugsweise einem Lösemittel, wie einem Alkohol, insbesondere enthaltend olefinisch funktionalisierte Siloxanoligomere deren Gehalt an Silizium-Atomen mit T-Struktur größer 10 %, insbesondere größer gleich 11 % ist und deren Gehalt an Gesamtchlorid dieser Zusammensetzungen vorteilhaft gleichzeitig kleiner 250 mg/kg ist, insbesondere kleiner 80 mg/kg, weiter bevorzugt kleiner 50 mg/kg, in Bezug auf die Gesamtzusammensetzung. Die so erhältlichen Zusammensetzungen können jederzeit einfach mit einem Verdünnungsmittel verdünnt werden.

Um eine schnelle Verteilung im Extruder zu erlauben, ohne zu hohe Masseverluste in den heißen Extrudern zu erleiden ist ein ausgewogenes Verhältnis des Molekulargewichts Mw zur TGA Temperatur bei der 5% oder 50 % Masseverlust auftreten einzuhalten. Die vorgenannten Verbindungen zeigen üblicherweise Masseverlust von 50% bei Temperaturen deutlich oberhalb 200 °C, insbesondere oberhalb von 220 °C. Daher sind die erfindungsgemäßen Zusammensetzungen sehr gut zur Anwendung in Extrudern geeignet und erlauben zugleich aufgrund des sehr eng eingestellten Molekulargewichtes eine rasche Verteilung der Siloxanoligomere in den Thermoplasten. Zu dieser guten Verteilung tragen auch die leicht erhöhten T-Strukturen in den Siloxanen bei, da die Moleküle kompakter sind.

Gegenstand der Erfindung ist auch die Verwendung der erfindungsgemäßen Zusammensetzung oder der nach dem erfindungsgemäßen Verfahren hergestellten Zusammensetzungen als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, Pre-Polymere und/oder von mineralisch gefüllten Polymeren (Compounds), zur Herstellung von mit olefinisch funktionalisierten Siloxanoligomeren gepfropfter Polymere, Pre-Polymere und/oder von mineralisch gefüllten Thermoplasten oder Elastomeren, bevorzugt von mineralisch gefüllten Thermoplasten, Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen, zur Füllstoffmodifizierung (Füllstoffbeschichtung), Harzmodifizierung, Harzadditiv, Oberflächenmodifizierung Oberflächenfunktionalisierung, Oberflächenhydrophobierung, als Bestandteil in Beschichtungssystemen, als Bestandteil in Sol-Gel Systemen oder Hybridsysteme, Hybrid-Beschichtungssystemen, zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose. Zur erfindungsgemäßen gemeinsamen Verwendung der Zusammensetzung mit Organosilanen oder Organosiloxanen wird vollständig auf die Offenbarung der EP 1 205 481 B1 Bezug genommen, insbesondere auf den Offenbarungsgehalt des Absatzes [0039] und auf die dort offenbarte Liste an Organosilanen und Organosiloxanen. Zudem wird der gesamte Offenbarungsgehalt der DE 10 2011 086 863.1 mit dem Anmeldetag 22.11.2011 eingereicht beim Deutsche Patent- und Markenamt zum Inhalt der vorliegenden Erfindung gemacht.

Die Erfindung wird anhand der folgenden Beispiele näher erläutert ohne sie auf diese Ausführungsbeispiele zu begrenzen.

**Beispiele:**

Bestimmung des Molekulargewichts: Die Bestimmung von Molmassen sowie der Molmassenverteilung kann mittels Gelpermeationschromatographie (GPC) erfolgen.

Das GPC-Analyseverfahren wird u. a. in "Modern Size-Exclusion Liquid Chromatography", Andre Striegel et al., Verlag Wiley & Sons, 2. Aufl. 2009, ausführlich beschrieben. Dabei kann man zur Kalibrierung der Methode für Siloxananalysen als Standard beispielsweise Divinyltetramethoxydisiloxan oder Divinylteraethoxydisiloxan verwenden. Prozentangaben in Bezug auf die olefinischen Siloxanoligomere im vorliegenden Dokument entsprechen einer Angabe in Flächenprozent, die aus GPC-Analysen ermittelt werden können. Verwendete Säulen MZ-Analysetechnik: Säulen: 50x8.0 mm, MZ-Gel SDplus (Styrol-/Divinylbenzol-Copolymer mit hohem Vernetzungsgrad, sphärische Teilchenform), Porosität 50A (Angstroem, A), 5 $\mu$m (Mikrometer) (Vorsäule), 300x8.0 mm, MZ-Gel SDplus, Porosität 50A (Angstroem, Å), 5 $\mu$m, 300x8.0 mm, MZ-Gelplus, Porosität 100A (Angstroem, A), 5 $\mu$m, 300x8.0mm, MZ-Gel SDplus, Porosität 500A (Angstroem, Å), 5 $\mu$m; Elutionsmittel und Pumpenfluss: Methylketon (MEK) bei 1 ml/min, Standardsubstanz: Interner Standard - 1 g/l Ethylbenzol in 1 %iger Proben-Lösung. Das Messgerät wird zuvor gegen die jeweilige Substanz kalibriet (Monomer, Dimer, Trisiloxan etc.). Messgerät von Agilent: 1100 Series isotaktische Pumpe G1310A, 1100 Series Säulenofen G1316A, 1100 Series RID Detektor G1362A, Manueller Injektor G1328A, Vakuum Degasser G1322A, GPC-Software (PSS WinGPC Unity). Bestimmung des Gesamtchlorid-Wertes: In einer Kalorimeterbombe wird das Silan mit Sauerstoff aufgeschlossen und anschließend mit Essigsäure, und Flusssäure hydrolysiert. In der erhaltenen Lösung wird der Chloridgehalt durch Titration mit Silbernitrat bestimmt.

Bestimmung des hydrolysierbaren Chlorids: Nach Hydrolyse mit Essigsäure wird der Chloridgehalt durch Titration mit Silbernitrat bestimmt.

Bestimmung des $SiO_2$-Gehaltes: Tiegelmethode: Der $SiO_2$-Gehalt wird durch sauren Aufschluss mit konzentrierter Schwefelsäure und nachfolgender Verdampfung durch Fluorinierung bestimmt.

GC-Analytik: Standard-GC Testmethode, in der der Monomergehalt durch eine geeignete Kalibrierung und ggf. internen Standard bestimmt wird.

Alkohol nach Hydrolyse: Eine definierte Menge einer Probe wird mit Schwefelsäure (25%iger) versetzt. Anschließend wird eine definierte Menge Wasser zugesetzt und mit Natronlauge (20%ig) neutralisiert. Nach Durchführung einer Wasserdampfdestillation wird der Alkoholgehalt gegen einen inneren Standard mittels GC bestimmt (sek-Butanol, HP 5890 mit Integrator HP 3396, 1 ml/min).

Flammpunktbestimmung: DIN EN ISO 13736 (Januar 2009), DIN EN ISO 2719 (Sep 2003). Flammpunkte über 40°C werden mittels DIN EN ISO 2719 an (= DIN 51758 = EN 22719) und zwischen -30°C und +40°C nach DIN EN ISO 13736 (= DIN 51755) bestimmt.

Wassergehalt: Karl-Fischer (DIN 51777)

TGA: Bei der TGA (Thermogravimetrische Analyse) wird eine zu analysierende Probe in einem Tiegel an einer Waage angebracht. Die Probe selbst befindet sich während der Messung in einem beheizbaren Ofen. Der Tiegel ist üblicherweise offen (ohne Deckel oder Deckel mit Löchern). Das innere des Ofens wird mit einem inerten Gas (N2) durchgespült um mögliche durch den Sauerstoff-Kontakt bedingte Reaktionen zu vermeiden.
Gerät: TG 209 der Firma Netzsch, Temperaturbereich: RT bis ca. 1000°C
Heizrate: 10 K/min, Einwaage: ca. 10 - 12 mg, Tiegel: Platin mit Loch im Deckel.
Weitere Informationen zu TGA-Analysen finden sich beispielsweise im Internetlehrbuch: Moderne Pharmazeutische Technologie 2009, Cornelia M. Keck, Reiner H. Müller, Kapitel 3.5, Thermoanalyse, Lothar Schwabe, FU Berlin, Seite 76, Abb.: 5, http://pharmazie-lehrbuch.de/ Moderne%20Pharmazeutische%20 Technologie.pdf oder anderen Lehrbüchern zu analytischen Methoden.

$^{29}$Si-NMR-Spektrometrie: Ferner kann zur Bestimmung des Monomerengehalts sowie von M-, D- und T-Strukturen kann dem Fachmann ebenfalls wohl bekannte $^{29}$Si-NMR-Spektrometrie eingesetzt werden.

Bestimmung der dynamischen Viskosität: Die Bestimmung der dynamischen Viskosität wurde gemäß DIN 53015 durchgeführt.

**1. Synthesen erfindungsgemäßer Produkte**

Die jeweiligen Methoden zur Verringerung des Chlorgehaltes können, wie vorstehend erläutert, jeweils unabhängig voneinander auch mit dem vorliegenden Verfahren kombiniert werden. Beispielsweise kann der Einsatz einer wohl definierten Menge an Wasser mit der Anwendung des Ionentauschers und/oder mit der Zugabe einer zweiten bis sechsten definierte Menge an Alkohol im Anschluss an die Umsetzung und/oder einer Neutralisation mittels Base und/oder dem Zusatz eines Reduktionsmittels kombiniert werden.

**1.1 "VTEO-Siloxanoligomer" - Silan : Wasser = 1 : 1,1 - V092**

Durchführung: In einer 2-I-Apparatur werden 380,6 g VTEO (Vinyltriethoxysilan) vorgelegt. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden Rühren beginnend bei 77 °C nach vollständiger Dosierung des $H_2O0$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein VTEO-Siloxanoligomer.

Tabelle 1: Rohstoffe V092

| Stoff | Einwaage |
|---|---|
| Wasser | 39,6g |
| Ethanol | 181,2g |
| Salzsäure (37%ig) | 0,24g |

**1.2 "VTEO-Siloxanoligomer" - Silan : Wasser = 1 : 1,22 - V093**

Durchführung: In einer 2-I-Apparatur werden 380,6 g VTEO vorgelegt. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden Rühren beginnend bei 77 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist Vinylsiloxanoligomer.

Tabelle 2: Rohstoffe V093

| Stoff | Einwaage |
|---|---|
| Wasser | 43,9g |
| Ethanol | 181,0g |
| Salzsäure (37%ig) | 0,26g |

### 1.3 "VTEO-Siloxanoligomer" - Silan : Wasser = 1 : 1,35 - V094

Durchführung: In einer 2-I-Apparatur werden 380,6 g VTEO vorgelegt. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden Rühren beginnend bei 77 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist Vinylsiloxanoligomer.

Tabelle 3: Rohstoffe V094

| Stoff | Einwaage |
|---|---|
| Wasser | 49,0g |
| Ethanol | 181,2g |
| Salzsäure (37%ig) | 0,23g |

### 1.4 "VTEO-Siloxanoligomer" - Silan : Wasser = 1 : 1,47 - V095

Durchführung: In einer 2-I-Apparatur werden 380,6g VTEO vorgelegt. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden Rühren beginnend bei 77 °C nach vollständiger Dosierung des $H_2O$/EtOH/HCl-Gemisches. Nach der Reaktionszeit wird am Rotationsverdampfer der Alkohol bei bis zu 100 °C und 100mbar destilliert. Nach Erreichen der 100 mbar wird dieser noch 15 Minuten gehalten bevor die Anlage entlastet wird. Der erhaltene Sumpf ist Vinylsiloxanoligomer.

Tabelle 4: Rohstoffe V095

| Stoff | Einwaage |
|---|---|
| Wasser | 53,3g |
| Ethanol | 181,0g |
| Salzsäure (37%ig) | 0,27g |

### 1.5 "VTEO/TEOS-Siloxanoligomer" - Silan : Wasser = (1+0,1): 1,22 - V096

Durchführung: In einer 2-I-Apparatur werden 380,6 g VTEO und 41,6 g Tetraethoxysilan (TEOS) vorgelegt. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden Rühren beginnend bei 77 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein Vinyl-funktionalisiertes Co-Oligomer mit einkondensierten Q-Strukturelementen abgeleitet aus Tetraethoxysilan (VTEO/TEOS-Siloxanoligomer).

Tabelle 5: Rohstoffe V096

| Stoff | Einwaage |
|---|---|
| Wasser | 44,2g |
| Ethanol | 181,6g |
| Salzsäure (37%ig) | 0,23g |

### 1.6 "VTEO/PTEO-Siloxanoligomer" - Silan : Wasser = 1 : 1,25 - V111

Durchführung: In einer 2-l-Vierhalsapparatur mit Wasserkühlung und Magnetrührer werden 190,3 g VTEO und 206,5 g PTEO eingewogen. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden beginnend bei 79°C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein Vinyl- und Propyl-funktionalisiertes Siloxanoligomer aus VTEO und PTEO.

Tabelle 6: Rohstoffe V111

| Stoff | Einwaage |
|---|---|
| Wasser | 45,2g |
| Ethanol | 175,0g |
| Salzsäure | 0,2g |

### 1.7 "VTEO/PTEO-Siloxanoligomer" - Silan : Wasser = 1 : 1,5 - V112

Durchführung: In einer 2-l-Vierhalsapparatur mit Wasserkühlung und Magnetrührer werden 190,3 g VTEO und 206,6 g PTEO eingewogen. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden beginnend bei 79 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein Vinyl- und Propyl-funktionalisiertes Siloxanoligomer aus VTEO und PTEO.

Tabelle 7: Rohstoffe V112

| Stoff | Einwaage |
|---|---|
| Wasser | 54,3g |
| Ethanol | 175,0g |
| Salzsäure | 0,2g |

### 1.8 "VTEO/PTEO/TEOS-Siloxanoligomer" - Silan : Wasser = (1+0,1) :1,25 - V113

Durchführung: In einer 2-l-Vierhalsapparatur mit Wasserkühlung und Magnetrührer werden 190,3 g VTEO, 41,5 g Tetraethoxysilan und 206,4 g PTEO eingewogen. Im Anschluss wird ein Gemisch aus Ethanol, Bi-Dest-Wasser und Salzsäure (37 %) bei 35 °C und Umgebungsdruck zudosiert. Es findet eine exotherme Reaktion statt. Sollte die Temperatur über 60 °C steigen wird die Dosierung unterbrochen. Die Gesamtreaktionszeit beläuft sich auf 5 Stunden beginnend bei 79 °C nach vollständiger Dosierung des $H_2O$/EtOH/HCl-Gemisches. Nach der Reaktionszeit wird am Rotationsverdampfer der Alkohol bei bis zu 100 °C und 100 mbar destilliert. Nach Erreichen der 100 mbar wird dieser noch 15 Minuten gehalten bevor die Anlage entlastet wird. Der erhaltene Sumpf ist ein vernetztes Vinyl- und Propyl-funktionalisiertes Siloxanoligomer mit Q-Strukturelementen (quator Funktionalität) aus VTEO, PTEO und Tetraethoxysilan.

Tabelle 8: Rohstoffe V113

| Stoff | Einwaage |
|---|---|
| Wasser | 45,2g |
| Ethanol | 174,8g |
| Salzsäure | 0,19g |

## 2. Analytik

### 2.1 Allgemeine Analytik

Tabelle 9: Analysenergebnisse der Siloxanoligomere vom Typ VTEO

| | V092 | V093 | V094 | V095 | V096 |
|---|---|---|---|---|---|
| Gesamtchlorid [mg/kg]) | <35 | <35 | <35 | 50 | <35 |
| hydrol. Chlorid [mg/kg] | <3 | 4 | 4 | 6 | 5 |
| $SiO_2$ [% (Masse)] | 50,8 | 53,6 | 55,8 | 58,7 | 52,2 |
| freies Ethanol [% (Masse)] | 1,5 | 1,4 | 1,5 | 1,4 | 0,7 |
| VTEO [% (Masse)] | 0,5 | 0,2 | <0,1 | <0,1 | 0,3 |
| Farbzahl [mg Pt-Co/l] | <5 | <5 | 10 | <5 | 10 |
| Dichte bei 20°C [g/cm$^3$] | 1,061 | 1,088 | 1,108 | 1,123 | 1,082 |
| dyn. Viskosität bei 20°C [mPa s] | 7,8 | 13,8 | 22,9 | 46,6 | 11,5 |

Tabelle 10: Analysenergebnisse der Siloxanoligomere vom Typ VTEO/PTEO

| | V111 | V112 | V113 |
|---|---|---|---|
| Gesamtchlorid [mg/kg] | 55 | 65 | 110 |
| hydrol. Chlorid [mg/kg] | <3 | 4 | 4 |
| $SiO_2$ [% (Masse)] | 50,1 | 54,5 | 47,8 |
| freies Ethanol [% (Masse)] | 0,9 | 1,2 | 0,8 |
| VTEO/PTEO (% (Masse)) | 0,1 | 0,1 | 0,4 |
| Farbzahl [mg Pt-Co/l] | <5 | <5 | <5 |
| Dichte bei 20°C [g/cm$^3$] | 1,053 | 1,087 | 1,044 |
| dyn. Viskosität bei 20°C [mPa·s] | 17,8 | 48,1 | 11,5 |

### 2.2 NMR-Analysen

Tabelle 11: Ergebnisse aus den NMR-Untersuchen an den Siloxanoligomeren vom Typ VTEO, VTEO/PTEO sowie VTEO/PTEO/TEOS [VS= Vinylsilyl, PS= Propylsilyl, ES= Ethoxysilyl]

| Versuchs-Nr. | $^1$H- und $^{13}$C-NMR-Analysen-ergebnisse | $^{29}$Si-NMR-Analysenergebnisse - Anteile in den Siloxanoligomeren-Zusammensetzungen | | | |
|---|---|---|---|---|---|
| | | Silan-Monomer [mol-%] | M-Struktur [mol-%] | D-Struktur [mol-%] | T-Struktur [mol-%] |
| V092 | 1,02mol SiOEt und 0,03mol EtOH | 0,3 (VTEO) | 30,2 (VS) | 58,0 (VS) | 11,5 (VS) |
| V093 | 0,83mol SiOEt und 0,03mol EtOH | - | 18,0 (VS) | 63,3 (VS) | 18,7 (VS) |
| V094 | 0,67mol SiOEt und 0,04mol EtOH | - | 12,9 (VS) | 64,3 (VS) | 22,8 (VS) |
| V095 | 0,55mol SiOEt und 0,03mol EtOH | - | 6,8 (VS) | 63,0 (VS) | 30,2 (VS) |
| V096 | 1,1mol SiOEt | 0,2 (VTEO) | 20,8 (VS) | 55,6 (VS) | 14,0 (VS) |
| | | - | 1,7 (ES) | 5,6 (ES) | 2,3 (ES) |
| V111 | 1,0mol Propylsilyl 1,7mol SiOEt | - | 4,8 (VS) | 33,1 (VS) | 6,6 (VS) |
| | | 0,1 (PTEO) | 16,7 (PS) | 28,7 (PS) | (sind überlagert) |
| V112 | 1,0mol Propylsilyl 1,2mol SiOEt | - | 10,6 (VS) | 33,7 (VS) | 13,7 (VS) |
| | | - | 7,8 (PS) | 34,2 (PS) | (sind überlagert) |
| | | - | 21,8 (PS) | 21,9 (PS) | 1,5 (PS) |
| | | - | 2,3 (ES) | 6,1 (ES) | 1,2 (ES) |

**2.3 GPC-Analysen**

Tabelle 12a: Auswertung der GPC-Analysenergebnisse

| Versuchs-Nr. | Mn [g/mol] | Mw [g/mol] | D= $M_w/M_n$ |
|---|---|---|---|
| V092 | 495,24 | 564,87 | 1,1406 |
| V093 | 538,55 | 621,30 | 1,1536 |
| V094 | 576,26 | 679,77 | 1,1796 |
| V095 | 624,38 | 754,87 | 1,2090 |
| V096 | 550,08 | 710,87 | 1,2923 |
| V111 | 581,50 | 816,27 | 1,4037 |
| V112 | 763,06 | 1083,40 | 1,4198 |
| V113 | 556,68 | 707,65 | 1,2735 |
| V078 | 275,13 | 291,11 | 1,0581 |
| V081 | 254,06 | 269,90 | 1,0624 |

Tabell 12b: Auswertung der GPC-Analysenergebnisse der analog dem Beispiel 1.1 (V092), Beispiel 1.2 (V093), Beispiel 1.3 (V094) und analog dem Beispiel 1.4 (V095) hergestellten Zusammensetzungen

| analog | Mw g/mol | Mn g/mol | Mmax [g/mol] |
|---|---|---|---|
| V092 | 567,4 | 504,8 | 1800 |
| V093 | 624,3 | 551,2 | 2000 |
| V094 | 685,3 | 601,3 | 2100 |
| V095 | 783,5 | 643,7 | 3000 |

Tabelle 12c: Auswertung der GPC-Analysenergebnisse, Anteile in Flächen-% der analog dem Beispiel 1.1 (V092), Beispiel 1.2 (V093), Beispiel 1.3 (V094) und analog dem Beispiel 1.4 (V095) hergestellten Zusammensetzungen, auf 100 % kleiner Disiloxan und größer Hexasiloxan, wobei kleiner Disiloxan kleiner 1,0 %, insbesondere kleiner 0,5 % ist.

| analog | Disiloxan + Cyclo-Trisiloxan [%] | Trisiloxan + Cyclo-Tetra-siloxan [%] | Tetrasiloxan + Cyclo-Penta-siloxan [%] | Pentasiloxan + Cyclo-Hexasiloxan [%] |
|---|---|---|---|---|
| V092 | 11,6 | 35,8 | 26,1 | 10,2 |
| V093 | 6 | 30,2 | 31,2 | 9,9 |
| V094 | 3,6 | 26 | 31,1 | 10,1 |
| V095 | 1,2 | 21,9 | 31 | 8,6 |
| V096 | 6,3 | 27,3 | 28,8 | 10,4 |

Tabelle 12d: Auswertung der GPC-Analysenergebnisse, Anteile in Flächen-% der analog dem Beispiel 1.1 (V092), Beispiel 1.2 (V093), Beispiel 1.3 (V094) und analog dem Beispiel 1.4 (V095) hergestellten Zusammensetzungen, auf 100 % kleiner 250 g/mol und größer 1000 g/mol, wobei kleiner 250 g/mol kleiner 1,0 %, insbesondere kleiner 0,5 % beträgt.

| analog | 250 - 500 rel. MW [%] | 500 - 750 rel. MW [%] | 750 - 1000 rel. MW [%] |
|---|---|---|---|
| V092 | 46,63 | 36,85 | 11,48 |
| V093 | 35,54 | 41,7 | 14,23 |
| V094 | 28 | 42,21 | 16,34 |
| V095 | 21,84 | 40,42 | 17,38 |
| V096 | 32,55 | 39,41 | 15,11 |

Die Abweichungen im Molekulargewicht einzelner Zusammensetzungen von Siloxanoligomeren erklären sich einerseits über die unterschiedliche Substitution der Siloxanoligomere oder bei gleicher Substitution über übliche, geringfügige Schwankungen innerhalb der einzelnen Versuche.

**2.4 TGA**

Tabelle 13a: Auswertung der TGA-Analysenergebnisse

| Siloxanoligomere | | | | | |
|---|---|---|---|---|---|
| Versuchsnummer | V092 | V093 | V094 | V095 | V096 |
| 5% Masseverlust bei T = | 170 °C | 185 °C | 197 °C | 211 °C | 174 °C |
| 50% Masseverlust bei T = | 252 °C | 291 °C | 530 °C | - | 267 °C |

(fortgesetzt)

| Siloxanoligomere | | | | | |
|---|---|---|---|---|---|
| Versuchsnummer | V092 | V093 | V094 | V095 | V096 |
| | | | | | |
| Masseverlust [%] bei 150°C | 3 % | 1 % | 1 % | 0 % | 2 % |
| Masseverlust [%] bei 200°C | 15 % | 8 % | 6 % | 3 % | 12 % |

Tabelle 13b: Auswertung der TGA-Analysenergebnisse

| Siloxanoligomere | | | |
|---|---|---|---|
| Versuchsnummer | V111 | V112 | V113 |
| 5% Masseverlust bei T = | 189 °C | 206 °C | 177 °C |
| 50% Masseverlust bei T = | 286 °C | 491 °C | 256 °C |
| | | | |
| Masseverlust [%] bei 150°C | 1 % | 1 % | 1 % |
| Masseverlust [%] bei 200°C | 8 % | 4 % | 13 % |

## 3. Vergleichsbeispiele

**Vergleichsbeispiel 1:** V078 - Beispiel 1 aus EP 0 518 057 B1 - Herstellung eines Cokondensats aus Vinyltrimethoxysilan und Methyltrimethoxysilan mit einem Molverhältnis Vinyl- : Methoxy-Gruppen von rd. 1 : 3

Durchführung: In einer 2-I-Vierhalsapparatur mit Wasserkühler und Magnetrührer wurden 397,6 g Vinyltrimethoxysilan (VTMO) und 244,6 g Methyltrimethoxysilan bei 20 °C vorgelegt. Das Gemisch wurde mit einer 2400 ppm Chlorwasserstoff enthaltenden Lösung von 49,9 g destilliertem Wasser in 332,8 g Methanol versetzt; dazu diente ein 500 ml Tropftrichter. Nach insgesamt 16 Stunden wurde das gesamte Methanol samt HCl bei ca. 300 mbar abdestilliert. Danach wurde das so erhaltene Oligomerengemisch bis zu einem Druck von ca. 1 mbar und einem Siedeintervall bis 113°C destilliert. So wurden 170 g klares Produkt gewonnen.

Tabelle 14: Rohstoffe V078

| Stoff | Lieferant | Einwaage |
|---|---|---|
| VTMO | Evonik Degussa GmbH | 397,6 g |
| MTMS | Evonik Degussa GmbH | 244,6 g |
| Salzsäure 2400ppm | Merck (HCl 37%) Wasser Bidest | 49,9 g |
| Methanol | ROTH | 332,8 g |

**Vergleichsbeispiel 2:** V081 - Beispiel 6 aus EP 0518057 B1 - Herstellung eines Kondensats aus Vinyltrimethoxysilan mit einem Molverhältnis von Vinyl- : Methoxy-Gruppen von ca. 1 : 1,75

Durchführung: In einer 2l-Vierhalsapparatur mit Wasserkühler und Magnetrührer wurden 693,83 g VTMO bei 20°C vorgelegt. Das Gemisch wurde mit einer 1100 ppm Chlorwasserstoff enthaltenden Lösung von 52,82 g destilliertem Wasser in 351,53 g Methanol versetzt. Dazu diente ein 500ml Tropftrichter. Die Temperatur stieg innerhalb von 26 Minuten auf ca. 36 °C an. Nach insgesamt 13 Stunden wurde das gesamte Methanol samt Salzsäure innerhalb von 2-3 Stunden bei ca. 300 mbar abdestilliert. Danach wurde das so erhaltene Oligomerengemisch bis zu einem Druck von ca. 1 mbar und einem Siedeintervall bis 100°C destilliert. So wurden 240 g klares Produkt gewonnen.

Tabelle 15: Rohstoffe V081

| Stoff | Lieferant | Einwaage |
|---|---|---|
| VTMO | Evonik Degussa GmbH | 693,7 g |
| Methanol | | 351,5 g |
| Salzsäure 1100ppm | Merck (HCl 37%) Wasser Bidest | 52,8 g |

Die Bestimmung des Chloridgehaltes (Gesamtchlorid) kann nach den dem Fachmann bekannten Methoden, wie der potentiometrischen Bestimmung mit $AgNO_3$, erfolgen. Das hydrolysierbare Chlorid wird potentiographisch mit $AgNO_3$ titriert.

Tabelle 16: Analysenergebnisse zu V078 (Vergleichsbeispiel 1), (1) (vgl. Beispiel 1 in EP0518057B1)

| Versuchs-Nr. V078 | Gesamtchloride | hydrolysierbares Chlorid | $SiO_2$ | VTMO | Farbzahl |
|---|---|---|---|---|---|
| | [mg/kg] | [mg/kg] | (Masse) [%] | (Masse) [%] | [mg Pt-Co/l] |
| Destillat (1) | 230 | 16 | 52,4 | <0,1 | <5 |

Tabelle 17: Analysenergebnisse zu V081 (Vergleichsbeispiel 2), (2) vgl. Beispiel 6 in EP0518057B1)

| Versuchs-Nr. V081 | Gesamt-chlorid | Hydrolysierbares. Chlorid | $SiO_2$ | VTMO | Farbzahl |
|---|---|---|---|---|---|
| | [mg/kg] | [mg/kg] | (Masse) [%] | (Masse) [%] | [mg Pt-Co/l] |
| Destillat (2) | 50 | <3 | 48,6 | 1,7 | <5 |

Tabelle 18: Ergebnisse aus den $^{29}$Si-NMR-Analysen an den Produkten aus den Vergleichsversuchen V078 und V081 [VS= Vinylsilyl, MS= Methylsilyl]

| Vergleichversuchs-Nr. | Anteile in den Siloxanoligomeren-Zusammensetzungen | | | |
|---|---|---|---|---|
| | M-Struktur [mol-%] | D-Struktur [mol-%] | T-Struktur [mol-%] | Silan-Monomer [mol-%] |
| V078 | 52,1 (VS) | 9,1 (VS) | - (VS) | 0,9 (VTMO) |
| | 29,3 (MS) | 8,6 (MS) | - (MS) | - (MTMS) |
| V081 | 91,8 (VS) | 6,8 (VS) | - (VS) | 1,2 (VTMO) |

**Vergleichsbeispiele 3 bis 5 analog zu Bespiel 6, EP 0518057:**

Das in Beispiel 6 offenbarte Verfahren wurde jeweils für die Verbindung VTMO nachgearbeitet und für die Verbindungen VTEO, VTMO sowie für die Cooligomere VTMO und Propyltrimethoxysilan (PTMO) und für Vinyltriethoxsilan (VTEO) mit Propyltriethoxysilan (PTEO) als neue Varianten durchgeführt. Dabei wurden die Verfahren mit äquimolaren Mengen in einer Ansatzgröße mit 1000 g Maßstab durchgeführt. In einer 2l - Rührapparatur wurden jeweils die Silane bei Raumtemperatur vorgelegt (Vinyltrimethoxysilan (V074), Vinyltriethoxysilan (V075), Vinyltrimethoxy- und Propyltrimethoxysilan (V076) sowie Vinyltriethoxy- und Propyltriethyoxysilan (V077). Das Wasser/Alkohol - Gemisch (Beispiele V074, V076, Methanol; Beispiele V075, V077 = Ethanol) das jeweils 1100 ppm (0,11 %) Chlorwasserstoff beinhaltete, wurde zudosiert. Es war jeweils ein exothermer Temperaturverlauf zu beobachten. Die Temperatur stieg hierbei jeweils auf 35 - 40°C. Nach 13h Reaktionszeit wurde bei 300 mbar Absolutdruck der Alkohol innerhalb 3 Stunden abgezogen. Abschließend wurde das Oligomerengemisch selbst bei einem Druck <0,1 mbar abdestilliert.

Tabelle 19: Analysenergebnisse - Vergleichsbeispiele 3 bis 5 bzw. neue Variante

| Versuchsnummer | V074 | V075 | V076 | V077 |
|---|---|---|---|---|
| Bemerkungen: Destillate | Beispiel 6 | VTEO neue Variante Beispiel 6 EP 0518057 | VTMO/PTMO neue Variante von Beispiel 6, EP 0518057 | VTEO/PTEO neue Variante von Beispiel 6 EP 0518057 |
| Silan A | VTMO 631,50 g | VTEO 614,46 g | VTMO 307,01 g | VTEO 301,35 g |
| Silan B | | | PTMO 340,35 g | PTEO 326,74 g |
| Katalysator (20%ige HCl) | 2,02 g | 2,12 g | 1,86 g | 2,04 g |
| Alkohol | 320,02 g | 348,69 g | 305,24 g | 335,55 g |
| Wasser | 46,46 g | 34,74 g | 45,53 g | 34,32 g |
| Ausbeute (%), über mol Si | 37,40 | 93,75 | 76,02 | 89,62 |

Tabelle 20: Analysenergebnisse Vergleichsbeispiele 3 bis 5, k.R.: kein Rückstand, (1.1): einzelne schwarze Punkte am Tiegelboden; (1.2) kein Rückstand erkennbar, (1.3) schwarze Punkte am Tiegelboden und Tiegelbodenrand, (2): Temperatur bei max. Masseabnahmegeschwindigkeit [dm/dt] - erster Peak

| Versuch | V081 | V074 | V075 | V076 | V077 |
|---|---|---|---|---|---|
| Viskosität 20°C [mPa·s] | | 2,1 | 2,3 | 3 | 2,6 |
| TGA | | | | | |
| Gewichtsabnahme % | | 99,5%, k. R. | 98,3%, (1.1) | 99,5%, (1.2) | 98,2% (1.3) |
| DTG 1(2) | | 176°C u. 196°C | 196 °C | 222 °C | 209 °C |
| 5% Masseverlust bei T = | 111 °C | 118 °C | 135 °C | 135 °C | 131 °C |
| 50% Masseverlust bei T = | 164 °C | 162 °C | 197 °C | 203 °C | 202 °C |
| 95% Masseverlust bei T = | | 209 °C | 235 °C | 243 °C | 238 °C |
| Masseverlust [%] bei 150°C | 28 | 23 | 12 | 26 | 11 |
| Masseverlust [%] bei 200°C | 99 | 86 | 59 | 49 | 50 |

Tabelle 21: TGA Auswertung

| | Beispiele | |
|---|---|---|
| | VTMO/MTMS | VTMO |
| Versuchsnummer | V078 | V081 |
| 5% Masseverlust bei T = | 114 °C | 111 °C |
| 50% Masseverlust bei T = | 170 °C | 164 °C |
| Masseverlust [%] bei 150°C | 23 % | 28 % |
| Masseverlust [%] bei 200°C | 95 % | 99 % |

**4. Anwendungstechnische Ausprüfungen**

Tabelle 22: Zuordnung der anwendungstechnischen Versuche

| Versuchs-Nr. (Siloxanoligomer aus) | AT-Versuchs-Nr. |
|---|---|
| - | V153 (Blindprobe) |
| V092 | V119 |
| V093 | V120 |
| V094 | V121 |
| V095 | V122 |
| V096 | V123 |
| V111 | V124 |
| V112 | V125 |
| V113 | V126 |
| V078 | V116 |
| V081 | V118 |

**4.1 Knetversuche**

Folgende Knetungen wurden mit einem Temp.-Profil von 3 min bei 140 °C, von 140 °C auf 170 °C in 2 min, 5 min bei 170 °C" bei einer Drehzahl von 30 U/min im HAAKE-Kneter bearbeitet. Von jedem Ansatz wurden anschließend je zwei Platten bei 190°C und einem Lastdruck von 20 t gepresst. Um die Zugabe des Peroxids zu vereinfachen wurden Silan/Peroxid-Lösungen angesetzt.

**4.2 Vorbereitung der Messkörper**

Von den hergestellten Proben wurden nach einer Lagerung von bei 23°C und 50% relativer Luftfeuchtigkeit im Klimaraum, Probekörper für Zugversuche und die Bestimmung der Wasseraufnahmefähigkeit bzw. Bestimmung des Schmelzindex gemacht.

Tabelle 23: Rohstoffe und Chargen der Anwendungstechnik

| Stoff | Charge |
|---|---|
| ATH | M56/15 |
| EVA | M56/156 |
| DCUP | M56/026 |

Tabelle 24: Peroxid-Mischungen für Knetungen

| Siloxanoligomer-DCUP-Lsg. aus Charge | Einwaage DCUP | Einwaage Siloxanoligomer | für Versuch Nr. |
|---|---|---|---|
| V078 | 9,81g | 0,19g | V116 |
| V081 | 9,81g | 0,19g | V118 |
| V092 | 9,81g | 0,19g | V119 |
| V093 | 9,81g | 0,19g | V120 |
| V094 | 9,81g | 0,19g | V121 |
| V095 | 9,81g | 0,19g | V122 |

(fortgesetzt)

| Siloxanoligomer-DCUP-Lsg. aus Charge | Einwaage DCUP | Einwaage Siloxanoligomer | für Versuch Nr. |
|---|---|---|---|
| V096 | 9,81g | 0,19g | V123 |
| V111 | 9,82g | 0,19g | V124 |
| V112 | 9,82g | 0,19g | V125 |
| V113 | 9,81g | 0,19g | V126 |

Tabelle 25: Einwaagen der Knetversuche

| Versuchs- Nr. | Einwaage EVA | Einwaage ATH | Einwaage DCUP-Siloxan-oligomer-Lsg. | Siloxanoligomer-DCUP-Lsg. aus Charge |
|---|---|---|---|---|
| V116 | | | 0,45g | V078 |
| V118 | 27,72g | 41,61g | 0,44g | V081 |
| V119 | | | 0,42g | V092 |
| V120 | | | 0,44g | V093 |
| V121 | | | 0,43g | V094 |
| V122 | | | 0,43 | V095 |
| V123 | 27,72g | 41,61g | 0,41 g | V096 |
| V124 | | | 0,42g | V111 |
| V125 | | | 0,41 g | V112 |
| V126 | 27,72g | 41,61g | 0,42g | V113 |
| V153 | 27,72g | 41,61g | - | - |

### 4.3 Bestimmungen des Schmelzindex (MFR) und des Volumen-Fließindex (MVR)

Die Bearbeitung und Auswertung erfolgte in Anlehnung an die DIN ISO 1133 (Verfahren B), auf deren Inhalt vollständig Bezug genommen und zum Inhalt der Anmeldung gemacht wird. Prüfgerät: Zwick Fließprüfgerät 4106. Die Schmelzindex-(MFR) bzw. Volumen-Fließindexbestimmung (MVR) erfolgt unter festgelegter Scherbelastung und definierter Temperatur ($T_{PT}$) und definierter Belastung ($m_{nom}$) einer Kunststoffschmelze durch eine Normdüse. Ermittelt wird die Wegänderung des Stempels über die Zeit und gemäß den, dem Fachmann bekannten Formeln MVR und MRF berechnet. Es wurden ~7g der einzelnen Proben kleingeschnitten und bei einer Temperatur von 160°C und einer Belastung von 21,6kg der Schmelzindex ("MFR") bestimmt worden.

Tabelle 26: Ergebnisse bzgl. MFR und MVR zu den Vergleichsbeispielen

| Versuchs-Nr. | V116 | V118 |
|---|---|---|
| Siloxanoligomer aus | V078 | V081 |
| Versuchstemperatur | 160°C | |
| Vorheizzeit | 4min | |
| Belastungsgewicht | 21,6kg | |
| MFR [g min] | 3,19 | 3,39 |
| MVR [$cm^3$ min] | 2,36 | 2,51 |
| Dichte [$g/cm^3$] | 1,352 | 1,348 |

Tabelle 27: Ergebnisse bzgl. MFR und MVR der Blindprobe

| Versuchs-Nr. | V153 (Blindprobe) |
|---|---|
| Siloxanoligomer | - |
| Versuchstemperatur | 160°C |
| Vorheizzeit | 4min |
| Belastungsgewicht | 21,6kg |
| MFR [g min] | 2,03 |
| MVR [cm$^3$ min] | 1,50 |
| Dichte [g/cm$^3$] | 1,349 |

Tabelle 28: Ergebnisse bzgl. MFR und MVR zu den Versuchen V119, V120, V121, V122 und V123

| Versuchs-Nr. | V119 | V120 | V121 | V122 | V123 |
|---|---|---|---|---|---|
| Siloxanoligomer aus | V092 | V093 | V094 | V095 | V096 |
| Versuchstemperatur: 160°C | | | | | |
| Vorheizzeit: 4min | | | | | |
| Belastungsgewicht: 21,6kg | | | | | |
| MFR [g min] | 3,22 | 3,69 | 3,63 | 3,55 | 3,50 |
| MVR [cm$^3$ min] | 2,38 | 2,74 | 2,70 | 2,63 | 2,59 |
| Dichte [g/cm$^3$] | 1,352 | 1,345 | 1,347 | 1,350 | 1,351 |

Tabelle 29: Ergebnisse bzgl. MFR und MVR zu den Versuchen V124, V125 und V126

| Versuchsnummer | V124 | V125 | V126 |
|---|---|---|---|
| Siloxanoligomer aus | V111 | V112 | V113 |
| Versuchstemperatur | 160°C | | |
| Vorheizzeit | 4min | | |
| Belastungsgewicht | 21,6kg | | |
| MFR [g min] | 3,84 | 3,69 | 3,77 |
| MVR [cm$^3$ min] | 2,85 | 2,74 | 2,80 |
| Dichte [g/cm3] | 1,350 | 1,348 | 1,348 |

**4.4 Wasseraufnahmefähigkeit**

Bestimmung der Wasseraufnahme: Prüfkörper definierter Geometrie werden unter definierten Bedingungen (Temperatur, Zeit) in einem Wasserbad gelagert. Dabei wird die sich ergebende Gewichtsänderung der Proben vor, während der Lagerung und nach den Trocknungsvorgängen erfasst. Die Wasseraufnahmefähigkeit wurde mittels der hergestellten Probekörper nach einem Zeitraum von 24 Stunden durch eine Dreifachbestimmung ermittelt, indem diese für den besagten Zeitraum im Wasserbad bei 70 °C gelagert wurden.

Tabelle 30: Ergebnisse der Untersuchungen zur Wasseraufnahmefähigkeit

| AT-Versuchs-Nr. | Wasseraufnahme [mg/cm2] nach 7d Lagerung |
|---|---|
| V153 | 3,81 |
| V116 | 1,55 |

(fortgesetzt)

| AT-Versuchs-Nr. | Wasseraufnahme [mg/cm2] nach 7d Lagerung |
|---|---|
| V118 | 1,40 |
| V119 | 1,49 |
| V121 | 1,48 |
| V122 | 1,47 |
| V123 | 1,39 |
| V124 | 1,68 |
| V125 | 1,55 |
| V126 | 1,43 |

### 4.5 Bestimmung der Zugeigenschaften

Die Bestimmung der Zugeigenschafen erfolgte in Anlehnung an die DIN EN ISO 527-1, 527-2, 527-3, auf deren Inhalt vollständig Bezug genommen und zum Inhalt der Anmeldung gemacht wird. Dazu wird ein Probenstab definierter Geometrie in die Zugprüfmaschine eingespannt und bis zum Bruch einachsig belastet (einachsige Dehnung bei definierter Dehngeschwindigkeit). Aufgenommen wird dabei die Spannungsänderung am Probenstab über die Dehnung des Probenkörpers und die Zugfestigkeit und die Bruchdehnung ermittelt. Prüfgerät Zwick Universalprüfgerät 4115. Mittels der hergestellten Probekörper bzw. Zugstäbe ("Bones"), sind nach 24 Stunden Lagerung im Klimaraum bei 23 °C und 50 % relative Luftfeuchtigkeit die Zugeigenschaften (Bruchdehnung und Zugfestigkeit) der Proben, mit einer Prüfgeschwindigkeit von 200mm/min und einer Vorkraft von 0,2 MPa durch eine Fünffachbestimmung ermittelt worden.

Tabelle 31: Ergebnisse aus den Untersuchungen zur Zugfestigkeit und Bruchdehnung

| Siloxanoligomer aus | AT-Versuchs-Nr. | Bruchdehnung [%] | Zugfestigkeit [MPa] |
|---|---|---|---|
| V092 | V119 | 58,26 | 8,25 |
| V093 | V120 | 65,81 | 8,43 |
| V094 | V121 | 102,06 | 8,16 |
| V095 | V122 | 98,97 | 8,28 |
| V096 | V123 | 84,81 | 8,00 |
| V111 | V124 | 39,61 | 7,64 |
| V112 | V125 | 98,39 | 8,19 |
| V113 | V126 | 58,83 | 7,69 |
| V078 | V116 | 80,37 | 8,66 |
| V081 | V118 | 85,61 | 9,31 |

### Patentansprüche

1. Zusammensetzung enthaltend olefinisch funktionalisierte Siloxanoligomere, die höchstens einen olefinischen Rest am Silizium-Atom aufweisen,
**dadurch gekennzeichnet,**
**dass**

- die olefinisch funktionalisierten Siloxanoligomere Si-O-vernetzte Strukturelemente aufweisen, die kettenförmige, cyclische, vernetzte oder optional raumvernetzte Strukturen bilden, wobei mindestens eine Struktur der allgemeinen Formel I entspricht,

$$(R^1O)[(R^1O)_{1-x}(R^2)_xSi(A)O]_a[Si(Y)_2O]_c[Si(B)(R^4)_y(OR^3)_{1-y}O]_bR^3 \qquad (I),$$

- wobei die Strukturelemente aus Alkoxysilanen abgeleitet sind und
- A in dem Strukturelement einem olefinischen Rest entspricht und ausgewählt ist aus einer linearen, verzweigten oder cyclischen Alkenyl- oder Cycloalkenyl-alkylen-funktionellen Gruppe mit jeweils 2 bis 16 C-Atomen und
- B in dem Strukturelement einem gesättigten Kohlenwasserstoff-Rest entspricht und ausgewählt ist aus einem linearen, verzweigten oder cyclischen Alkyl-Rest mit 1 bis 16 C-Atomen,
- Y entspricht $OR^3$ oder in vernetzten und optional raumvernetzten Strukturen unabhängig voneinander $OR^3$ oder $O_{1/2}$,
- wobei $R^1$ unabhängig voneinander einem linearen, verzweigten oder cyclischen Alkyl-Rest mit 1 bis 4 C-Atomen oder H entspricht,
- $R^3$ jeweils unabhängig voneinander einem linearen, verzweigten oder cyclischen Alkyl-Rest mit 1 bis 4 C-Atomen oder H entspricht, und $R^2$ entspricht jeweils unabhängig einem linearen, verzweigten oder cyclischen Alkyl-Rest mit 1 bis 15 C-Atomen, $R^4$ entspricht jeweils unabhängig einem linearen, verzweigten oder cyclischen Alkyl-Rest mit 1 bis 15 C-Atomen,
- a, b, c, x und y unabhängig ganzen Zahlen entsprechen mit $1 \leq a$, $0 \leq b$, $0 \leq c$, x unabhängig voneinander 0 oder 1 ist, y unabhängig voneinander 0 oder 1 ist, und $(a+b+c) \geq 2$,
- wobei der Gehalt an Gesamtchlorid kleiner gleich 250 mg/kg beträgt und
- wobei die Strukturelemente $[(R^1O)_{1-x}(R^2)_xSi(A)O]_a$, $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 10 % als T-Struktur vorliegen.

2. Zusammensetzung nach Anspruch 1,
**dadurch gekennzeichnet,**
**dass** die Siloxanoligomere abgeleitete Strukturelemente aus mindestens einem der Alkoxysilane aufweisen,

(i) aus olefinisch funktionalisierten Alkoxysilanen der allgemeinen Formel II,

$$A\text{-}Si(R^2)_x(OR^1)_{3-x} \qquad (II)$$

mit A einem olefinischen Rest entspricht und ausgewählt ist aus einer linearen, verzweigten oder cyclischen Alkenyl- oder Cycloalkenyl-alkylen-funktionellen Gruppe mit jeweils 2 bis 16 C-Atomen, mit $R^2$ jeweils unabhängig einem linearen, verzweigten oder cyclischen Alkyl-Rest mit 1 bis 15 C-Atomen, und x unabhängig voneinander 0 oder 1 und $R^1$ unabhängig einer Methyl-, Ethyl- oder Propyl-Gruppe entspricht, und

(ii) optional aus mit einem gesättigten Kohlenwasserstoff-Rest funktionalisierten Alkoxysilan der Formel III,

$$B\text{-}Si(R^4)_y(OR^3)_{3-y} \qquad (III)$$

mit B einem unsubstituierten Kohlenwasserstoff-Rest entspricht und ausgewählt ist aus einem linearen, verzweigten oder cyclischen Alkyl-Rest mit 1 bis 16 C-Atomen, mit $R^4$ jeweils unabhängig einem linearen, verzweigten oder cyclischen Alkyl-Rest mit 1 bis 15 C-Atomen und y unabhängig voneinander 0 oder 1 und $R^3$ unabhängig einer Methyl-, Ethyl- oder Propyl-Gruppe entspricht und

(iii) optional aus einem Tetraalkoxysilan der allgemeinen Formel IV gleich $Si(OR^3)_4$ mit $R^3$ unabhängig voneinander wie vorstehend definiert.

3. Zusammensetzung nach Anspruch 1 oder 2,
**dadurch gekennzeichnet,**
**dass** jeweils unabhängig voneinander ausgewählt

(i) das Strukturelement $[(R^1O)_{1-x}(R^2)_xSi(A)O]_a$ in der allgemeinen Formel I in Bezug auf alle Silizium-Atome der allgemeinen Formel I zu größer gleich 5 %, insbesondere zu größer gleich 7,5 % als T-Struktur vorliegt,
(ii) das die Strukturelemente $[(R^1O)_{1-x}(R^2)_xSi(A)O]_a$ und $[Si(B)(R^4)_y(OR^3)_{1-y}O]_b$ und $[Si(Y)_2O]_c$ in der allgemeinen Formel I zusammen in Bezug auf alle Silizium-Atome der allgemeinen Formel I zu größer gleich 50% als D-Struktur vorliegen,
(iii) das Strukturelement $[(R^1O)_{1-x}(R^2)_xSi(A)O]_a$ in der allgemeinen Formel I in Bezug auf alle Silizium-Atome der allgemeinen Formel I zu kleiner gleich 35 % als M-Struktur vorliegt,
(iv) das Strukturelement $[Si(B)(R^4)y(OR^3)_{1-y}O]_b$ in der allgemeinen Formel I in Bezug auf alle Silizium-Atome der allgemeinen Formel I zu kleiner gleich 25 % als M-Struktur vorliegt, und
(v) das Strukturelement $[Si(Y)_2O]_c$ in der allgemeinen Formel I zu größer gleich 20 % als D-Struktur vorliegt oder über 40 % der Strukturelemente $[Si(Y)_2O]_c$ in der allgemeinen Formel I als D-Struktur vorliegen.

4. Zusammensetzung nach einem der Ansprüche 1 bis 3,
   **dadurch gekennzeichnet,**
   **dass** in dem olefinisch funktionalisierten Alkoxysilanen der allgemeinen Formel II x gleich 0 ist und optional in dem mit einem gesättigen Kohlenwasserstoff-Rest funktionalisierten Alkoxysilan der Formel III y gleich 0 ist.

5. Zusammensetzung nach einem der Ansprüche 1 bis 4,
   **dadurch gekennzeichnet,**
   **dass**

   - in Formeln I und/oder II der olefinische Rest A ein nicht hydrolysierbarer olefinischer Rest ist ausgewählt aus einer Vinyl-, Allyl-, Butenyl-, 3-Butenyl-, Pentenyl-, Hexenyl-, Ethylhexenyl-, Heptenyl-, Octenyl- und Cyclohexenyl-C1 bis C8-alkylen-, Cyclohexenyl-2-ethylen-, 3'-Cyclohexenyl-2-ethylen-, Cyclohexadienyl-C1 bis C8-alkylen-, Cyclohexadienyl-2-ethylen-Gruppe, und unabhängig davon
   - in Formeln I und/oder 111 der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe, und
   - jeweils voneinander unabhängig $R^1$ eine Methyl-, Ethyl- oder Propyl-Gruppe ist und $R^3$ unabhängig eine Methyl-, Ethyl- oder Propyl-Gruppe sind.

6. Zusammensetzung nach einem der Ansprüche 1 bis 5,
   **dadurch gekennzeichnet,**
   **dass**

   - in Formeln I und/oder II der olefinische Rest A eine Vinyl-Gruppe ist, und unabhängig davon
   - in Formeln I und/oder III der unsubstituierte Kohlenwasserstoff-Rest B ausgewählt ist aus einer Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe, und
   - jeweils voneinander unabhängig $R^1$ eine Methyl-, Ethyl- oder Propyl-Gruppe und $R^3$ unabhängig eine Methyl-, Ethyl- oder Propyl-Gruppe sind.

7. Zusammensetzung nach einem der Ansprüche 1 bis 6,
   **dadurch gekennzeichnet,**
   **dass** die olefinisch funktionalisierte Siloxanoligomere zu größer gleich 30 % (Flächen-%, GPC) in Bezug auf die Gesamtzusammensetzung mit einem Molekulargewicht (Mw) von 500 bis 700 g/mol in der Zusammensetzung vorliegen.

8. Zusammensetzung nach einem der Ansprüche 1 bis 7,
   **dadurch gekennzeichnet,**
   **dass** die olefinisch funktionalisierten Siloxanoligomere zu größer gleich 60 % als Trisiloxan, Tetrasiloxan, Pentasiloxan, Cyclo-Tetrasiloxan, Cyclo-Pentasiloxan und/oder Cyclo-Hexasiloxan sowie als Gemisch enthaltend mindestens zwei der vorgenannten Siloxane in der Zusammensetzung vorliegen.

9. Zusammensetzung nach einem der Ansprüche 1 bis 8,
   **dadurch gekennzeichnet,**
   **dass** ein Masseverlust von 50 Gew.-%, bestimmt mittels TGA, bei einer Temperatur oberhalb 240 °C eintritt.

10. Zusammensetzung nach einem der Ansprüche 1 bis 9,
    **dadurch gekennzeichnet,**
    **dass** der Masseverlust der Zusammensetzung bestimmt nach TGA (Platintiegel, Deckel mit Loch, 10 K/min) bei einer Temperatur bis einschließlich 150 °C unter 5 Gew.-% liegt.

11. Zusammensetzung nach einem der Ansprüche 1 bis 10
    **dadurch gekennzeichnet,**
    **dass** der Masseverlust der Zusammensetzung bestimmt nach TGA (Platintiegel, Deckel mit Loch, 10 K/min) bei einer Temperatur bis einschließlich 200 °C unter 20 Gew.-% liegt.

12. Zusammensetzung nach einem der Ansprüche 1 bis 11,
**dadurch gekennzeichnet,**
**dass** ihr Alkoholgehalt nach vollständiger Hydrolyse der hydrolysierbaren Alkoxy-Gruppen kleiner gleich 20 Gew.-% beträgt, bevorzugt kleiner gleich 18 Gew.-%, besonders bevorzugt kleiner gleich 16 Gew.-%, weiter bevorzugt kleiner gleich 15 Gew.-%, insbesondere kleiner gleich 12 Gew.-%.

13. Zusammensetzung nach einem der Ansprüche 1 bis 12,
**dadurch gekennzeichnet,**
**dass**

(i) das Verhältnis der Silizium-Atome ausgewählt aus olefinisch und mit einem gesättigten Kohlenwasserstoff funktionalisierten Silizium-Atomen zu Alkoxy-Gruppen im Siloxanoligomere von 1 : 0,3 bis 1: 2,0 beträgt, mit der Maßgabe, dass das olefinisch funktionalisierte Siloxanoligomer aus Alkoxysilanen der allgemeinen Formel II und III abgeleitet ist oder
(ii) das Verhältnis der Silizium-Atome ausgewählt aus olefinisch und mit einem gesättigten Kohlenwasserstoff funktionalisierten Silizium-Atomen zu Alkoxy-Gruppen im Siloxanoligomere von 1 : 0,9 bis 1: 2,5 beträgt mit der Maßgabe, dass das olefinisch funktionalisierte Siloxanoligomer aus Alkoxysilanen der allgemeinen Formel II und IV und der Formel III abgeleitet ist.

14. Zusammensetzung nach einem der Ansprüche 1 bis 13,
**dadurch gekennzeichnet,**
**dass** ihr Gehalt an Silizium-Atomen monomeren Alkoxysilane kleiner gleich 3 % bis 0,0% in Bezug auf alle Silizium-Atome beträgt, wobei als monomere Alkoxysilane die Alkoxysilane der Formeln II, III und/oder IV sowie deren monomere Hydrolyseprodukte gelten.

15. Zusammensetzung nach einem der Ansprüche 1 bis 14,
**dadurch gekennzeichnet, dass**

a) die Siloxanoligomere und mindestens eine Struktur der Formel I, jeweils abgeleitet aus Alkoxysilanen der Formel II, als olefinischen Rest A eine Vinyl-Gruppe aufweisen, wobei $R^1$ jeweils unabhängig voneinander einer Methyl- oder Ethyl-Gruppe entspricht,
b) die Siloxanoligomere und mindestens eine Struktur der Formel I, jeweils abgeleitet aus Alkoxysilanen der Formel II, als olefinischen Rest A eine Vinyl-Gruppe und abgeleitet aus Alkoxysilanen der Formel III als unsubstituierten Kohlenwasserstoff-Rest B eine Propyl-Gruppe aufweisen, wobei $R^1$ und $R^3$ jeweils unabhängig voneinander einer Methyl- oder Ethyl-Gruppe entsprechen, oder
c) die Siloxanoligomere und mindestens eine Struktur der Formel I, jeweils abgeleitet aus Alkoxysilanen der Formel II und Formel IV und optional der Formel III, ausgewählt aus a) oder b) sind, wobei $R^3$ aus Formel IV abgeleitet jeweils unabhängig voneinander einer Methyl- oder Ethyl-Gruppe entspricht.

16. Zusammensetzung nach einem der Ansprüche 1 bis 15,
**dadurch gekennzeichnet,**
**dass** jeweils unabhängig die Siloxanoligomere abgeleitete Strukturelemente aus mindestens einem olefinisch funktionalisierten Alkoxysilanen der allgemeinen Formel II aufweisen, die ausgewählt sind aus Vinyltriethoxysilan, Vinyltrimethoxysilan, und optional aus Formel III, wobei die Alkoxysilane der Formel III ausgewählt sind aus Methyltriethoxysilan, Methyltrimethoxysilan, Ethyltriethoxysilan, Ethyltrimethoxysilan, Propyltriethoxysilan, Propyltrimethoxysilan, Butyltriethoxysilan, Butyltrimethoxysilan, n-Butyltriethoxysilan, n-Butyltrimethoxysilan, i-Butyltriethoxysilan, i-Butyltrimethoxysilan, Hexyltriethoxysilan, Hexyltrimethoxysilan, n-Hexyltriethoxysilan, n-Hexyltrimethoxysilan, iso-Hexyltriethoxysilan, iso-Hexyltrimethoxysilan, Heptyltriethoxysilan, Heptyltrimethoxysilan, Octyltriethoxysilan, Octyltrimethoxysilan, n-Octyltriethoxysilan, n-Octyltrimethoxysilan, iso-Octyltriethoxysilan, iso-Octyltrimethoxysilan, Undecyltriethoxysilan, Undecyltrimethoxysilan, Decyltriethoxysilan, Decyltrimethoxysilan, Nonadecyltriethoxysilan, Nonadecyltrimethoxysilan, Dodecyltriethoxysilan, Dodecyltrimethoxysilan, $C_{13}H_{27}$-Triethoxysilan, $C_{13}H_{27}$-Trimethoxysilan, $C_{14}H_{29}$-Triethoxysilan, $C_{14}H_{29}$-Trimethoxysilan, $C_{15}H_{31}$-Trimethoxysilan, $C_{15}H_{31}$-Triethoxysilan, Hexadecyltriethoxysilan und Hexadecyltrimethoxysilan sowie deren Umesterungsprodukten..

17. Zusammensetzung nach einem der Ansprüche 1 bis 16, **dadurch gekennzeichnet, dass** das Gewichtsmittel des Molekulargewichts (Mw) größer gleich 564 bis 1083 g/mol beträgt

**18.** Verfahren zur Herstellung einer Zusammensetzung nach einem der Ansprüche 1 bis 17, enthaltend olefinisch funktionalisierte Siloxanoligomere, indem mindestens

(i) ein olefinisch funktionalisiertes Alkoxysilan der allgemeinen Formel II,

$$A\text{-}Si(R^2)_x(OR^1)_{3-x} \qquad (II),$$

wobei in Formel II A einem olefinischen Rest entspricht, der ausgewählt ist aus einer linearen, verzweigten oder cyclischen Alkenyl- oder Cycloalkenyl-alkylen-funktionellen Gruppe mit jeweils 2 bis 16 C-Atomen, $R^2$ unabhängig einem linearen, verzweigten oder cyclischen Alkyl-Rest mit 1 bis 15 C-Atomen und x gleich 0 oder 1 und $R^1$ unabhängig einem linearen, verzweigten oder cyclischen Alkyl-Rest mit 1 bis 4 C-Atomen entsprechen,
(ii) in Gegenwart eines Hydrolyse- und/oder Kondensationskatalysators
(iii) mit einer definierten Menge Wasser von größer gleich 1,1 bis 1,59 Mol Wasser je Mol Silizium-Atome der eingesetzten Alkoxysilane, optional in Gegenwart eines Lösemittels, zu den Siloxanoligomeren umgesetzt werden und
(iv) der Hydrolysealkohol und das optional vorliegende Lösemittel im Wesentlichen abgetrennt werden und
(v) ein Gehalt an Gesamtchlorid in der Zusammensetzung kleiner gleich 250 mg/kg eingestellt wird,
(vi) wobei größer gleich 10 % der Silizium-Atome im olefinisch funktionalisierten Siloxanoligomer in Bezug auf die Gesamtsumme an Silizium-Atomen im Siloxanoligomer als T-Struktur vorliegen und
(vii) wobei die Zusammensetzung enthaltend olefinisch funktionalisierte Siloxanoligomere als Sumpfprodukt gewonnen wird.

**19.** Verfahren nach Anspruch 18,
**dadurch gekennzeichnet, dass** (i) ein olefinisch funktionalisiertes Alkoxysilan der allgemeinen Formel II in (ii) in Gegenwart eines Hydrolyse- und/oder Kondensationskatalysators mit

(i.1) mindestens einem Alkoxysilan der Formel III umgesetzt wird,

$$B\text{-}Si(R^4)_y(OR^3)_{3-y} \qquad (III),$$

wobei in Formel III B einem gesättigten Kohlenwasserstoff-Rest entspricht, der ausgewählt ist aus einem linearen, verzweigten oder cyclischen Alkyl-Rest mit 1 bis 16 C-Atomen, $R^3$ jeweils unabhängig voneinander einem linearen, verzweigten oder cyclischen Alkyl-Rest mit 1 bis 4 C-Atomen und $R^4$ einem linearen, verzweigten oder cyclischen Alkyl-Rest mit 1 bis 15 C-Atomen entsprechen und y gleich 0 oder 1 ist.

**20.** Verfahren nach Anspruch 18 oder 19,
**dadurch gekennzeichnet, dass** (i) ein olefinisch funktionalisiertes Alkoxysilan der allgemeinen Formel II in (ii) in Gegenwart eines Hydrolyse- und/oder Kondensationskatalysators mit

(i.2) mindestens einem Tetraalkoxysilan der Formel IV umgesetzt wird,

$$Si(OR^3)_4 \qquad (IV),$$

wobei in Formel IV $R^3$ jeweils unabhängig voneinander ein linearer, verzweigter oder cyclischer Alkyl-Rest mit 1 bis 4 C-Atomen ist.

**21.** Verfahren nach einem der Ansprüche 18 bis 20,
**dadurch gekennzeichnet,**
**dass** als Lösemittel Alkohol eingesetzt wird.

**22.** Verfahren nach einem der Ansprüche 18 bis 21,
**dadurch gekennzeichnet,**
**dass**

- im olefinisch funktionalisierten Alkoxysilan der allgemeinen Formel II

$$A\text{-}Si(R^2)_x(OR^1)_{3-x} \qquad (II)$$

A eine Vinyl-, Allyl-, Butenyl-, Pentenyl-, Hexenyl-, Ethylhexenyl-, Heptenyl-, Octenyl-, Cyclohexenyl-C1 bis C8-alkylen-, Cyclohexenyl-2-ethylen-, 3'-Cyclohexenyl-2-ethylen-, Cyclohexadienyl-C1 bis C8-alkylen- oder Cyclohexadienyl-2-ethylen-Gruppe, x gleich 0 oder 1, $R^2$ unabhängig einem linearen, verzweigten oder cyclischen Alkyl-Rest mit 1 bis 15 C-Atomen entsprechen und $R^1$ unabhängig eine Methyl-, Ethyl- oder Propyl-Gruppe ist und unabhängig

- optional im Alkoxysilan der Formel III

$$B\text{-}Si(R^4)_y(OR^3)_{3-y} \qquad \text{(III)}$$

der unsubstituierte Kohlenwasserstoff-Rest B eine Methyl-, Ethyl-, Propyl-, Butyl-, i-Butyl-, n-Butyl-, tert-Butyl-, Pentyl-, n-Pentyl-, iso-Pentyl-, neo-Pentyl-, Hexyl-, i-Hexyl-, neo-Hexyl-, 2,2-Dimethylbutyl-, 2,3-Dimethylbutyl-, 2-Methylpentyl-, 3-Methylpentyl-, Heptyl-, Octyl-, n-Octyl-, iso-Octyl-, Nonyl-, Decyl-, Undecyl-, Dodecyl- , $C_{13}H_{27}$-, $C_{14}H_{29}$-, $C_{15}H_{31}$- und Hexadecyl-Gruppe ist, y gleich 0 oder 1, $R^4$ einem linearen, verzweigten oder cyclischen Alkyl-Rest mit 1 bis 15 C-Atomen entsprechen und $R^3$ unabhängig eine Methyl-, Ethyl- oder Propyl-Gruppe ist.

23. Verfahren nach einem der Ansprüche 18 bis 22
**dadurch gekennzeichnet, dass**
in dem olefinisch funktionalisierten Alkoxysilanen der allgemeinen Formel II x gleich 0 ist und/oder in dem mit einem gesättigten Kohlenwasserstoff-Rest funktionalisierten Alkoxysilan der Formel III y gleich 0 ist.

24. Verfahren nach einem der Ansprüche 18 bis 23,
**dadurch gekennzeichnet, dass** jeweils unabhängig

- das olefinisch funktionalisierten Alkoxysilan der allgemeinen Formel II ausgewählt ist aus Vinyltriethoxysilan, Allyltriethoxysilan, Butenyltriethoxysilan, Pentenyltriethoxysilan, Hexenyltriethoxysilan, Ethylhexenyltriethoxysilan, Heptenyltriethoxysilan, Octenyltriethoxysilan, Cyclohexenyl-C1 bis C8-alkylentriethoxysilan, Cyclohexenyl-2-ethylentriethoxysilan, 3'-Cyclohexenyl-2-ethylentriethoxysilan, Cyclohexadienyl-C1 bis C8-alkylentriethoxysilan, Cyclohexadienyl-2-ethylentriethoxysilan, Vinyltrimethoxysilan, Allyltrimethoxysilan, Butenyltrimethoxysilan, Pentenyltrimethoxysilan, Hexenyltrimethoxysilan, Ethylhexenyltrimethoxysilan, Heptenyltrimethoxysilan, Octenyltrimethoxysilan, Cyclohexenyl-C1 bis C8-alkylentrimethoxysilan, Cyclohexenyl-2-ethylentrimethoxysilan, 3'-Cyclohexenyl-2-ethylentrimethoxysilan, Cyclohexadienyl-C1 bis C8-alkylentrimethoxysilan und Cyclohexadienyl-2-ethylentrimethoxysilan, und jeweils unabhängig
- das Alkoxysilan der Formel III ausgewählt ist aus Methyltriethoxysilan, Ethyltriethoxysilan, n-Propyltriethoxysilan, iso-Propyltriethoxysilan, Butyltriethoxysilan,n-Butyltriethoxysilan, i-Butyltriethoxysilan, Hexyltriethoxysilan, n-Hexyltriethoxysilan, iso-Hexyltriethoxysilan, Heptyltriethoxysilan, Octyltriethoxysilan, n-Octyltriethoxysilan, iso-Octyltriethoxysilan, Undecyltriethoxysilan, Decyltriethoxysilan, Nonadecyltriethoxysilan, Dodecyltriethoxysilan, $C_{13}H_{27}$-Triethoxysilan, $C_{14}H_{29}$-Triethoxysilan oder $C_{15}H_{31}$-Triethoxysilan, Hexadecyltriethoxysilan, Methyltrimethoxysilan, Ethyltrimethoxysilan, n-Propyltrimethoxysilan, iso-Propyltrimethoxysilan Butyltrimethoxysilan, n-Butyltrimethoxysilan, i-Butyltrimethoxysilan, Hexyltrimethoxysilan, n-Hexyltrimethoxysilan, iso-Hexyltrimethoxysilan, Heptyltrimethoxysilan, Octyltrimethoxysilan, n-Octyltrimethoxysilan, iso-Octyltrimethoxysilan, Undecyltrimethoxysilan, Decyltrimethoxysilan, Nonadecyltrimethoxysilan, Dodecyltrimethoxysilan, $C_{13}H_{27}$-Trimethoxysilan, $C_{14}H_{29}$-Trimethoxysilan oder $C_{15}H_{31}$-Trimethoxysilan und Hexadecyltrimethoxysilan und jeweils unabhängig
- das Alkoxysilan der Formel IV ausgewählt ist aus Tetraethoxysilan und Tetramethoxysilan.

25. Verfahren nach einem der Ansprüche 18 bis 24,
**dadurch gekennzeichnet,**
**dass** eine definierte Menge Wasser von größer gleich 1,1 bis 1,58 Mol Wasser je Mol Silizium-Atome der eingesetzten Alkoxysilane der Formel II und/oder III zugesetzt wird

26. Verfahren nach Anspruch 25,
**dadurch gekennzeichnet,**
**dass** eine definierte Menge Wasser von größer gleich 1,2 bis 1,57 Mol Wasser, 1,25 bis 1,56 Mol Wasser, oder 1,21; 1,22; 1,23; 1,24; 1,26; 1,27; 1,28; 1,29; 1,30; 1,31; 1,32; 1,33; 1,34; 1,35; 1,36; 1,37; 1,38; 1,39; 1,40; 1,41; 1,42; 1,43; 1,44; 1,45; 1,46; 1,47; 1,48; 1,49; 1,50; 1,51; 1,52; 1,53; 1,54; 1,55 Mol Wasser je Mol Silizium-Atome der eingesetzten Alkoxysilane der Formel II und/oder III zugesetzt wird.

**27.** Verfahren nach einem der Ansprüche 18 bis 26,
**dadurch gekennzeichnet,**
**dass** die Alkoxysilane der Formeln II, III und/oder IV in Gegenwart eines sauren Katalysators, insbesondere mit Chlorwasserstoff, zumindest partiell hydrolysiert und kondensiert werden.

**28.** Verfahren nach einem der Ansprüche 18 bis 27,
**dadurch gekennzeichnet,**
**dass** der Alkohol im Wesentlichen vollständig entfernt wird.

**29.** Verfahren nach einem der Ansprüche 18 bis 28,
**dadurch gekennzeichnet,**
**dass** (29.i) die Wassermenge kontinuierlich oder mit mindestens einer Unterbrechung über eine Zeitraum von 1 bis 1000 Minuten zudosiert wird und die Temperatur im Reaktionsgemisch 5 bis 90°C beträgt bei einem pH-Wert kleiner gleich 7 optional wird das Wasser zusammen mit dem Katalysator und/oder einem Alkohol zugegeben,
(29.ii) die Mischung aus (29.i) wird gegebenenfalls für mindestens 10 Minuten bis 36 Stunden bei 5 bis 80 °C weiterumgesetzt.

**30.** Verfahren nach einem der Ansprüche 18 bis 29,
**dadurch gekennzeichnet,**
**dass** der Hydrolysealkohol und das optional vorliegende Lösemittel destillativ abgetrennt werden und vorzugsweise (30.i) mindestens einmal während der destillativen Abtrennung des Hydrolysealkohols und des optional vorliegenden Lösemittels eine definierte Menge Alkohol zugegeben wird und/oder
(30.ii) vor oder während der destillativen Abtrennung eine definierte Menge eines Reduktionsmittels oder einer Base zugesetzt werden, und nachfolgend das olefinisch funktionalisierte Siloxanoligomer filtriert oder dekantiert wird oder das olefinische Siloxanoligomer mit einem Ionentauscher in Kontakt gebracht wird.

**31.** Verfahren nach einem der Ansprüche 18 bis 30,
**dadurch gekennzeichnet,**
**dass** das Silan der Formel II und das Silan der Formel III im Verhältnis 1:0 bis 1:8 eingesetzt werden und/oder das Silan der Formel II im Verhältnis zum Silan der Formel IV im Verhältnis 1:0 bis 1:0,22 eingesetzt wird.

**32.** Zusammensetzung enthaltend olefinisch funktionalisierte Siloxanoligomere erhältlich nach einem Verfahren nach einem der Ansprüche 18 bis 31.

**33.** Verwendung einer Zusammensetzung nach einem der Ansprüche 1 bis 17 oder 32 oder hergestellt nach einem der Ansprüche 18 bis 31, als Haftmittel, als Vernetzungsmittel durch Pfropfpolymerisation und/oder hydrolytische Kondensation in an sich bekannter Weise, zur Herstellung von mit olefinisch funktionalisierten Siloxanoligomeren gepfropfter Polymere, Pre-Polymere und/oder von mineralisch gefüllten Polymeren, zur Herstellung von mit olefinisch funktionalisierten Siloxanoligomeren gepfropfter Polymere, Pre-Polymere und/oder von mineralisch gefüllten Thermoplasten oder Elastomeren, bevorzugt von mineralisch gefüllten Thermoplasten, Elastomeren oder von Pre-Polymeren dieser, zur Pfropfung oder bei der Polymerisation thermoplastischer Polyolefine, als Trockenmittel, insbesondere als Wasserfänger für Silikondichtmassen, in vernetzbaren Polymeren zur Herstellung von Kabeln, zur Herstellung vernetzbarer Polymere, als Ölphase in einer Emulsion und/oder gemeinsam mit Organosilanen oder Organopolysiloxanen, zur Füllstoffmodifizierung Füllstoffbeschichtung, Harzmodifizierung, Harzadditiv, Oberflächenmodifizierung, Oberflächenfunktionalisierung, Oberflächenhydrophobierung, als Bestandteil in Beschichtungssystemen als Bestandteil in Sol-Gel Systemen, Beschichtungssystemen oder Hybrid-Beschichtungssystemen, zur Modifizierung von Kathoden und Anodenmaterialien in Batterien, als Elektrolytflüssigkeit, als Additiv in Elektrolytflüssigkeiten, für die Modifizierung von Fasern, insbesondere Glasfasern und Naturfasern, sowie zur Modifizierung von Textilien, zur Modifizierung von Füllstoffen für die Kunststeinindustrie, als Bautenschutzmittel oder Bestandteil in Bautenschutzmittel, als Zusatz für mineralisch härtende Massen, zur Modifizierung von Holz, Holzfasern und Cellulose.

**Claims**

**1.** Composition comprising olefinically functionalized siloxane oligomers
having not more than one olefinic radical on the silicon atom,
**characterized**

**in that**

- the olefinically functionalized siloxane oligomers have Si-O-crosslinked structural elements which form catenary, cyclic, crosslinked or optionally three-dimensionally crosslinked structures, with at least one structure corresponding to the general formula I,

$$(R^1O) [(R^1O)_{1-x}(R^2)_xSi(A)O]_a[Si(Y)_2O]_c[Si(B) (R^4)_y(OR^3)_{1-y}O]_bR^3 \qquad (I),$$

- wherein the structural elements are derived from alkoxysilanes and
- A in the structural element corresponds to an olefinic radical and is selected from a linear, branched or cyclic alkenyl- or cycloalkenyl-alkylene-functional group having in each case 2 to 16 C atoms and
- B in the structural element corresponds to a saturated hydrocarbon radical and is selected from a linear, branched or cyclic alkyl radical having 1 to 16 C atoms,
- Y corresponds to $OR^3$ or, in crosslinked and optionally three-dimensionally crosslinked structures, independently of one another, to $OR^3$ or $O_{1/2}$,
- where $R^1$ independently at each occurrence corresponds to a linear, branched or cyclic alkyl radical having 1 to 4 C atoms or H,
- $R^3$ independently at each occurrence corresponds to a linear, branched or cyclic alkyl radical having 1 to 4 C atoms or to H, and $R^2$ corresponds independently at each occurrence to a linear, branched or cyclic alkyl radical having 1 to 15 C atoms, $R^4$ corresponds independently at each occurrence to a linear, branched or cyclic alkyl radical having 1 to 15 C atoms,
- a, b, c, x and y independently correspond to integers with $1 \leq a$, $0 \leq b$, $0 \leq c$, x independently at each occurrence is 0 or 1, y independently at each occurrence is 0 or 1, and $(a+b+c) \geq 2$,
- the total chloride content being less than or equal to 250 mg/kg and
- the structural elements $[(R^1O)_{1-x} (R^2)_xSi (A) O]_a$, $[Si(B) (R^4)_y(OR^3)_{1-y}O]_b$ and $[Si(Y)_2O]_c$ in the general formula I being present together, in relation to all silicon atoms of the general formula I, at greater than or equal to 10% as T structure.

2. Composition according to Claim 1,
   **characterized**
   **in that** the siloxane oligomers have derived structural elements from at least one of the alkoxysilanes,

   (i) from olefinically functionalized alkoxysilanes of the general formula II,

   $$A-Si(R^2)_x(OR^1)_{3-x} \qquad (II)$$

   where A corresponds to an olefinic radical and is selected from a linear, branched or cyclic alkenyl- or cycloalkenyl-alkylene-functional group having in each case 2 to 16 C atoms, where $R^2$ independently at each occurrence is a linear, branched or cyclic alkyl radical having 1 to 15 C atoms, and x independently at each occurrence is 0 or 1, and $R^1$ independently corresponds to a methyl, ethyl or propyl group, and
   (ii) optionally from alkoxysilane of the formula III functionalized with a saturated hydrocarbon radical,

   $$B-Si(R^4)_y(OR^3)_{3-y} \qquad (III)$$

   where B corresponds to an unsubstituted hydrocarbon radical and is selected from a linear, branched or cyclic alkyl radical having 1 to 16 C atoms, where $R^4$ independently at each occurrence is a linear, branched or cyclic alkyl radical having 1 to 15 C atoms, and y independently at each occurrence is 0 or 1, and $R^3$ independently corresponds to a methyl, ethyl or propyl group, and
   (iii) optionally from a tetraalkoxysilane of the general formula IV $Si(OR^3)_4$ where $R^3$ independently at each occurrence is as defined above.

3. Composition according to Claim 1 or 2, **characterized**
   **in that**, selected in each case independently of one another,

   (i) the structural element $[(R^1O)_{1-x}(R^2)_xSi(A)O]_a$ in the general formula I is present, in relation to all silicon atoms of the general formula I, at greater than or equal to 5%, more particularly at greater than or equal to 7.5%, as T structure,
   (ii) the structural elements $[(R^1O)_{1-x}(R^2)_xSi(A)O]_a$ and $[Si(B) (R^4)_y(OR^3)_{1-y}O]_b$ and $[Si(Y)_2O]_c$ in the general formula I are present together, in relation to all silicon atoms of the general formula I, at greater than or equal to 50% as D structure,

(iii) the structural element $[(R^1O)_{1-x}(R^2)_x Si(A)O]_a$ is present in the general formula I, in relation to all silicon atoms of the general formula I, at less than or equal to 35% as M structure,

(iv) the structural element $[Si (B) (R^4)_y(OR^3)_{1-y}O]_b$ in the general formula I is present, in relation to all silicon atoms of the general formula I, at less than or equal to 25% as M structure, and

(v) the structural element $[Si(Y)_2O]_c$ in the general formula I is present at greater than or equal to 20% as D structure, or more than 40% of the structural elements $[Si(Y)_2O]_c$ in the general formula I are present as D structure.

4. Composition according to any of Claims 1 to 3,
   **characterized**
   **in that**, in the olefinically functionalized alkoxysilanes of the general formula II, x is 0 and, optionally, in the alkoxysilane of the formula III functionalized with a saturated hydrocarbon radical, y is 0.

5. Composition according to any of Claims 1 to 4,
   **characterized**
   **in that**

   - in formulae I and/or II, the olefinic radical A is a non-hydrolysable olefinic radical selected from a vinyl, allyl, butenyl, 3-butenyl, pentenyl, hexenyl, ethylhexenyl, heptenyl, octenyl and cyclohexenyl-C1 to C8-alkylene, cyclohexenyl-2-ethylene, 3'-cyclohexenyl-2-ethylene, cyclohexadienyl-C1 to C8-alkylene, cyclohexadienyl-2-ethylene group, and independently thereof
   - in formulae I and/or III, the unsubstituted hydrocarbon radical B is selected from a methyl, ethyl, propyl, butyl, isobutyl, n-butyl, tert-butyl, pentyl, n-pentyl, isopentyl, neopentyl, hexyl, isohexyl, neohexyl, 2,2-dimethylbutyl, 2,3-dimethylbutyl, 2-methylpentyl, 3-methylpentyl, heptyl, octyl, n-octyl, isooctyl, nonyl, decyl, undecyl, dodecyl, $C_{13}H_{27}$, $C_{14}H_{29}$, $C_{15}H_{31}$ and hexadecyl group,
   - independently at each occurrence $R^1$ is a methyl, ethyl or propyl group and $R^3$ independently is a methyl, ethyl or propyl group.

6. Composition according to any of Claims 1 to 5,
   **characterized**
   **in that**

   - in formulae I and/or II, the olefinic radical A is a vinyl group, and independently thereof
   - in formulae I and/or III, the unsubstituted hydrocarbon radical B is selected from a methyl, ethyl, propyl, butyl, isobutyl, n-butyl, tert-butyl, pentyl, n-pentyl, isopentyl, neopentyl, hexyl, isohexyl, neohexyl, 2,2-dimethylbutyl, 2,3-dimethylbutyl, 2-methylpentyl, 3-methylpentyl, heptyl, octyl, n-octyl, isooctyl, nonyl, decyl, undecyl, dodecyl, $C_{13}H_{27}$, $C_{14}H_{29}$, $C_{15}H_{31}$ and hexadecyl group, and
   - independently at each occurrence $R^1$ is a methyl, ethyl or propyl group and $R^3$ independently is a methyl, ethyl or propyl group.

7. Composition according to any of Claims 1 to 6,
   **characterized**
   **in that** the olefinically functionalized siloxane oligomers are present at greater than or equal to 30% (area%, GPC) in relation to the overall composition with a molecular weight (Mw) of 500 to 700 g/mol in the composition.

8. Composition according to any of Claims 1 to 7,
   **characterized**
   **in that** the olefinically functionalized siloxane oligomers are present at greater than or equal to 60% as trisiloxane, tetrasiloxane, pentasiloxane, cyclotetrasiloxane, cyclopentasiloxane and/or cyclohexasiloxane and also as a mixture comprising at least two of the aforementioned siloxanes in the composition.

9. Composition according to any of Claims 1 to 8,
   **characterized**
   **in that** a mass loss of 50 wt%, determined by TGA, occurs at a temperature above 240°C.

10. Composition according to any of Claims 1 to 9,

**characterized**
**in that** the loss of mass by the composition as determined by TGA (platinum crucible, lid with hole, 10 K/min) at a temperature up to and including 150°C is less than 5 wt%.

11. Composition according to any of Claims 1 to 10,
**characterized**
**in that** the loss of mass by the composition as determined by TGA (platinum crucible, lid with hole, 10 K/min) at a temperature up to and including 200°C is less than 20 wt%.

12. Composition according to any of Claims 1 to 11,
**characterized**
**in that** its alcohol content after complete hydrolysis of the hydrolysable alkoxy groups is less than or equal to 20 wt%, preferably less than or equal to 18 wt%, more preferably less than or equal to 16 wt%, more preferably still less than or equal to 15 wt%, more particularly less than or equal to 12 wt%.

13. Composition according to any of Claims 1 to 12,
**characterized**
**in that**

(i) the ratio of the silicon atoms selected from silicon atoms functionalized olefinically and silicon atoms functionalized with a saturated hydrocarbon to alkoxy groups in the siloxane oligomer is from 1:0.3 to 1:2.0, with the proviso that the olefinically functionalized siloxane oligomer
derives from alkoxysilanes of the general formulae II and III, or
(ii) the ratio of the silicon atoms selected from silicon atoms functionalized olefinically and silicon atoms functionalized with
a saturated hydrocarbon to alkoxy groups in the siloxane oligomer is from 1:0.9 to 1:2.5, with the proviso that the olefinically functionalized siloxane oligomer derives from alkoxysilanes of the general formulae II and IV and of the formula III.

14. Composition according to any of Claims 1 to 13,
**characterized**
**in that** the amount of silicon atoms in monomeric alkoxysilanes therein is less than or equal to 3% to 0.0% in relation to all silicon atoms, with monomeric alkoxysilanes being considered to be the alkoxysilanes of the formulae II, III and/or IV and also their monomeric hydrolysis products.

15. Composition according to any of Claims 1 to 14,
**characterized in that**

a) the siloxane oligomers and at least one structure of the formula I, in each case derived from alkoxysilanes of the formula II, have a vinyl group as olefinic radical A, with $R^1$ independently at each occurrence corresponding to a methyl or ethyl group,
b) the siloxane oligomers and at least one structure of the formula I, in each case derived from alkoxysilanes of the formula II, have a vinyl group as olefinic radical A, and derived from alkoxysilanes of the formula III have a propyl group as unsubstituted hydrocarbon radical B, where $R^1$ and $R^3$ independently at each occurrence correspond to a methyl or ethyl group, or
c) the siloxane oligomers and at least one structure of the formula I, in each case derived from alkoxysilanes of the formula II and formula IV and optionally of the formula III, are selected from a) or b), where $R^3$ derives from formula IV and independently at each occurrence corresponds to a methyl or ethyl group.

16. Composition according to any of Claims 1 to 15,
**characterized**
**in that**, in each case independently, the siloxane oligomers have derived structural elements from at least one olefinically functionalized alkoxysilane of the general formula II selected from vinyltriethoxysilane, vinyltrimethoxysilane, and optionally of formula III, the alkoxysilanes of the formula III being selected from methyltriethoxysilane, methyltrimethoxysilane, ethyltriethoxysilane, ethyltrimethoxysilane, propyltriethoxysilane, propyltrimethoxysilane, butyltriethoxysilane, butyltrimethoxysilane, n-butyltriethoxysilane, n-butyltrimethoxysilane, isobutyltriethoxysilane, isobutyltrimethoxysilane, hexyltriethoxysilane, hexyltrimethoxysilane, n-hexyltriethoxysilane, n-hexyltrimethoxysilane, isohexyltriethoxysilane, isohexyltrimethoxysilane, heptyltriethoxysilane, heptyltrimethoxysilane, octyltriethoxysilane, octyltrimethoxysilane, n-octyltriethoxysilane, n-octyltrimethoxysilane, isooctyltriethoxysilane, isooctyltrimethoxysilane, undecyltriethoxysilane, undecyltrimethoxysilane, decyltriethoxysilane, decyltrimethoxysilane, nonadecyltriethoxysilane, nonadecyltrimethoxysilane, dodecyltriethoxysilane, dodecyltrimethoxysilane, $C_{13}H_{27}$-triethoxysilane, $C_{13}H_{27}$-trimethoxysilane, $C_{14}H_{29}$-triethoxysilane, $C_{14}H_{29}$-trimethoxysilane, $C_{15}H_{31}$-trimethoxysilane, $C_{15}H_{31}$-triethoxysilane, hexadecyltriethoxysilane and hexadecyltrimethoxysilane, and also their transesterification products.

17. Composition according to any of Claims 1 to 16,
    **characterized in that** the weight-average molecular weight (Mw) is greater than or equal to 564 to 1083 g/mol.

18. Process for preparing a composition according to any of Claims 1 to 17, comprising olefinically functionalized siloxane oligomers, by reacting at least

    (i) an olefinically functionalized alkoxysilane of the general formula II,

    $$A\text{-}Si(R^2)_x(OR^1)_{3-x} \qquad (II),$$

    where in formula II A corresponds to an olefinic radical selected from a linear, branched or cyclic alkenyl- or cycloalkenyl-alkylene-functional group having in each case 2 to 16 C atoms, $R^2$ independently corresponds to a linear, branched or cyclic alkyl radical having 1 to 15 C atoms and x is 0 or 1, and $R^1$ independently corresponds to a linear, branched or cyclic alkyl radical having 1 to 4 C atoms,
    (ii) in the presence of a hydrolysis and/or condensation catalyst
    (iii) with a defined amount of water of greater than or equal to 1.1 to 1.59 mol of water per mole of silicon atoms in the alkoxysilanes used, optionally in the presence of a solvent, to give the siloxane oligomers, and
    (iv) substantially removing the hydrolysis alcohol and the solvent that is optionally present, and
    (v) setting a total chloride content in the composition of less than or equal to 250 mg/kg,
    (vi) where greater than or equal to 10% of the silicon atoms in the olefinically functionalized siloxane oligomer, in relation to the sum total of silicon atoms in the siloxane oligomer, are present as T structure, and
    (vii) where the composition comprising olefinically functionalized siloxane oligomers is obtained as liquid-phase product.

19. Process according to Claim 18,
    **characterized in that** (i) an olefinically functionalized alkoxysilane of the general formula II is reacted in (ii), in the presence of a hydrolysis and/or condensation catalyst, with (i.1) at least one alkoxysilane of the formula III,

    $$B\text{-}Si(R^4)_y(OR^3)_{3-y} \qquad (III),$$

    where in formula III B corresponds to a saturated hydrocarbon radical selected from a linear, branched or cyclic alkyl radical having 1 to 16 C atoms, $R^3$ corresponds independently at each occurrence to a linear, branched or cyclic alkyl radical having 1 to 4 C atoms, and $R^4$ corresponds to a linear, branched or cyclic alkyl radical having 1 to 15 C atoms, and y is 0 or 1.

20. Process according to Claim 18 or 19,
    **characterized in that** (i) an olefinically functionalized alkoxysilane of the general formula II is reacted in (ii), in the presence of a hydrolysis and/or condensation catalyst, with (i.2) at least one tetraalkoxysilane of the formula IV,

    $$Si(OR^3)_4 \qquad (IV),$$

    where in formula IV $R^3$ independently at each occurrence is a linear, branched or cyclic alkyl radical having 1 to 4 C atoms.

21. Process according to any of Claims 18 to 20,
    **characterized**
    **in that** alcohol is used as solvent.

22. Process according to any of Claims 18 to 21,
    **characterized**
    **in that**

- in the olefinically functionalized alkoxysilane of the general formula II

$$A\text{-Si}(R^2)_x(OR^1)_{3-x} \qquad (II)$$

A is a vinyl, allyl, butenyl, pentenyl, hexenyl, ethylhexenyl, heptenyl, octenyl, cyclohexenyl-C1 to C8-alkylene, cyclohexenyl-2-ethylene, 3'-cyclohexenyl-2-ethylene, cyclohexadienyl-C1 to C8-alkylene or cyclohexadienyl-2-ethylene group, x is 0 or 1, $R^2$ independently corresponds to a linear, branched or cyclic alkyl radical having 1 to 15 C atoms, and $R^1$ independently is a methyl, ethyl or propyl group, and independently
- optionally in the alkoxysilane of the formula III

$$B\text{-Si}(R^4)_y(OR^3)_{3-y} \qquad (III)$$

the unsubstituted hydrocarbon radical B is a methyl, ethyl, propyl, butyl, isobutyl, n-butyl, tert-butyl, pentyl, n-pentyl, isopentyl, neopentyl, hexyl, isohexyl, neohexyl, 2,2-dimethylbutyl, 2,3-dimethylbutyl, 2-methylpentyl, 3-methylpentyl, heptyl, octyl, n-octyl, isooctyl, nonyl, decyl, undecyl, dodecyl, $C_{13}H_{27}$, $C_{14}H_{29}$, $C_{15}H_{31}$ and hexadecyl group, y is 0 or 1, $R^4$ corresponds to a linear, branched or cyclic alkyl radical having 1 to 15 C atoms, and $R^3$ independently is a methyl, ethyl or propyl group.

23. Process according to any of Claims 18 to 22,
    **characterized in that**,
    in the olefinically functionalized alkoxysilane of the general formula II, x is 0, and/or, in the alkoxysilane of the formula III functionalized with a saturated hydrocarbon radical, y is 0.

24. Process according to any of Claims 18 to 23,
    **characterized in that**, in each case independently,

    - the olefinically functionalized alkoxysilane of the general formula II is selected from vinyltriethoxysilane, allyltriethoxysilane, butenyltriethoxysilane, pentenyltriethoxysilane, hexenyltriethoxysilane, ethylhexenyltriethoxysilane, heptenyltriethoxysilane, octenyltriethoxysilane, cyclohexenyl-C1 to C8-alkylenetriethoxysilane, cyclohexenyl-2-ethylenetriethoxysilane, 3'-cyclohexenyl-2-ethylenetriethoxysilane, cyclohexadienyl-C1 to C8-alkylenetriethoxysilane, cyclohexadienyl-2-ethylenetriethoxysilane, vinyltrimethoxysilane, allyltrimethoxysilane, butenyltrimethoxysilane, pentenyltrimethoxysilane, hexenyltrimethoxysilane, ethylhexenyltrimethoxysilane, heptenyltrimethoxysilane, octenyltrimethoxysilane, cyclohexenyl-C1 to C8-alkylenetrimethoxysilane, cyclohexenyl-2-ethylenetrimethoxysilane, 3'-cyclohexenyl-2-ethylenetrimethoxysilane, cyclohexadienyl-C1 to C8-alkylenetrimethoxysilane and cyclohexadienyl-2-ethylenetrimethoxysilane, and, in each case independently,
    - the alkoxysilane of the formula III is selected from methyltriethoxysilane, ethyltriethoxysilane, n-propyltriethoxysilane, isopropyltriethoxysilane, butyltriethoxysilane, n-butyltriethoxysilane, isobutyltriethoxysilane, hexyltriethoxysilane, n-hexyltriethoxysilane, isohexyltriethoxysilane, heptyltriethoxysilane, octyltriethoxysilane, n-octyltriethoxysilane, isooctyltriethoxysilane, undecyltriethoxysilane, decyltriethoxysilane, nonadecyltriethoxysilane, dodecyltriethoxysilane, $C_{13}H_{27}$-triethoxysilane, $C_{14}H_{29}$-triethoxysilane or $C_{15}H_{31}$-triethoxysilane, hexadecyltriethoxysilane, methyltrimethoxysilane, ethyltrimethoxysilane, n-propyltrimethoxysilane, isopropyltrimethoxysilane, butyltrimethoxysilane, n-butyltrimethoxysilane, isobutyltrimethoxysilane, hexyltrimethoxysilane, n-hexyltrimethoxysilane, isohexyltrimethoxysilane, heptyltrimethoxysilane, octyltrimethoxysilane, n-octyltrimethoxysilane, isooctyltrimethoxysilane, undecyltrimethoxysilane, decyltrimethoxysilane, nonadecyltrimethoxysilane, dodecyltrimethoxysilane, $C_{13}H_{27}$-trimethoxysilane, $C_{14}H_{29}$-trimethoxysilane or $C_{15}H_{31}$-trimethoxysilane and hexadecyltrimethoxysilane, and, in each case independently,
    - the alkoxysilane of the formula IV is selected from tetraethoxysilane and tetramethoxysilane.

25. Process according to any of Claims 18 to 24,
    **characterized**
    **in that** a defined amount of water of greater than or equal to 1.1 to 1.58 mol of water per mole of silicon atoms in the alkoxysilanes of the formula II and/or III used is added.

26. Process according to Claim 25,
    **characterized**
    **in that** a defined amount of water of greater than or equal to 1.2 to 1.57 mol of water, 1.25 to 1.56 mol of water, or 1.21; 1.22; 1.23; 1.24; 1.26; 1.27; 1.28; 1.29; 1.30; 1.31; 1.32; 1.33; 1.34; 1.35; 1.36; 1.37; 1.38; 1.39; 1.40; 1.41; 1.42; 1.43; 1.44; 1.45; 1.46; 1.47; 1.48; 1.49; 1.50; 1.51; 1.52; 1.53; 1.54; 1.55 mol of water per mole of silicon atoms in the alkoxysilanes of the formula II and/or III used is added.

27. Process according to any of Claims 18 to 26,
**characterized**
**in that** the alkoxysilanes of the formulae II, III and/or IV are subjected to at least partial hydrolysis and condensation in the presence of an acidic catalyst, more particularly with hydrogen chloride.

28. Process according to any of Claims 18 to 27,
**characterized**
**in that** the alcohol is substantially completely removed.

29. Process according to any of Claims 18 to 28,
**characterized**
**in that** (29.i) the amount of water is metered in continuously or with at least one interruption over a period of 1 to 1000 minutes and the temperature in the reaction mixture is 5 to 90°C, at a pH of less than or equal to 7 the water being added optionally together with the catalyst and/or with an alcohol,
(29.ii) the mixture from (29.i) is optionally reacted further for at least 10 minutes to 36 hours at 5 to 80°C.

30. Process according to any of Claims 18 to 29,
**characterized**
**in that** the hydrolysis alcohol and the solvent optionally present are removed by distillation and preferably
(30.i) at least once during the distillative removal of the hydrolysis alcohol and of the solvent optionally present, a defined amount of alcohol is added, and/or
(30.ii) before or during the distillative removal, a defined amount of a reducing agent or a base is added, and subsequently the olefinically functionalized siloxane oligomer is filtered or decanted, or the olefinic siloxane oligomer is contacted with an ion exchanger.

31. Process according to any of Claims 18 to 30,
**characterized**
**in that** the silane of the formula II and the silane of the formula III are used in a ratio of 1:0 to 1:8 and/or the silane of the formula II is used in a ratio to the silane of the formula IV of 1:0 to 1:0.22.

32. Composition comprising olefinically functionalized siloxane oligomers, obtainable by a process according to any of Claims 18 to 31.

33. Use of a composition according to any of Claims 1 to 17 and 32 or prepared according to any of Claims 18 to 31 as adherence agent, as crosslinking agent by graft polymerization and/or hydrolytic condensation in a conventional way, for producing polymers grafted with olefinically functionalized siloxane oligomers, prepolymers and/or mineral-filled polymers, for producing polymers grafted with olefinically functionalized siloxane oligomers, prepolymers and/or mineral-filled thermoplastics or elastomers, preferably mineral-filled thermoplastics, elastomers or prepolymers thereof, for the grafting or in the polymerization of thermoplastic polyolefins, as drying agent, more particularly as water scavenger for silicone sealants, in crosslinkable polymers for producing cables, for producing crosslinkable polymers, as oil phase in an emulsion and/or together with organosilanes or organopolysiloxanes, for filler modification, filler coating, resin modification, as resin additive, for surface modification, surface functionalization, surface hydrophobization, as constituent in sol-gel systems, coating systems or hybrid coating systems, for modifying cathodes and anode materials in batteries, as electrolyte fluid, as additive in electrolyte fluids, for modifying fibres, more particularly glass fibres and natural fibres, and for modifying textiles, for modifying fillers for the artificial stone industry, as architectural preservative or constituent in architectural preservative, as additive for mineral-hardening compositions, for modifying wood, wood fibres and cellulose.

**Revendications**

1. Composition contenant des oligomères de siloxane à fonctionnalisation oléfinique, qui comprennent au plus un radical oléfinique sur l'atome de silicium, **caractérisée**
**en ce que**

- les oligomères de siloxane à fonctionnalisation oléfinique comprennent des éléments structuraux à réticulation Si-0, qui forment des structures linéaires, cycliques, réticulées ou éventuellement réticulées dans l'espace, au moins une structure correspondant à la formule générale I

$$(R^1O)[(R^1O)_{1-x}(R^2)_xSi\,(A)\,O]_a\,[Si(Y)_2O]_c[Si\,(B)\,(R^4)_y(OR^3)_{1-y}O]_bR^3 \qquad (I),$$

- les éléments structuraux dérivant d'alcoxysilanes et
- A dans l'élément structural correspondant à un radical oléfinique et étant choisi parmi un groupe fonctionnel alcényl- ou cycloalcényl-alkylène linéaire, ramifié ou cyclique contenant à chaque fois 2 à 16 atomes C, et
- B dans l'élément structural correspondant à un radical hydrocarboné saturé et étant choisi parmi un radical alkyle linéaire, ramifié ou cyclique contenant 1 à 16 atomes C,
- les Y correspondant à $OR^3$ ou, dans des structures réticulées et éventuellement réticulées dans l'espace, indépendamment les uns des autres à $OR^3$ ou $O_{1/2}$,
- les $R^1$ correspondant indépendamment les uns des autres à un radical alkyle linéaire, ramifié ou cyclique contenant 1 à 4 atomes C ou à H,
- les $R^3$ correspondant chacun indépendamment les uns des autres à un radical alkyle linéaire, ramifié ou cyclique contenant 1 à 4 atomes C ou à H, et les $R^2$ correspondant chacun indépendamment à un radical alkyle linéaire, ramifié ou cyclique contenant 1 à 15 atomes C, et les $R^4$ correspondant chacun indépendamment à un radical alkyle linéaire, ramifié ou cyclique contenant 1 à 15 atomes C,
- a, b, c, x et y correspondant indépendamment à des nombres entiers, avec $1 \leq a$, $0 \leq b$, $0 \leq c$, les x représentant indépendamment les uns des autres 0 ou 1, les y représentant indépendamment les uns des autres 0 ou 1, et $(a+b+c) \geq 2$,
- la teneur en chlorure total étant inférieure ou égale à 250 mg/kg et
- les éléments structuraux [(R1O)1-x(R2)xSi(A)O]a, [Si(B)(R4)y(OR3)1-yO]b et [Si(Y)2O]c se présentant dans la formule générale I ensemble par rapport à tous les atomes de silicium de la formule générale I en une proportion supérieure ou égale à 10 % sous la forme d'une structure T.

**2.** Composition selon la revendication 1,
**caractérisée en ce que**
les oligomères de siloxane comprennent des éléments structuraux dérivés d'au moins un des alcoxysilanes,

(i) d'alcoxysilanes à fonctionnalisation oléfinique de formule générale II

$$A\text{-}Si(R^2)_x(OR^1)_{3-x} \qquad (II)$$

A correspondant à un radical oléfinique et étant choisi parmi un groupe fonctionnel alcényl- ou cycloalcényl-alkylène linéaire, ramifié ou cyclique contenant à chaque fois 2 à 16 atomes C, les $R^2$ représentant à chaque fois indépendamment un radical alkyle linéaire, ramifié ou cyclique contenant 1 à 15 atomes C et les x représentant indépendamment les uns des autres 0 ou 1, et les $R^1$ représentant indépendamment un groupe méthyle, éthyle ou propyle, et
(ii) éventuellement d'un alcoxysilane de formule III fonctionnalisé avec un radical hydrocarboné saturé

$$B\text{-}Si(R^4)_y(OR^3)_{3-y} \qquad (III)$$

B correspondant à un radical hydrocarboné non substitué et étant choisi parmi un radical alkyle linéaire, ramifié ou cyclique de 1 à 16 atomes C, les $R^4$ représentant à chaque fois indépendamment un radical alkyle linéaire, ramifié ou cyclique contenant 1 à 15 atomes C et les y représentant indépendamment les uns des autres 0 ou 1, et les $R^3$ représentant indépendamment un groupe méthyle, éthyle ou propyle, et
(iii) éventuellement d'un tétraalcoxysilane de formule générale IV représentée par $Si(OR^3)_4$, les $R^3$ étant indépendamment les uns des autres définis tel que précédemment.

**3.** Composition selon la revendication 1 ou 2,
**caractérisée en ce que**
chacun choisis indépendamment les uns des autres,

(i) l'élément structural [(R1O)1-x(R2)xSi(A)O]a se présente dans la formule générale I par rapport à tous les atomes de silicium de la formule générale I en une proportion supérieure ou égale à 5 %, notamment supérieure ou égale à 7,5 %, sous la forme d'une structure T,
(ii) les éléments structuraux $[(R^1O)_{1-x}(R^2)_xSi(A)O]_a$ et $[Si(B)\,(R^4)_y(OR^3)_{1-y}O]_b$ et $[Si(Y)_2O]_c$ se présentent dans la formule générale I ensemble par rapport à tous les atomes de silicium de la formule générale I en une proportion supérieure ou égale à 50 % sous la forme d'une structure D,

(iii) l'élément structural $[(R^1O)_{1-x}(R^2)_x Si(A)O]_a$ se présente dans la formule générale I par rapport à tous les atomes de silicium de la formule générale I en une proportion inférieure ou égale à 35 % sous la forme d'une structure M,

(iv) l'élément structural $[Si(B) (R^4)_y(OR^3)_{1-y}O]_b$ se présente dans la formule générale I par rapport à tous les atomes de silicium de la formule générale I en une proportion inférieure ou égale à 25 % sous la forme d'une structure M, et

(v) l'élément structural $[Si(Y)_2O]_c$ se présente dans la formule générale I en une proportion supérieure ou égale à 20 % sous la forme d'une structure D, ou plus de 40 % des éléments structuraux $[Si(Y)_2O]_c$ dans la formule générale I se présentent sous la forme d'une structure D.

4.  Composition selon l'une quelconque des revendications 1 à 3,
    **caractérisée en ce que**
    dans les alcoxysilanes à fonctionnalisation oléfinique de formule générale II, x représente 0 et, éventuellement, dans l'alcoxysilane fonctionnalisé par un radical hydrocarboné saturé de formule III, y représente 0.

5.  Composition selon l'une quelconque des revendications 1 à 4,
    **caractérisée**
    **en ce que**

    - dans les formules I et/ou II, le radical oléfinique A est un radical oléfinique non hydrolysable choisi parmi un groupe vinyle, allyle, butényle,
    3-butényle, pentényle, hexényle, éthylhexényle, heptényle, octényle et cyclohexényl-alkylène en C1 à C8, cyclohexényl-2-éthylène, 3'-cyclohexényl-2-éthylène, cyclohexadiényl-alkylène en C1 à C8, cyclohexadiényl-2-éthylène, et indépendamment
    - dans les formules I et/ou III, le radical hydrocarboné non substitué B est choisi parmi un groupe méthyle, éthyle, propyle, butyle, i-butyle, n-butyle, tert-butyle, pentyle, n-pentyle, iso-pentyle, néo-pentyle, hexyle, i-hexyle, néo-hexyle, 2,2-diméthylbutyle, 2,3-diméthylbutyle, 2-méthylpentyle, 3-méthylpentyle, heptyle, octyle, n-octyle, iso-octyle, nonyle, décyle, undécyle, dodécyle , $C_{13}H_{27}$, $C_{14}H_{29}$, $C_{15}H_{31}$ et hexadécyle, et
    - les $R^1$ représentent chacun indépendamment les uns des autres un groupe méthyle, éthyle ou propyle, et les $R^3$ représentent indépendamment un groupe méthyle, éthyle ou propyle.

6.  Composition selon l'une quelconque des revendications 1 à 5,
    **caractérisée**
    **en ce que**

    - dans les formules I et/ou II, le radical oléfinique A est un groupe vinyle et, indépendamment
    - dans les formules I et/ou III, le radical hydrocarboné non substitué B est choisi parmi un groupe méthyle, éthyle, propyle, butyle, i-butyle, n-butyle, tert-butyle, pentyle, n-pentyle, iso-pentyle, néo-pentyle, hexyle, i-hexyle, néo-hexyle, 2,2-diméthylbutyle, 2,3-diméthylbutyle, 2-méthylpentyle, 3-méthylpentyle, heptyle, octyle, n-octyle, iso-octyle, nonyle, décyle, undécyle, dodécyle, $C_{13}H_{27}$, $C_{14}H_{29}$, $C_{15}H_{31}$ et hexadécyle, et
    - les $R^1$ représentent chacun indépendamment les uns des autres un groupe méthyle, éthyle ou propyle, et les $R^3$ représentent indépendamment un groupe méthyle, éthyle ou propyle.

7.  Composition selon l'une quelconque des revendications 1 à 6,
    **caractérisée en ce que**
    les oligomères de siloxane à fonctionnalisation oléfinique se présentent dans la composition en une proportion supérieure ou égale à 30 % (% de surface, CPG) par rapport à la composition totale avec un poids moléculaire (Mw) de 500 à 700 g/mol.

8.  Composition selon l'une quelconque des revendications 1 à 7,
    **caractérisée en ce que**
    les oligomères de siloxane à fonctionnalisation oléfinique se présentent dans la composition en une proportion supérieure ou égale à 60 % sous la forme de trisiloxane, de tétrasiloxane, de pentasiloxane, de cyclo-tétrasiloxane, de cyclo-pentasiloxane et/ou de cyclo-hexasiloxane, ainsi que sous la forme d'un mélange contenant au moins deux des siloxanes susmentionnés.

**9.** Composition selon l'une quelconque des revendications 1 à 8,
**caractérisée en ce**
**qu'**une perte de masse de 50 % en poids, déterminée par ATG, a lieu à une température supérieure à 240 °C.

**10.** Composition selon l'une quelconque des revendications 1 à 9,
**caractérisée en ce que**
la perte de masse de la composition, déterminée par ATG (creuset en platine, couvercle perforé, 10 K/min) à une température de jusqu'à 150 °C incluse, est inférieure à 5 % en poids.

**11.** Composition selon l'une quelconque des revendications 1 à 10,
**caractérisée en ce que**
la perte de masse de la composition, déterminée par ATG (creuset en platine, couvercle perforé, 10 K/min) à une température de jusqu'à 200 °C incluse, est inférieure à 20 % en poids.

**12.** Composition selon l'une quelconque des revendications 1 à 11,
**caractérisée en ce que**
sa teneur en alcool après hydrolyse totale des groupes alcoxy hydrolysables est inférieure ou égale à 20 % en poids, de préférence inférieure ou égale à 18 % en poids, de manière particulièrement préférée inférieure ou égale à 16 % en poids, de manière davantage préférée inférieure ou égale à 15 % en poids, notamment inférieure ou égale à 12 % en poids.

**13.** Composition selon l'une quelconque des revendications 1 à 12,
**caractérisée**
**en ce que**

(i) le rapport entre les atomes de silicium choisis parmi les atomes de silicium à fonctionnalisation oléfinique et fonctionnalisés avec un hydrocarbure saturé,
et les groupes alcoxy dans les oligomères de siloxane est de 1: 0,3 à 1: 2,0, à condition que l'oligomère de siloxane à
fonctionnalisation oléfinique dérive d'alcoxysilanes de formule générale II et III, ou
(ii)le rapport entre les atomes de silicium choisis parmi les atomes de silicium à fonctionnalisation oléfinique et fonctionnalisés avec un hydrocarbure saturé, et les groupes alcoxy dans les oligomères de siloxane est de 1: 0,9 à 1: 2,5, à condition que l'oligomère de siloxane à fonctionnalisation oléfinique dérive d'alcoxysilanes de formule générale II et IV et de formule III.

**14.** Composition selon l'une quelconque des revendications 1 à 13,
**caractérisée en ce que**
sa teneur en atomes de silicium d'alcoxysilanes monomères est de 3 % ou moins à 0,0 % par rapport à tous les atomes de silicium, les alcoxysilanes monomères étant les alcoxysilanes de formule II, III et/ou IV, ainsi que leurs produits d'hydrolyse monomères.

**15.** Composition selon l'une quelconque des revendications 1 à 14,
**caractérisée en ce que**

a)les oligomères de siloxane et au moins une structure de formule I à chaque fois dérivés d'alcoxysilanes de formule II comprennent un groupe vinyle en tant que radical oléfinique A, les $R^1$ correspondant à chaque fois indépendamment les uns des autres à un groupe méthyle ou éthyle,
b)les oligomères de siloxane et au moins une structure de formule I à chaque fois dérivés d'alcoxysilanes de formule II comprennent un groupe vinyle en tant que radical oléfinique A et dérivés d'alcoxysilanes de formule III comprennent un groupe propyle en tant que radical hydrocarbure non substitué B, les $R^1$ et les $R^3$ correspondant à chaque fois indépendamment les uns des autres à un groupe méthyle ou éthyle, ou
c) les oligomères de siloxane et au moins une structure de formule I à chaque fois dérivés d'alcoxysilanes de formule II et de formule IV et éventuellement de formule III sont choisis parmi a) ou b), les $R^3$ dérivés de la formule IV correspondant à chaque fois indépendamment les uns des autres à un groupe méthyle ou éthyle.

**16.** Composition selon l'une quelconque des revendications 1 à 15,
**caractérisée en ce que**
les oligomères de siloxane comprennent chacun indépendamment des éléments structuraux dérivés d'au moins un alcoxysilane à fonctionnalisation oléfinique de formule générale II, qui sont choisis parmi le vinyltriéthoxysilane, le vinyltriméthoxysilane, et éventuellement de formule III, les alcoxysilanes de formule III étant choisis parmi le méthyltriéthoxysilane, le méthyltriméthoxysilane, l'éthyltriéthoxysilane, l'éthyltriméthoxysilane, le propyltriéthoxysilane, le propyltriméthoxysilane, le butyltriéthoxysilane, le butyltriméthoxysilane, le n-butyltriéthoxysilane, le n-butyltriméthoxysilane, l'i-butyltriéthoxysilane, l'i-butyltriméthoxysilane, l'hexyltriéthoxysilane, l'hexyltriméthoxysilane, le n-hexyltriéthoxysilane, le n-hexyltriméthoxysilane, l'iso-hexyltriéthoxysilane, l'iso-hexyltriméthoxysilane, l'heptyltriéthoxysilane, l'heptyltriméthoxysilane, l'octyltriéthoxysilane, l'octyltriméthoxysilane, le n-octyltriéthoxysilane, le n-octyltriméthoxysilane, l'iso-octyltriéthoxysilane, l'iso-octyltriméthoxysilane, l'undécyltriéthoxysilane, l'undécyltriméthoxysilane, le décyltriéthoxysilane, le décyltriméthoxysilane, le nonadécyltriéthoxysilane, le nonadécyltriméthoxysilane, le dodécyltriéthoxysilane, le dodécyltriméthoxysilane, le triéthoxysilane en $C_{13}H_{27}$, le triméthoxysilane en $C_{13}H_{27}$, le triéthoxysilane en $C_{14}H_{29}$, le triméthoxysilane en $C_{14}H_{29}$, le triméthoxysilane en $C_{15}H_{31}$, le triéthoxysilane en $C_{15}H_{31}$, l'hexadécyltriéthoxysilane et l'hexadécyltriméthoxysilane, ainsi que leurs produits de transestérification.

17. Composition selon l'une quelconque des revendications 1 à 16, **caractérisée en ce que** la moyenne en poids du poids moléculaire (Mw) est de 564 ou plus à 1 083 g/mol.

18. Procédé de fabrication d'une composition selon l'une quelconque des revendications 1 à 17, contenant des oligomères de siloxane à fonctionnalisation oléfinique, selon lequel au moins

(i) un alcoxysilane à fonctionnalisation oléfinique de formule générale II

$$A\text{-}Si(R^2)_x(OR^1)_{3-x} \qquad (II),$$

A dans la formule II correspondant à un radical oléfinique, qui est choisi parmi un groupe fonctionnel alcényl- ou cycloalcényl-alkylène linéaire, ramifié ou cyclique contenant à chaque fois 2 à 16 atomes C, les $R^2$ correspondant indépendamment à un radical alkyle linéaire, ramifié ou cyclique contenant 1 à 15 atomes C et x représentant 0 ou 1, et les $R^1$ correspondant indépendamment à un radical alkyle linéaire, ramifié ou cyclique contenant 1 à 4 atomes C,

(ii) est mis en réaction en présence d'un catalyseur d'hydrolyse et/ou de condensation

(iii) avec une quantité définie d'eau de 1,1 ou plus à 1,59 mol d'eau par mol d'atomes de silicium des alcoxysilanes utilisés, éventuellement en présence d'un solvant, pour former les oligomères de siloxane, et

(iv) l'alcool de l'hydrolyse et le solvant éventuellement présent sont essentiellement séparés, et

(v) une teneur en chlorure total dans la composition inférieure ou égale à 250 mg/kg est ajustée,

(vi) 10 % ou plus des atomes de silicium se présentant dans l'oligomère de siloxane à fonctionnalisation oléfinique par rapport à la somme totale des atomes de silicium dans l'oligomère de siloxane sous la forme d'une structure T, et

(vii) la composition contenant des oligomères de siloxane à fonctionnalisation oléfinique étant obtenue en tant que produit de fond.

19. Procédé selon la revendication 18, **caractérisé en ce que** (i) un alcoxysilane à fonctionnalisation oléfinique de formule générale II est mis en réaction (ii) en présence d'un catalyseur d'hydrolyse et/ou de condensation avec (i.1) au moins un alcoxysilane de formule III

$$B\text{-}Si(R^4)_y(OR^3)_{3-y} \qquad (III),$$

B dans la formule III correspondant à un radical hydrocarboné saturé, qui est choisi parmi un radical alkyle linéaire, ramifié ou cyclique contenant 1 à 16 atomes C, les $R^3$ correspondant à chaque fois indépendamment les uns des autres à un radical alkyle linéaire, ramifié ou cyclique contenant 1 à 4 atomes C, et les $R^4$ correspondant à un radical alkyle linéaire, ramifié ou cyclique contenant 1 à 15 atomes C, et y représentant 0 ou 1.

20. Procédé selon la revendication 18 ou 19, **caractérisé en ce que** (i) un alcoxysilane à fonctionnalisation oléfinique de formule générale II est mis en réaction (ii) en présence d'un catalyseur d'hydrolyse et/ou de condensation avec (i.2) au moins un tétraalcoxysilane de formule IV,

$$Si(OR^3)_4 \qquad (IV),$$

les $R^3$ dans la formule IV représentant à chaque fois indépendamment les uns des autres un radical alkyle linéaire, ramifié ou cyclique contenant 1 à 4 atomes C.

21. Procédé selon l'une quelconque des revendications 18 à 20,
**caractérisé en ce**
**qu'**un alcool est utilisé en tant que solvant.

22. Procédé selon l'une quelconque des revendications 18 à 21,
**caractérisé**
**en ce que**

- dans l'alcoxysilane à fonctionnalisation oléfinique de formule générale II

$$A-Si(R^2)_x((OR^1)_{3-x} \qquad (II)$$

A correspond à un groupe vinyle, allyle, buténzyle, penténzyle, hexényle, éthylhexényle, heptényle, octényle, cyclohexényl-alkylène en C1 à C8, cyclohexényl-2-éthylène, 3'-cyclohexényl-2-éthylène, cyclohexadiényl-alkylène en C1 à C8 ou cyclohexadiényl-2-éthylène, x représente 0 ou 1, les $R^2$ correspondent indépendamment à un radical alkyle linéaire, ramifié ou cyclique de 1 à 15 atomes C, et les $R^1$ représentent indépendamment un groupe méthyle, éthyle ou propyle, et indépendamment
- éventuellement dans l'alcoxysilane de formule III

$$B-Si(R^4)_y(OR^3)_{3-y} \qquad (III)$$

le radical hydrocarboné non substitué B représente un groupe méthyle, éthyle, propyle, butyle, i-butyle, n-butyle, tert-butyle, pentyle, n-pentyle, iso-pentyle, néo-pentyle, hexyle, i-hexyle, néo-hexyle, 2,2-diméthylbutyle, 2,3-diméthylbutyle, 2-méthylpentyle, 3-méthylpentyle, heptyle, octyle, n-octyle, iso-octyle, nonyle, décyle, undécyle, dodécyle , $C_{13}H_{27}$, $C_{14}H_{29}$, $C_{15}H_{31}$ et hexadécyle, y représente 0 ou 1, les $R^4$ représentent un radical alkyle linéaire, ramifié ou cyclique de 1 à 15 atomes C, et les $R^3$ représentent indépendamment un groupe méthyle, éthyle ou propyle.

23. Procédé selon l'une quelconque des revendications 18 à 22,
**caractérisé en ce que**
dans les alcoxysilanes à fonctionnalisation oléfinique de formule générale II, x représente 0 et/ou, dans l'alcoxysilane fonctionnalisé par un radical hydrocarboné saturé de formule III, y représente 0.

24. Procédé selon l'une quelconque des revendications 18 à 23,
**caractérisé en ce que**, à chaque fois indépendamment

- l'alcoxysilane à fonctionnalisation oléfinique de formule générale II est choisi parmi le vinyltriéthoxysilane, l'allyltriéthoxysilane, le buténzyltriéthoxysilane, le penténzyltriéthoxysilane, l'hexényltriéthoxysilane, l'éthylhexényltriéthoxysilane, l'heptényltriéthoxysilane, l'octényltriéthoxysilane, le cyclohexényl-alkylène en C1 à C8-triéthoxysilane, le cyclohexényl-2-éthylènetriéthoxysilane, le 3'-cyclohexényl-2-éthylènetriéthoxysilane, le cyclohexadiényl-alkylène en C1 à C8-triéthoxysilane, le cyclohexadiényl-2-éthylènetriéthoxysilane, le vinyltriméthoxysilane, l'allyltriméthoxysilane, le buténzyltriméthoxysilane, le penténzyltriméthoxysilane, l'hexényltriméthoxysilane, l'éthylhexényltriméthoxysilane, l'heptényltriméthoxysilane, l'octényltriméthoxysilane, le cyclohexényl-alkylène en C1 à C8-triméthoxysilane, le cyclohexényl-2-éthylène-triméthoxysilane, le 3'-cyclohexényl-2-éthylène-triméthoxysilane, le cyclohexadiényl-alkylène en C1 à C8-triméthoxysilane et le cyclohexadiényl-2-éthylène-triméthoxysilane, et à chaque fois indépendamment
- l'alcoxysilane de formule III est choisi parmi le méthyltriéthoxysilane, l'éthyltriéthoxysilane, le n-propyltriéthoxysilane, l'iso-propyltriéthoxysilane,
le butyltriéthoxysilane, le n-butyltriéthoxysilane, l'i-butyltriéthoxysilane,
l'hexyltriéthoxysilane, le n-hexyltriéthoxysilane, l'iso-hexyltriéthoxysilane, l'heptyltriéthoxysilane, l'octyltriéthoxysilane, le n-octyltriéthoxysilane,
l'iso-octyltriéthoxysilane, l'undécyltriéthoxysilane, le décyltriéthoxysilane, le nonadécyltriéthoxysilane, le dodécyltriéthoxysilane, le triéthoxysilane en $C_{13}H_{27}$,
le triéthoxysilane en $C_{14}H_{29}$ ou le triéthoxysilane en $C_{15}H_{31}$, l'hexadécyltriéthoxysilane, le méthyltriméthoxysilane, l'éthyltriméthoxysilane, le n-propyltriméthoxysilane,
l'iso-propyltriméthoxysilane, le butyltriméthoxysilane, le n-butyltriméthoxysilane,

EP 2 782 952 B1

l'i-butyltriméthoxysilane, l'hexyltriméthoxysilane, le n-hexyltriméthoxysilane, l'iso-hexyltriméthoxysilane, l'heptyltriméthoxysilane, l'octyltriméthoxysilane, le n-octyltriméthoxysilane, l'iso-octyltriméthoxysilane, l'undécyltriméthoxysilane, le décyltriméthoxysilane, le nonadécyltriméthoxysilane, le dodécyltriméthoxysilane, le triméthoxysilane en $C_{13}H_{27}$, le triméthoxysilane en $C_{14}H_{29}$ ou le triméthoxysilane en $C_{15}H_{31}$ et l'hexadécyltriméthoxysilane, et à chaque fois indépendamment
- l'alcoxysilane de formule IV est choisi parmi le tétraéthoxysilane et le tétraméthoxysilane.

25. Procédé selon l'une quelconque des revendications 18 à 24,
**caractérisé en ce**
**qu'**une quantité définie d'eau de 1,1 ou plus à 1,58 mol d'eau par mol d'atomes de silicium des alcoxysilanes de formule II et/ou III utilisés est ajoutée.

26. Procédé selon la revendication 25,
**caractérisé en ce**
**qu'**une quantité définie d'eau de 1,2 ou plus à 1,57 mol d'eau, de 1,25 à 1,56 mol d'eau ou de 1,21 ; 1,22 ; 1,23 ; 1,24 ; 1,26 ; 1,27 ; 1,28 ; 1,29 ; 1,30 ; 1,31 ; 1,32 ; 1,33 ; 1,34 ; 1,35 ; 1,36 ; 1,37 ; 1,38 ; 1,39 ; 1,40 ; 1,41 ; 1,42 ; 1,43 ; 1,44 ; 1,45 ; 1,46 ; 1,47 ; 1,48 ; 1,49 ; 1,50 ; 1,51 ; 1,52 ; 1,53 ; 1,54 ; 1,55 mol d'eau par mol d'atomes de silicium des alcoxysilanes de formule II et/ou III utilisés est ajoutée.

27. Procédé selon l'une quelconque des revendications 18 à 26,
**caractérisé en ce que**
les alcoxysilanes de formule II, III et/ou IV sont au moins partiellement hydrolysés et condensés en présence d'un catalyseur acide, notamment avec du chlorure d'hydrogène.

28. Procédé selon l'une quelconque des revendications 18 à 27,
**caractérisé en ce que**
l'alcool est éliminé essentiellement en totalité.

29. Procédé selon l'une quelconque des revendications 18 à 28,
**caractérisé en ce que**
(29.i) la quantité d'eau est ajoutée en continu ou avec au moins une interruption sur une durée de 1 à 1 000 minutes et la température dans le mélange réactionnel est de 5 à 90 °C à un pH inférieur ou égal à 7, l'eau étant éventuellement ajoutée conjointement avec le catalyseur et/ou un alcool, (29.ii) le mélange de (29.i) est éventuellement encore mis en réaction pendant au moins 10 minutes à 36 heures à une température de 5 à 80 °C.

30. Procédé selon l'une quelconque des revendications 18 à 29,
**caractérisé en ce que** l'alcool de l'hydrolyse et le solvant éventuellement présent sont séparés par distillation et de préférence
(30.i) une quantité définie d'alcool est ajoutée au moins une fois pendant la séparation par distillation de l'alcool de l'hydrolyse et du solvant éventuellement présent et/ou (30.ii) une quantité définie d'un réducteur ou d'une base est ajoutée avant ou pendant la séparation par distillation, puis l'oligomère de siloxane à fonctionnalisation oléfinique est filtré ou décanté, ou l'oligomère de siloxane oléfinique est mis en contact avec un échangeur d'ions.

31. Procédé selon l'une quelconque des revendications 18 à 30,
**caractérisé en ce que**
le silane de formule II et le silane de formule III sont utilisés en un rapport de 1:0 à 1:8 et/ou le silane de formule II est utilisé par rapport au silane de formule IV en un rapport de 1:0 à 1:0,22.

32. Composition contenant des oligomères de siloxane à fonctionnalisation oléfinique pouvant être obtenue par un procédé selon l'une quelconque des revendications 18 à 31.

33. Utilisation d'une composition selon l'une quelconque des revendications 1 à 17 ou 32 ou fabriquée selon l'une quelconque des revendications 18 à 31, en tant qu'agent adhésif, en tant qu'agent de réticulation par polymérisation-greffage et/ou condensation hydrolytique d'une manière connue en soi, pour la fabrication de polymères greffés avec des oligomères de siloxane à fonctionnalisation oléfinique, de prépolymères et/ou de polymères contenant des charges minérales, pour la fabrication de polymères greffés avec des oligomères de siloxane à fonctionnalisation oléfinique, de prépolymères et/ou de thermoplastiques ou d'élastomères contenant des charges minérales, de préférence de thermoplastiques ou d'élastomères contenant des charges minérales, ou de prépolymères de ceux-

54

ci, pour le greffage ou lors de la polymérisation de polyoléfines thermoplastiques, en tant qu'agent siccatif, notamment en tant que capteur d'eau pour matériaux d'étanchéité à base de silicone, dans des polymères réticulables pour la fabrication de câbles, pour la fabrication de polymères réticulables, en tant que phase huileuse dans une émulsion et/ou conjointement avec des organosilanes ou des organopolysiloxanes, pour la modification de charges, pour le revêtement de charges, pour la modification de résines, en tant qu'additif de résine, pour la modification de surfaces, pour la fonctionnalisation de surfaces, pour l'hydrophobation de surfaces, en tant que constituant dans des systèmes sol-gel, des systèmes de revêtement ou des systèmes de revêtement hybrides, pour la modification de cathodes et de matériaux d'anodes dans des batteries, en tant que liquide électrolytique, en tant qu'additif dans des liquides électrolytiques, pour la modification de fibres, notamment de fibres de verre et de fibres naturelles, ainsi que pour la modification de textiles, pour la modification de charges pour l'industrie des pierres artificielles, en tant qu'agent de protection des matériaux ou constituant d'agents de protection des matériaux, en tant qu'additif pour matériaux durcisseurs minéraux, pour la modification de bois, de fibres de bois et de cellulose.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0518057 B1
- US 6395856 B1
- CN 100343311 C
- JP 10298289 A
- JP 2004099872 A
- EP 1205481 B1
- DE 102011086863
- EP 0518057 A

**In der Beschreibung aufgeführte Nicht-Patentliteratur**

- Korrosionsbeständigkeit. **FA. WITZEMANN.** Handbuch der Metallbeläge. 2010, 200-238
- Chemische Beständigkeit der Nirosta®-Stähle. ThyssenKrupp Nirosta GmbH, Januar 2008
- **H.-G. HORN ; H. CH. MARSMANN.** Strukturuntersuchungen von oligomeren und polymeren Siloxanen durch hochauflösende Si-Kernresonanz. *Die Markromolekulare Chemie,* 1972, vol. 162, 255-267
- **G. ENGELHARDT ; H. JANCKE.** Über die H-, C- und Si-NMR chemischen Verschiebungen einiger linearer, verzweigter und cyclischer Methyl-Siloxan-Verbindungen. *J. Organometal. Chem.,* 1971, vol. 28, 293-300
- NMR spectroscopy of organosilicon compounds. **ELIZABETH A. WILLIAMS.** The Chemistry of Organic Silicon Compounds. John Wiley & Sons Ltd, 1989, 511-533
- **ANDRE STRIEGEL et al.** Modern Size-Exclusion Liquid Chromatography. Verlag Wiley & Sons, 2009
- Thermoanalyse, Lothar Schwabe. **CORNELIA M. KECK ; REINER H. MÜLLER.** Internetlehrbuch: Moderne Pharmazeutische Technologie. 2009, 76